(19) Europäisches Patentamt
European Patent Office
Office européen des brevets

(11) **EP 4 723 718 A1**

(12) **EUROPEAN PATENT APPLICATION**
published in accordance with Art. 153(4) EPC

(43) Date of publication:
08.04.2026 Bulletin 2026/15

(21) Application number: 24815257.1

(22) Date of filing: 20.05.2024

(51) International Patent Classification (IPC):
*H04W 24/02* (2009.01)     *H04W 40/24* (2009.01)
*H04W 74/08* (2024.01)     *H04W 92/20* (2009.01)

(52) Cooperative Patent Classification (CPC):
H04W 24/02; H04W 40/24; H04W 74/08;
H04W 92/20

(86) International application number:
PCT/JP2024/018428

(87) International publication number:
WO 2024/247773 (05.12.2024 Gazette 2024/49)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 30.05.2023 JP 2023089126

(71) Applicant: MITSUBISHI ELECTRIC
CORPORATION
Chiyoda-ku
Tokyo 100-8310 (JP)

(72) Inventors:
• MOCHIZUKI, Mitsuru
Tokyo 100-8310 (JP)
• SHIMODA, Tadahiro
Tokyo 100-8310 (JP)

(74) Representative: Mewburn Ellis LLP
Aurora Building
Counterslip
Bristol BS1 6BX (GB)

(54) **COMMUNICATION SYSTEM, BASE STATION, AND COMMUNICATION TERMINAL**

(57) A communication system includes a base station and a communication terminal configured to establish connection to the base station, the base station being configured to, using a model on which training using pieces of information acquired from the communication terminal already connected to the base station and another neighboring base station has been performed, determine a configuration to be used in communication processing performed by the communication terminal and notify the communication terminal of the determined configuration determined, and the communication terminal notified of the configuration by a first base station, which is the base station having determined the configuration, being configured to use the configuration to perform communication processing on the first base station or communication processing on a second base station.

Fig. 15

**Description**

Technical Field

The present disclosure relates to a radio communication technology.

Background

In the 3rd Generation Partnership Project (3GPP) being a standard organization of mobile communication systems, a fifth generation (which may be hereinafter referred to as "5G") radio access system is studied (for example, NPL 2) as a successor to Long Term Evolution (LTE) and Long Term Evolution Advanced (LTE-A) being one of fourth generation radio access systems (see NPL 1). A technology of 5G radio sections is referred to as "New Radio Access Technology" ("New Radio" is abbreviated to "NR"). The NR system has been studied, based on the LTE system and the LTE-A system.

For example, in Europe, requirements for 5G are summarized in an organization named METIS (see NPL 3). The 5G radio access system is required to implement lower power consumption and lower apparatus costs, making its system capacity 1000 times as high as, data transmission rate 100 times as high as, data processing delay one fifth (1/5) of, and number of simultaneously connected communication terminals 100 times as large as those of the LTE system (see NPL 3).

To satisfy these requirements, in 3GPP, standardization of 5G has been studied (see NPLs 4 to 23).

As NR access schemes, orthogonal frequency division multiplexing (OFDM) is used in a downlink direction, and OFDM and discrete Fourier transform-spread-OFDM (DFT-s-OFDM) are used in an uplink direction. As with LTE and LTE-A, the 5G system employs only a packet communication method, without including circuit switching.

In NR, frequencies higher than those in LTE are available in order to enhance the transmission rate and reduce the processing delay.

In NR in which frequencies higher than those in LTE may be used, cell coverage is secured by forming a narrow beam-like transmission and reception range (beamforming) and changing directions of beams (beam sweeping).

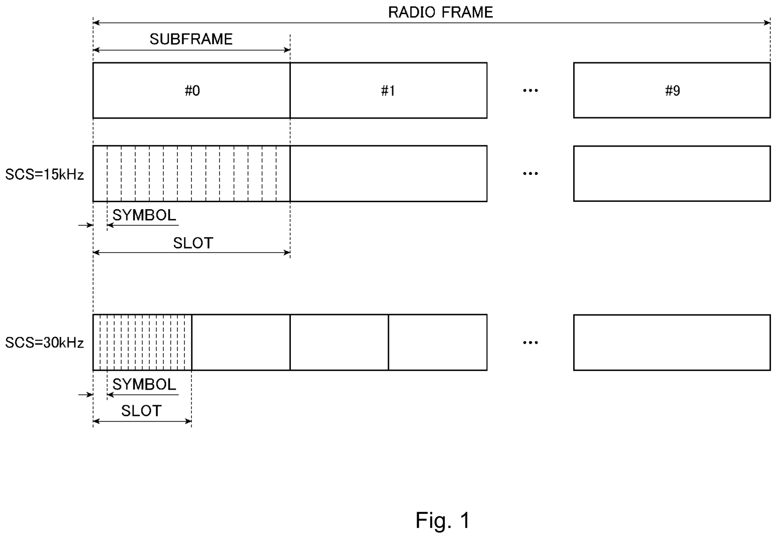

Decisions on a frame configuration in the NR system in 3GPP described in NPL 1 (Section 5) will be described with reference to Fig. 1. Fig. 1 is an explanatory diagram illustrating a configuration of radio frames used in an NR communication system. In Fig. 1, one radio frame has 10 ms. The radio frame is divided into 10 subframes having equal sizes. The frame configuration in NR supports one or a plurality of numerologies, that is, one or a plurality of subcarrier spacings (SCSs). In NR, one subframe includes 1 ms and one slot includes 14 symbols, regardless of the subcarrier spacing. The number of slots included in one subframe is one with the subcarrier spacing of 15 kHz, and the number of slots with other subcarrier spacings increases in proportion to the subcarrier spacing (see NPL 11 (3GPP TS 38.211)).

Decisions on a channel configuration in the NR system in 3GPP are described in NPL 2 (Section 5) and NPL 11.

A physical broadcast channel (PBCH) is a downlink transmission channel from a base station apparatus (which may be hereinafter simply referred to as a "base station") to a communication terminal apparatus (which may be hereinafter referred to as a "communication terminal" or a "terminal") such as a mobile terminal apparatus (which may be hereinafter simply referred to as a "mobile terminal"). The PBCH is transmitted together with a downlink synchronization signal.

The downlink synchronization signal in NR includes a primary synchronization signal (P-SS) and a secondary synchronization signal (S-SS). The synchronization signal is transmitted as a synchronization signal burst (which may be hereinafter referred to as an SS burst) from the base station with predetermined periodicity for predetermined duration. The SS burst includes a synchronization signal block (which may be hereinafter referred to as an SS block) of each beam of the base station.

The base station transmits, by changing the beams, the SS block of each beam within the duration of the SS burst. The SS block includes the P-SS, the S-SS, and the PBCH.

A physical downlink control channel (PDCCH) is a downlink transmission channel from the base station to the communication terminal. The PDCCH carries downlink control information (DCI). The DCI includes resource allocation information of a downlink shared channel (DL-SCH) being one of transport channels to be described later, resource allocation information of a paging channel (PCH) being one of transport channels to be described later, hybrid automatic repeat request (HARQ) information on the DL-SCH, and the like. The DCI may include an uplink scheduling grant. The DCI may include an acknowledgement (Ack)/negative acknowledgement (Nack) being a response signal for uplink transmission. For flexible switching of DL/UL in the slot, the DCI may include a slot format indication (SFI). The PDCCH or the DCI is also referred to as an L1/L2 control signal.

In NR, a time/frequency domain as candidates including the PDCCH is provided. The domain is referred to as a control resource set (CORESET). The communication terminal monitors the CORESET and acquires the PDCCH.

A physical downlink shared channel (PDSCH) is a downlink transmission channel from the base station to the communication terminal. To the PDSCH, a downlink shared channel (DL-SCH) being a transport channel and a PCH being a transport channel are mapped.

A physical uplink control channel (PUCCH) is an uplink transmission channel from the communication terminal to the base station. The PUCCH carries uplink control information (UCI). The UCI includes an Ack/Nack being a response signal for downlink transmission, channel state information (CSI), a scheduling request (SR), and the like. The CSI includes a rank indicator (RI), a precoding matrix indicator (PMI), and a channel quality indicator (CQI) report. The RI is rank information of a channel matrix in Multiple Input Multiple Output (MIMO). The PMI is information of a precoding weight matrix used in MIMO. The CQI is quality information indicating received data quality or communication path quality. The UCI may be carried on a PUSCH to be described later. The PUCCH or the UCI is also referred to as an L1/L2 control signal.

A physical uplink shared channel (PUSCH) is an uplink transmission channel from the communication terminal to the base station. To the PUSCH, an uplink shared channel (UL-SCH) being one of transport channels is mapped.

A physical random access channel (PRACH) is an uplink transmission channel from the communication terminal to the base station. The PRACH carries a random access preamble.

A downlink reference signal (RS) is known symbols in the NR communication system. The following four types of downlink reference signals are defined. They are a data demodulation reference signal (DM-RS) being a UE-specific reference signal, a phase tracking reference signal (PT-RS), a positioning reference signal (PRS), and a channel state information reference signal (CSI-RS). Measurement of a physical layer of the communication terminal includes reference signal received power (RSRP) measurement and reference signal received quality (RSRQ) measurement.

An uplink reference signal is also similarly known symbols in the NR communication system. The following three types of uplink reference signals are defined. They are a data demodulation reference signal (DM-RS), a phase tracking reference signal (PT-RS), and a sounding reference signal (SRS).

Transport channels described in NPL 2 (Section 5) will be described. A broadcast channel (BCH), among downlink transport channels, is broadcast to the entire coverage of the base station (cell). The BCH is mapped to the physical broadcast channel (PBCH).

HARQ retransmission control is applied to the downlink shared channel (DL-SCH). The DL-SCH can be broadcast to the entire coverage of the base station (cell). The DL-SCH supports dynamic or semi-static resource allocation. The semi-static resource allocation is also referred to as semi-persistent scheduling. The DL-SCH supports discontinuous reception (DRX) of the communication terminal in order to implement low power consumption of the communication terminal. The DL-SCH is mapped to the physical downlink shared channel (PDSCH).

The paging channel (PCH) supports DRX of the communication terminal in order to enable low power consumption of the communication terminal. The PCH is required to be broadcast to the entire coverage of the base station (cell). The PCH is mapped to physical resources that can be dynamically used for traffic, such as the physical downlink shared channel (PDSCH).

HARQ retransmission control is applied to the uplink shared channel (UL-SCH) among uplink transport channels. The UL-SCH supports dynamic or semi-static resource allocation. The semi-static resource allocation is also referred to as a configured grant. The UL-SCH is mapped to the physical uplink shared channel (PUSCH).

A random access channel (RACH) is limited to control information. The RACH has a risk of collision. The RACH is mapped to the physical random access channel (PRACH).

HARQ will be described. HARQ is a technology for enhancing communication quality of a transmission path, using a combination of an automatic repeat request (ARQ) and error correction (forward error correction). HARQ has an advantage in that, owing to retransmission, error correction effectively functions even for a transmission path with varying communication quality. Particularly, in retransmission, it is also possible to further enhance quality by combining reception results of first transmission and reception results of retransmission.

An example of a method of retransmission will be described. In a case in which a receiver fails to correctly decode received data, that is, a cyclic redundancy check (CRC) error occurs in the receiver (CRC = NG), a "Nack" is transmitted from the receiver to a transmitter. The transmitter that has received the "Nack" retransmits data. In a case in which the receiver successfully correctly decodes received data, that is, a CRC error does not occur in the receiver (CRC = OK), an "Ack" is transmitted from the receiver to the transmitter. The transmitter that has received the "Ack" transmits subsequent data.

Another example of a method of retransmission will be described. In a case in which a CRC error occurs in the receiver, a retransmission request is performed from the receiver to the transmitter. The retransmission request is performed using toggling of a new data indicator (NDI). The transmitter that has received the retransmission request retransmits data. In a case in which a CRC error does not occur in the receiver, the retransmission request is not performed. In a case in which the transmitter does not receive the retransmission request for a predetermined time, the transmitter considers that no CRC error has occurred in the receiver.

Logical channels described in NPL 1 (Section 6) will be described. A broadcast control channel (BCCH) is a downlink channel for broadcasting system control information. The BCCH being a logical channel is mapped to the broadcast channel (BCH) or the downlink shared channel (DL-SCH) being transport channels.

A paging control channel (PCCH) is a downlink channel for transmitting paging information and system information change. The PCCH being a logical channel is mapped to the paging channel (PCH) being a transport channel.

A common control channel (CCCH) is a channel for transmitting control information between the communication terminal and the base station. The CCCH is used in a case in which the communication terminal does not have RRC connection with the network. In the downlink direction, the CCCH is mapped to the downlink shared channel (DL-SCH) being a transport channel. In the uplink direction, the CCCH is mapped to the uplink shared channel (UL-SCH) being a transport channel.

A dedicated control channel (DCCH) is a channel for transmitting dedicated control information between the communication terminal and the network on a one-to-one basis. The DCCH is used in a case in which the communication terminal has RRC connection with the network. The DCCH is mapped to the uplink shared channel (UL-SCH) in the uplink, and is mapped to the downlink shared channel (DL-SCH) in the downlink.

A dedicated traffic channel (DTCH) is a channel for one-to-one communication to the communication terminal for transmission of user information. The DTCH is present in both of the uplink and the downlink. The DTCH is mapped to the uplink shared channel (UL-SCH) in the uplink, and is mapped to the downlink shared channel (DL-SCH) in the downlink.

Location tracking of the communication terminal is performed in a unit of an area consisting of one or more cells. Location tracking is performed to enable tracking the location of the communication terminal even in an idle state, and enable calling the communication terminal, that is, enable the communication terminal to receive a call. The area for location tracking of the communication terminal is referred to as a tracking area (TA).

NR supports calling the communication terminal in a range in a unit of an area smaller than the tracking area. The range is referred to as a RAN notification area (RNA). Paging of the communication terminal in an RRC_INACTIVE state to be described later is performed in the range.

In NR, carrier aggregation (CA) is studied, in which two or more component carriers (CCs) are aggregated to support wide frequency bandwidths (transmission bandwidths). CA is described in NPL 1.

In a case in which CA is configured, the UE being a communication terminal has a single RRC connection with the network (NW). In RRC connection, one serving cell provides Non-Access Stratum (NAS) mobility information and security input. The cell is referred to as a primary cell (PCell). A secondary cell (SCell) is configured to form a group of serving cells with the PCell, according to a UE capability. The group of serving cells consisting of one PCell and one or more SCells is configured for one UE.

3GPP has dual connectivity (abbreviated to DC) or the like in which the UE connects to two base stations and perform communication, in order to further increase communication capacity. DC is described in NPLs 1 and 22.

One of the base stations performing dual connectivity (DC) may be referred to as a "master base station (master node (MN))", and the other may be referred to as a "secondary base station (secondary node (SN))". The serving cells configured by the master base station may be collectively referred to as a master cell group (MCG), and the serving cells configured by the secondary base station may be collectively referred to as a secondary cell group (SCG). In DC, a primary cell in the MCG or the SCG is referred to as a special cell (SpCell or SPCell). The special cell in the MCG is referred to as a PCell, and the special cell in the SCG is referred to as a primary SCG cell (PSCell).

In NR, the base station configures a part of the carrier frequency band (the part may be hereinafter referred to as a bandwidth part (BWP)) for the UE in advance, and the UE performs transmission and reception to and from the base station in the BWP, to thereby reduce power consumption in the UE.

In 3GPP, support of services (which may be applications) using sidelink (Side Link, SL) communication (also referred to as PC5 communication) both in an Evolved Packet System (EPS) and a 5G core system to be described later is studied (see NPLs 1, 2, and 26 to 28). In SL communication, communication is performed between the terminals. Examples of the services using SL communication include a vehicle-to-everything (V2X) service, a proximitybased service, and the like. The SL communication proposes not only direct communication between the terminals but also communication between the UE and the NW via relay (see NPLs 26 and 28).

Physical channels used in the SL (see NPLs 2 and 11) will be described. A physical sidelink broadcast channel (PSBCH) carries information on a system and synchronization, and is transmitted from the UE.

A physical sidelink control channel (PSCCH) carries control information from the UE for sidelink communication and V2X sidelink communication.

A physical sidelink shared channel (PSSCH) carries data from the UE for sidelink communication and V2X sidelink communication.

A physical sidelink feedback channel (PSFCH) carries sidelink HARQ feedback from the UE that has received PSSCH transmission to the UE that has transmitted the PSSCH.

Transport channels used in the SL (see NPL 1) will be described. A sidelink broadcast channel (SL-BCH) has a predetermined transport format, and is mapped to the PSBCH being a physical channel.

A sidelink shared channel (SL-SCH) supports broadcast transmission. The SL-SCH supports both of UE autonomous resource selection and resource allocation scheduled by the base station. UE autonomous resource selection has a risk of collision, and in a case in which dedicated resources are allocated to the UE by the base station, there is no collision. The SL-SCH supports dynamic link adaptation by changing transmission power, modulation, and coding. The SL-SCH is mapped to the PSSCH being a physical channel.

Logical channels used in the SL (see NPL 2) will be described. A sidelink broadcast control channel (SBCCH) is a sidelink channel for broadcasting sidelink system information from one UE to another UE. The SBCCH is mapped to the SL-BCH being a transport channel.

A sidelink traffic channel (STCH) is a one-to-many sidelink traffic channel for transmitting user information from one UE to another UE. The STCH is used only by the UE having a sidelink communication capability and the UE having a V2X sidelink communication capability. One-to-one communication between the UEs having two sidelink communication capabilities is also implemented on the STCH. The STCH is mapped to the SL-SCH being a transport channel.

A sidelink control channel (SCCH) is a sidelink control channel for transmitting control information from one UE to another UE. The SCCH is mapped to the SL-SCH being a transport channel.

In LTE, only broadcast is supported in the SL communication. In NR, support of unicast and groupcast in addition to broadcast in the SL communication is studied (see NPL 27 (3GPP TS 23.287)).

In SL unicast communication and groupcast communication, HARQ feedback (Ack/Nack), a CSI report, and the like are supported.

In 3GPP, an integrated access and backhaul (IAB) is studied, in which both of an access link being a link between the UE and the base station and a backhaul link being a link between the base stations are performed wirelessly (see NPLs 2, 20, and 29).

Some new technologies are required for the mobile communication system. For example, for improvement of communication performance, introduction of an artificial intelligence (AI)/machine learning (ML) to a RAN is demanded. In 3GPP, discussion on such new technologies has begun (NPLs 30 and 31).

Citation List

Non Patent Literature

[NPL 1] 3GPP TS 36.300 V17.3.0
[NPL 2] 3GPP TS 38.300 V17.3.0
[NPL 3] "Scenarios, requirements and KPIs for 5G mobile and wireless system", ICT-317669-METIS/D1.1
[NPL 4] 3GPP TR 23.799 V14.0.0
[NPL 5] 3GPP TR 38.801 V14.0.0
[NPL 6] 3GPP TR 38.802 V14.2.0
[NPL 7] 3GPP TR 38.804 V14.0.0
[NPL 8] 3GPP TR 38.912 V16.0.0
[NPL 9] 3GPP RP-172115
[NPL 10] 3GPP TS 23.501 V18.0.0
[NPL 11] 3GPP TS 38.211 V17.4.0
[NPL 12] 3GPP TS 38.212 V17.4.0
[NPL 13] 3GPP TS 38.213 V17.4.0
[NPL 14] 3GPP TS 38.214 V17.4.0
[NPL 15] 3GPP TS 38.321 V17.3.0
[NPL 16] 3GPP TS 38.322 V17.2.0
[NPL 17] 3GPP TS 38.323 V17.3.0
[NPL 18] 3GPP TS 37.324 V17.0.0
[NPL 19] 3GPP TS 38.331 V17.3.0
[NPL 20] 3GPP TS 38.401 V17.3.0
[NPL 21] 3GPP TS 38.413 V17.3.0
[NPL 22] 3GPP TS 37.340 V17.3.0
[NPL 23] 3GPP TS 38.423 V17.3.0
[NPL 24] 3GPP TS 38.305 V17.3.0
[NPL 25] 3GPP TS 23.273 V18.0.0
[NPL 26] 3GPP TR 23.703 V12.0.0
[NPL 27] 3GPP TS 23.287 V17.5.0
[NPL 28] 3GPP TS 23.303 V17.0.0
[NPL 29] 3GPP TS 38.340 V17.3.0
[NPL 30] 3GPP TR 37.817 V17.0.0
[NPL 31] 3GPP RP-213602
[NPL 32] 3GPP TS 38.314 V17.2.0

## SUMMARY

Technical Problem

In mobile communication systems, the number of necessary key performance indicators (KPIs) such as delay, reliability, connection density, user experience, and energy efficiency increases, and optimization of such KPIs altogether is demanded. In view of this, discussion on a technique for improving various kinds of KPIs by introducing AI/ML to mobile communication systems and performing data collection and analysis has begun (NPLs 30 and 31). However, use cases for which introduction of AI/ML is discussed are limited to network energy saving, load balancing, and mobility optimization, and such discussion has not been performed yet for other use cases. Hence, there arises a problem that various kinds of KPIs cannot be optimized in various communication states.

In view of the above problem, the present disclosure has one object to introduce AI/ML in various communication states to implement a communication system capable of performing effective processing according to each communication state.

Solution to Problem

A communication system according to the present disclosure includes: a base station supporting a fifth generation radio access system; and a communication terminal configured to connect to the base station. The base station is configured to, using a model on which training using pieces of information acquired from the communication terminal already connected to the base station and another neighboring base station has been performed, determine a configuration to be used in communication processing performed by the communication terminal, and notify the communication terminal connected to the base station of the determined configuration. The communication terminal notified of the configuration by a first base station, which is the base station having determined the configuration, is configured to terminate connection to the first base station and thereafter use the configuration to perform communication processing for the first base station or communication processing for a second base station, which is a base station different from the first station.

Advantageous Effects of Invention

According to the present disclosure, it is possible to implement a communication system capable of performing effective processing according to each communication state.

The objects, features, aspects and advantages of the present disclosure will become more apparent from the following detailed description and the accompanying drawings.

## BRIEF DESCRIPTION OF THE DRAWINGS

Fig. 1 is an explanatory diagram illustrating a configuration of radio frames used in an NR communication system;
Fig. 2 is a block diagram illustrating an overall configuration of an NR communication system 210 discussed in 3GPP;
Fig. 3 is a configuration diagram of DC performed by base stations to connect to an NG core;
Fig. 4 is a block diagram illustrating a configuration of a mobile terminal 202 illustrated in Fig. 2;
Fig. 5 is a block diagram illustrating a configuration of a base station 213 illustrated in Fig. 2;
Fig. 6 is a block diagram illustrating a configuration of a 5GC unit;
Fig. 7 is a flowchart illustrating an outline from cell search to idle operation performed by a communication terminal (UE) in an NR communication system;
Fig. 8 is a diagram illustrating an example of a configuration of a cell in an NR system;
Fig. 9 is a connection configuration diagram illustrating an example of a connection configuration of terminals in SL communication;
Fig. 10 is a connection configuration diagram illustrating an example of a connection configuration of base stations supporting an integrated access and backhaul;
Fig. 11 is a diagram illustrating a configuration example of a learning apparatus related to a communication system according to Embodiment 1;
Fig. 12 is a flowchart related to learning processing of the learning apparatus according to Embodiment 1;
Fig. 13 is a diagram illustrating a configuration example of an inference apparatus related to the communication system according to Embodiment 1;
Fig. 14 is a flowchart related to inference processing of the inference apparatus according to Embodiment 1;

Fig. 15 is a diagram illustrating a sequence example of RA processing using AI/ML for RA processing according to Embodiment 1;

Fig. 16 is a diagram illustrating a sequence example of RA processing using AI/ML for RA processing according to Alteration 1 of Embodiment 1;

Fig. 17 is a diagram illustrating a sequence example of SDT processing using AI/ML for SDT processing according to Embodiment 2;

Fig. 18 is a diagram illustrating a sequence example of IAB processing using AI/ML for IAB processing according to Embodiment 4;

Fig. 19 is a diagram illustrating the first half of a sequence example of BH RLF processing using AI/ML for BH RLF processing according to Alteration 1 of Embodiment 4; and

Fig. 20 is a diagram illustrating the second half of the sequence example of the BH RLF processing using AI/ML for BH RLF processing according to Alteration 1 of Embodiment 4.

## DETAILED DESCRIPTION

First Embodiment

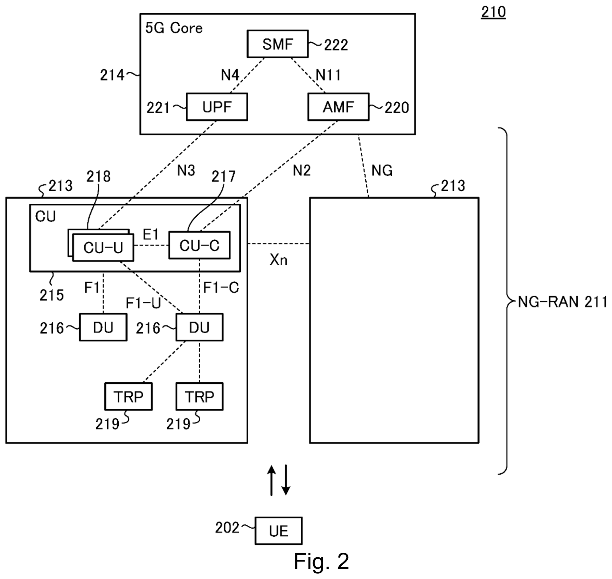

Fig. 2 is a block diagram illustrating an overall configuration of an NR communication system 210 discussed in 3GPP. Fig. 2 will be described. A radio access network is referred to as a next generation radio access network (NG-RAN) 211. A mobile terminal apparatus (hereinafter referred to as a "mobile terminal (user equipment (UE))") 202 being a communication terminal apparatus is capable of radio communication with a base station apparatus (hereinafter referred to as an "NR base station (NG-RAN Node B (gNB))") 213, and transmits and receives signals in radio communication. The NG-RAN 211 includes one or a plurality of NR base stations 213.

Here, the "communication terminal apparatus" includes not only the mobile terminal apparatus such as a mobile cellular phone terminal apparatus, but also includes an immobile device such as a sensor. In the following description, the "communication terminal apparatus" may be simply referred to as a "communication terminal".

A protocol of Access Stratum (AS) is terminated between the UE 202 and the NG-RAN 211. As the protocol of AS, for example, Radio Resource Control (RRC), Service Data Adaptation Protocol (SDAP), Packet Data Convergence Protocol (PDCP), Radio Link Control (RLC), Medium Access Control (MAC), and Physical layer (PHY) are used. The RRC is used in a control plane (which may be hereinafter also referred to as a C plane, a C-Plane, or a CP), the SDAP is used in a user plane (which may be hereinafter also referred to as a U plane, a U-Plane, or a UP), and the PDCP, the MAC, the RLC, and the PHY are used in both of the C plane and the U plane.

The control protocol Radio Resource Control (RRC) between the UE 202 and the NR base station 213 performs broadcast, paging, RRC connection management, and the like. States between the NR base station 213 and the UE 202 in RRC include RRC_IDLE, RRC_CONNECTED, and RRC_INACTIVE.

In RRC_IDLE, public land mobile network (PLMN) selection, system information (SI) broadcast, paging, cell re-selection, mobility, and the like are performed. In RRC_CONNECTED, the mobile terminal has RRC connection, and can transmit and receive data to and from a network. In RRC_CONNECTED, handover (HO), neighbor cell measurement, and the like are performed. In RRC_INACTIVE, connection between a 5G core unit 214 and the NR base station 213 is maintained, and system information (SI) broadcast, paging, cell re-selection, mobility, and the like are performed.

The gNB 213 is connected to the 5G core unit (which may be hereinafter referred to as a "5GC unit") 214 including an Access and Mobility Management Function (AMF), a Session Management Function (SMF), a User Plane Function (UPF), and the like via an NG interface. Control information and/or user data is communicated between the gNB 213 and the 5GC unit 214. The NG interface is a general term for an N2 interface between the gNB 213 and an AMF 220, an N3 interface between the gNB 213 and a UPF 221, an N11 interface between the AMF 220 and an SMF 222, and an N4 interface between the UPF 221 and the SMF 222. A plurality of 5GC units 214 may be connected to one gNB 213. The gNBs 213 are connected via an Xn interface, and control information and/or user data is communicated between the gNBs 213.

The 5GC unit 214 is an upper apparatus, or specifically an upper node, and performs control of connection between the NR base station 213 and the mobile terminal (UE) 202, distribution of paging signals to one or a plurality of NR base stations (gNBs) 213 and/or LTE base stations (E-UTRAN Node Bs (eNBs)), and the like. The 5GC unit 214 performs mobility control of an idle state. In a case in which the mobile terminal 202 is in an idle state, an inactive state, and an active state, the 5GC unit 214 manages a tracking area list. The 5GC unit 214 transmits a paging message to a cell belonging to a tracking area in which the mobile terminal 202 is registered, and thereby starts a paging protocol.

The gNB 213 may configure one or a plurality of cells. In a case in which one gNB 213 configures a plurality of cells, each cell is configured to be capable of communicating with the UE 202.

The gNB 213 may be divided into a central unit (which may be hereinafter referred to as a CU) 215 and a distributed unit (which may be hereinafter referred to as a DU) 216. One CU 215 is configured in the gNB 213. One or a plurality of DUs 216 are configured in the gNB 213. One DU 216 configures one or a plurality of cells. The CU 215 is connected to the DU 216 via an F1 interface, and control information and/or user data is communicated between the CU 215 and the DU 216. The F1 interface includes an F1-C interface and an F1-U interface. The CU 215 has a function of each protocol of the RRC, the SDAP, and the PDCP, and the DU 216 has a function of each protocol of the RLC, the MAC, and the PHY. One or a plurality of transmission reception points (TRPs) 219 may be connected to the DU 216. The TRP 219 transmits and receives radio signals to and from the UE.

The CU 215 may be divided into a C-plane CU (CU-C) 217 and a U-plane CU (CU-U) 218. One CU-C 217 is configured in the CU 215. One or a plurality of CU-Us 218 are configured in the CU 215. The CU-C 217 is connected to the CU-U 218 via an E1 interface, and control information is communicated between the CU-C 217 and the CU-U 218. The CU-C 217 is connected to the DU 216 via an F1-C interface, and control information is communicated between the CU-C 217 and the DU 216. The CU-U 218 is connected to the DU 216 via an F1-U interface, and user data is communicated between the CU-U 218 and the DU 216.

In the 5G communication system, a Unified Data Management (UDM) function and a Policy Control Function (PCF) described in NPL 10 (3GPP TS 23.501) may be included. The UDM and/or the PCF may be included in the 5GC unit 214 of Fig. 2.

In the 5G communication system, a Location Management Function (LMF) described in NPL 24 (3GPP TS 38.305) may be provided. As disclosed in NPL 25 (3GPP TS 23.273), the LMF may be connected to the base station via the AMF.

In the 5G communication system, a Non-3GPP Interworking Function (N3IWF) described in NPL 10 (3GPP TS 23.501) may be included. The N3IWF may terminate an access network (AN) between the N3IWF and the UE in non-3GPP access with the UE.

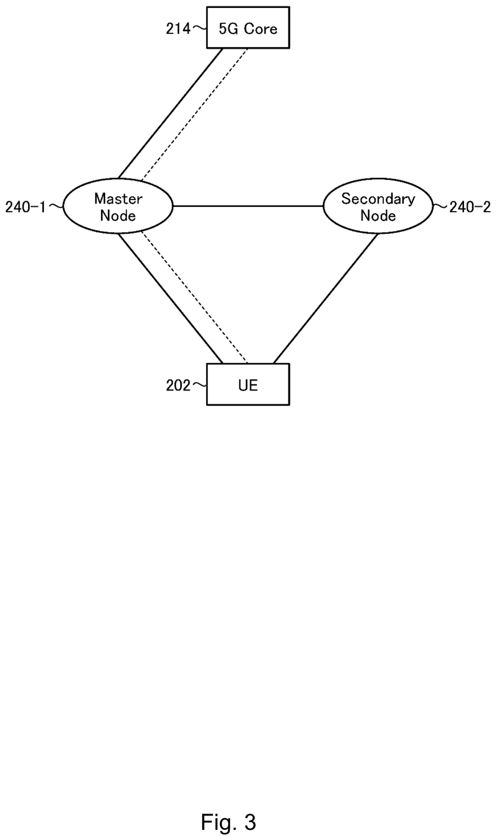

Fig. 3 is a diagram illustrating a configuration of dual connectivity (DC) to connect to an NG core. In Fig. 3, the solid line indicates connection of the U-Plane, and the broken line indicates connection of the C-Plane. In Fig. 3, a master base station 240-1 may be a gNB or an eNB. A secondary base station 240-2 may be a gNB or an eNB. For example, in Fig. 3, a DC configuration in which the master base station 240-1 is a gNB and the secondary base station 240-2 is an eNB may be referred to as NG-EN-DC. Although Fig. 3 illustrates an example in which U-Plane connection between the 5GC unit 214 and the secondary base station 240-2 is performed via the master base station 240-1, the U-Plane connection may be directly performed between the 5GC unit 214 and the secondary base station 240-2. In Fig. 3, in place of the 5GC unit 214, an Evolved Packet Core (EPC), which is a core network connected to the LTE system or the LTE-A system, may be connected to the master base station 240-1. U-Plane connection between the EPC and the secondary base station 240-2 may be directly performed.

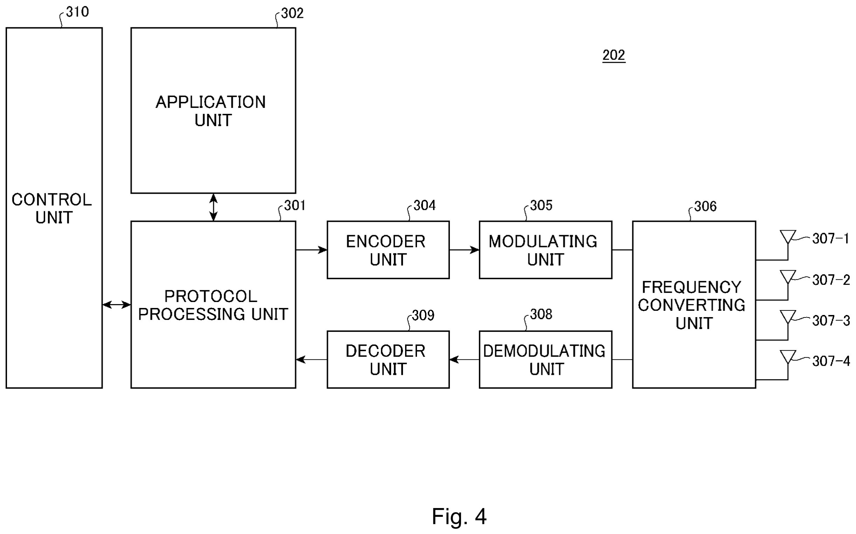

Fig. 4 is a block diagram illustrating a configuration of the mobile terminal 202 illustrated in Fig. 2. Transmission processing of the mobile terminal 202 illustrated in Fig. 4 will be described. First, control data from a control unit 310 and user data from an application unit 302 are transmitted to a protocol processing unit 301. The control data and the user data may be buffered. The buffers of the control data and the user data may be provided in the control unit 310, may be provided in the application unit 302, or may be provided in the protocol processing unit 301. The protocol processing unit 301 performs protocol processing of the SDAP, the PDCP, the RLC, the MAC, and the like, for example, operation such as determination of a transmission destination base station in DC or the like and provision of a header in each protocol. The data subjected to the protocol processing is delivered to an encoder unit 304, and is subjected to encoding processing such as error correction. There may be data that is directly output from the protocol processing unit 301 to a modulating unit 305 without being subjected to the encoding processing. The data subjected to the encoding processing in the encoder unit 304 is subjected to modulation processing in the modulating unit 305. In the modulating unit 305, MIMO precoding may be performed. The modulated data is converted into a baseband signal, and is then output to a frequency converting unit 306 to be converted into a radio transmission frequency. Subsequently, transmission signals are transmitted from antennas 307-1 to 307-4 to the base station 213. Although Fig. 4 illustrates an example of a case in which the number of antennas is four, the number of antennas is not limited to four.

Reception processing of the mobile terminal 202 is performed as follows. A radio signal from the base station 213 is received by the antennas 307-1 to 307-4. The received signal is converted from a radio reception frequency into a baseband signal in the frequency converting unit 306, and is subjected to demodulation processing in a demodulating unit 308. In the demodulating unit 308, weight calculation and multiplication processing may be performed. The demodulated data is delivered to a decoder unit 309, and is subjected to decoding processing such as error correction. The decoded data is delivered to the protocol processing unit 301, and is subjected to protocol processing of the MAC, the RLC, the PDCP, the SDAP, and the like, for example, operation such as removal of a header in each protocol. Of the data subjected to the protocol processing, the control data is delivered to the control unit 310 and the user data is delivered to the application unit 302.

The series of processing of the mobile terminal 202 is controlled by the control unit 310. Thus, the control unit 310 is also connected to each of the units 302 and 304 to 309, of which illustration is omitted in Fig. 4.

Each unit of the mobile terminal 202, such as the control unit 310, the protocol processing unit 301, the encoder unit 304, and the decoder unit 309, is implemented by processing circuitry including a processor and a memory, for example. For example, the control unit 310 is implemented by the processor executing a program describing the series of processing of the mobile terminal 202. The program describing the series of processing of the mobile terminal 202 is stored in the memory. Examples of the memory include non-volatile or volatile semiconductor memories, such as a random access memory (RAM), a read only memory (ROM), and a flash memory. Each unit of the mobile terminal 202, such as the control unit 310, the protocol processing unit 301, the encoder unit 304, and the decoder unit 309, may be implemented by dedicated processing circuitry such as a field programmable gate array (FPGA), an application specific integrated circuit (ASIC), and a digital signal processor (DSP). In Fig. 4, the number of antennas used by the mobile terminal 202 for transmission and the number of antennas used thereby for reception may be the same or different.

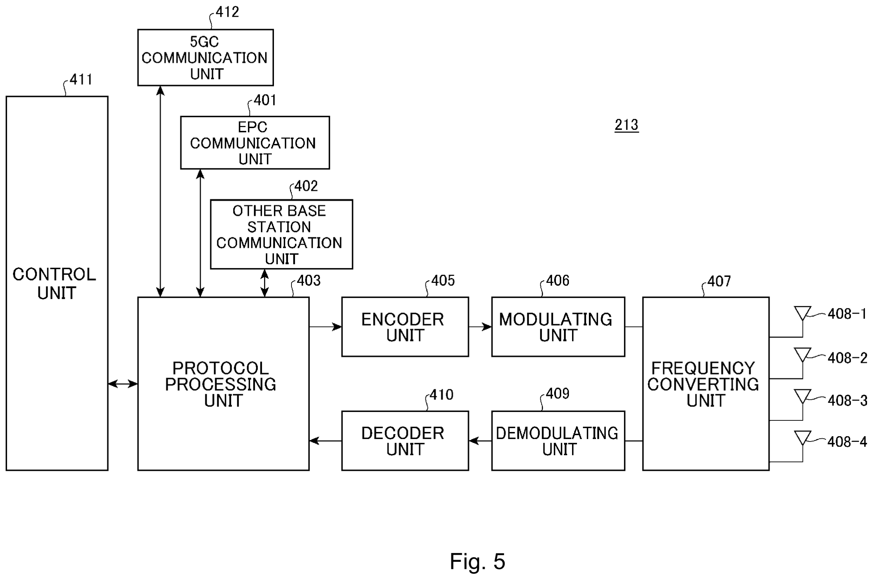

Fig. 5 is a block diagram illustrating a configuration of the base station 213 illustrated in Fig. 2. Transmission processing of the base station 213 illustrated in Fig. 5 will be described. An EPC communication unit 401 transmits and receives data between the base station 213 and the EPC. A 5GC communication unit 412 transmits and receives data between the base station 213 and the 5GC (such as the 5GC unit 214). Another base station communication unit 402 transmits and receives data to and from another base station. Each of the EPC communication unit 401, the 5GC communication unit 412, and such another base station communication unit 402 exchanges information with a protocol processing unit 403. Control data from a control unit 411 and user data and control data from the EPC communication unit 401, the 5GC communication unit 412, and such another base station communication unit 402 are transmitted to the protocol processing unit 403. The control data and the user data may be buffered. The buffers of the control data and the user data may be provided in the control unit 411, may be provided in the EPC communication unit 401, may be provided in the 5GC communication unit 412, or may be provided in such another base station communication unit 402.

The protocol processing unit 403 performs protocol processing of the SDAP, the PDCP, the RLC, the MAC, and the like, for example, operation such as routing of transmission data in DC or the like and provision of a header in each protocol. The data subjected to the protocol processing is delivered to an encoder unit 405, and is subjected to encoding processing such as error correction. There may be data that is directly output from the protocol processing unit 403 to a modulating unit 406 without being subjected to the encoding processing. The data may be transmitted from the protocol processing unit 403 to such another base station communication unit 402. For example, in DC, the data transmitted from the 5GC communication unit 412 or the EPC communication unit 401 may be transmitted to another base station, such as the secondary base station, via such another base station communication unit 402. The encoded data is subjected to modulation processing in the modulating unit 406. In the modulating unit 406, MIMO precoding may be performed. The modulated data is converted into a baseband signal, and is then output to the frequency converting unit 407 to be converted into a radio transmission frequency. Subsequently, transmission signals are transmitted from antennas 408-1 to 408-4 to one or a plurality of mobile terminals 202. Although Fig. 5 illustrates an example of a case in which the number of antennas is four, the number of antennas is not limited to four.

Reception processing of the base station 213 is performed as follows. A radio signal from one or a plurality of mobile terminals 202 is received by the antennas 408-1 to 408-4. The received signal is converted from a radio reception frequency into a baseband signal in the frequency converting unit 407, and is subjected to demodulation processing in a demodulating unit 409. The demodulated data is delivered to a decoder unit 410, and is subjected to decoding processing such as error correction. The decoded data is delivered to the protocol processing unit 403, and is subjected to protocol processing of the MAC, the RLC, the PDCP, the SDAP, and the like, for example, operation such as removal of a header in each protocol. Of the data subjected to the protocol processing, the control data is delivered to the control unit 411, the 5GC communication unit 412, the EPC communication unit 401, or such another base station communication unit 402, and the user data is delivered to the 5GC communication unit 412, the EPC communication unit 401, or such another base station communication unit 402. The data transmitted from such another base station communication unit 402 may be transmitted to the 5GC communication unit 412 or the EPC communication unit 401. The data may be uplink data transmitted to the 5GC communication unit 412 or the EPC communication unit 401 unit via another base station in DC, for example.

The series of processing of the base station 213 is controlled by the control unit 411. Thus, the control unit 411 is also connected to each of the units 401, 402, 405 to 410, and 412, of which illustration is omitted in Fig. 5.

Each unit of the base station 213, such as the control unit 411, the protocol processing unit 403, the 5GC communication unit 412, the EPC communication unit 401, such another base station communication unit 402, the encoder unit 405, and the decoder unit 410, is implemented by processing circuitry including a processor and a memory or dedicated processing circuitry such as an FPGA, an ASIC, and a DSP, as in the case of the mobile terminal 202 described above. In Fig. 5, the number of antennas used by the base station 213 for transmission and the number of antennas used thereby for reception may be the same or different.

As an example of a configuration of the CU 215 illustrated in Fig. 2, a configuration provided with a DU communication unit may be used, except the encoder unit 405, the modulating unit 406, the frequency converting unit 407, the antennas 408-1 to 408-4, the demodulating unit 409, and the decoder unit 410 illustrated in Fig. 5. The DU communication unit is connected to the protocol processing unit 403. The protocol processing unit 403 in the CU 215 performs protocol processing of the PDCP, the SDAP, and the like.

As an example of a configuration of the DU 216 illustrated in Fig. 2, a configuration provided with a CU communication unit may be used, except the EPC communication unit 401, such another base station communication unit 402, and the 5GC communication unit 412 illustrated in Fig. 5. The CU communication unit is connected to the protocol processing unit 403. The protocol processing unit 403 in the DU 216 performs protocol processing of the PHY, the MAC, the RLC, and the like.

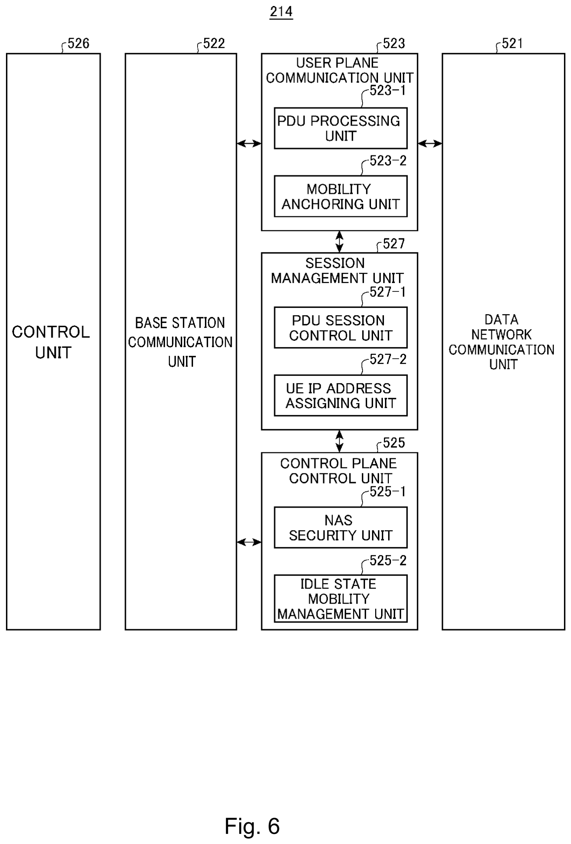

Fig. 6 is a block diagram illustrating a configuration of the 5GC unit. Fig. 6 illustrates a configuration of the 5GC unit 214 illustrated in Fig. 2 described above. Fig. 6 illustrates a case in which a configuration of the AMF, a configuration of the SMF, and a configuration of the UPF are included in the 5GC unit 214 illustrated in Fig. 2. In the example illustrated in Fig. 6, the AMF may have a function of a control plane control unit 525, the SMF may have a function of a session management unit 527, and the UPF may have a function of a user plane communication unit 523 and a data network communication unit 521. The data network communication unit 521 transmits and receives data between the 5GC unit 214 and a data network. The base station communication unit 522 transmits and receives data between the 5GC unit 214 and the base station 213 via an NG interface. User data transmitted from the data network is delivered from the data network communication unit 521 to the base station communication unit 522 via the user plane communication unit 523, and is transmitted to one or a plurality of base stations 213. User data transmitted from the base station 213 is delivered from the base station communication unit 522 to the data network communication unit 521 via the user plane communication unit 523, and is transmitted to the data network.

Control data transmitted from the base station 213 is delivered from the base station communication unit 522 to the control plane control unit 525. The control plane control unit 525 may deliver the control data to the session management unit 527. The control data may be transmitted from the data network. The control data transmitted from the data network may be transmitted from the data network communication unit 521 to the session management unit 527 via the user plane communication unit 523. The session management unit 527 may transmit the control data to the control plane control unit 525.

The user plane communication unit 523 includes a PDU processing unit 523-1, a mobility anchoring unit 523-2, and the like, and performs general processing on the user plane (which may be hereinafter also referred to as a U-Plane). The PDU processing unit 523-1 performs processing of data packets, for example, transmission and reception of packets to and from the data network communication unit 521 and transmission and reception of packets to and from the base station communication unit 522. The mobility anchoring unit 523-2 anchors a data path at the time of mobility of the UE.

The session management unit 527 performs management of a PDU session provided between the UE and the UPF and the like. The session management unit 527 includes a PDU session control unit 527-1, a UE IP address assigning unit 527-2, and the like. The PDU session control unit 527-1 performs management of a PDU session between the mobile terminal 202 and the 5GC unit 214. The UE IP address assigning unit 527-2 performs assignment of an IP address to the mobile terminal 202 and the like.

The control plane control unit 525 includes a NAS security unit 525-1, an idle state mobility management unit 525-2, and the like, and performs general processing on the control plane (which may be hereinafter also referred to as a C-Plane). The NAS security unit 525-1 performs security of a Non-Access Stratum (NAS) message and the like. The idle state mobility management unit 525-2 performs mobility management of the idle state (which may also be simply referred to as an "RRC_IDLE state" or "idle"), generation and control of a paging signal in the idle state, addition, deletion, update, search, and tracking area list management of a tracking area of one or a plurality of served mobile terminals 202, and the like.

The series of processing of the 5GC unit 214 is controlled by a control unit 526. Thus, the control unit 526 is connected to each of the units 521 to 523, 525, and 527, of which illustration is omitted in Fig. 6. Each unit of the 5GC unit 214 is implemented by processing circuitry including a processor and a memory or dedicated processing circuitry such as an FPGA, an ASIC, and a DSP, for example, as in the case of the control unit 310 of the mobile terminal 202 described above.

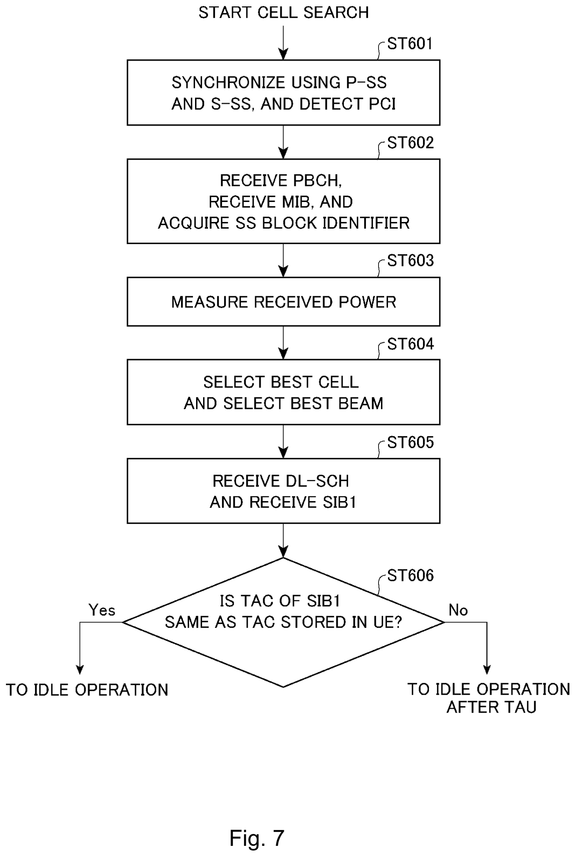

Next, an example of a cell search method in the communication system will be described. Fig. 7 is a flowchart illustrating an outline from cell search to idle operation performed by the communication terminal (UE) in the NR communication system. After the communication terminal starts cell search, in Step ST601, the communication terminal establishes synchronization of a slot timing and a frame timing, using a primary synchronization signal (P-SS) and a secondary synchronization signal (S-SS) transmitted from a neighbor base station.

The P-SS and the S-SS are collectively referred to as a synchronization signal (SS). The synchronization signal (SS) is assigned a synchronization code that corresponds to a physical cell identifier (PCI) assigned to each cell on a one-to-one basis. It is studied that the number of PCIs is 1008. The communication terminal establishes synchronization using the 1008 PCIs, and detects (identifies) the PCI(s) of synchronized cell(s).

Next, in Step ST602, the communication terminal receives a PBCH of the synchronized cell. A master information block (MIB) including cell configuration information is mapped to a BCCH on the PBCH. Thus, by receiving the PBCH and obtaining the BCCH, the MIB can be obtained. Examples of information of the MIB include a system frame number (SFN), scheduling information of a system information block (SIB) 1, subcarrier spacing for the SIB1 or the like, information of a DM-RS position, and the like.

The communication terminal acquires an SS block identifier on the PBCH. A part of a bit string of the SS block identifier is included in the MIB. The rest of the bit string is included in an identifier used to generate a DM-RS sequence accompanying the PBCH. The communication terminal acquires the SS block identifier, using the MIB included in the PBCH and the DM-RS sequence accompanying the PBCH.

Next, in Step ST603, the communication terminal measures received power of an SS block.

Next, in Step ST604, the communication terminal selects a cell having the best received quality, for example, a cell having the highest received power, that is, the best cell, out of the one or more cells detected up to Step ST603. The communication terminal selects a beam having the best received quality, for example, a beam having the highest received power of the SS block, that is, the best beam. In selection of the best beam, for example, received power of the SS block of each SS block identifier is used.

Next, in Step ST605, the communication terminal receives a DL-SCH based on the scheduling information of the SIB1 included in the MIB, and obtains the SIB1 in the broadcast information BCCH. The SIB1 includes information on access to the cell, cell configuration information, and scheduling information of another SIB (SIBk: k is an integer satisfying k ≥ 2). The SIB1 includes a tracking area code (TAC).

Next, in Step ST606, the communication terminal compares the TAC of the SIB 1 received in Step ST605 and a TAC part of a tracking area identity (TAI) in a tracking area list already stored in the communication terminal. The tracking area list is also referred to as a TAI list. The TAI is identification information for identifying the tracking area, and includes a mobile country code (MCC), a mobile network code (MNC), and a tracking area code (TAC). The MCC is a country code. The MNC is a network code. The TAC is a code number of a tracking area.

As a result of the comparison in Step ST606, if the TAC received in Step ST605 is the same as the TAC included in the tracking area list, the communication terminal starts idle operation in the cell. As a result of the comparison, if the TAC received in Step ST605 is not included in the tracking area list, the communication terminal requests, via the cell, the core network (EPC) including an MME and the like to change the tracking area in order to perform tracking area update (TAU).

An apparatus configuring the core network (which may be hereinafter referred to as a "core network-side apparatus") updates the tracking area list, based on an identification number (a UE-ID or the like) of the communication terminal transmitted from the communication terminal together with a TAU request signal. The core network-side apparatus transmits the updated tracking area list to the communication terminal. The communication terminal rewrites (updates) a TAC list stored in the communication terminal, based on the received tracking area list. Subsequently, the communication terminal starts idle operation in the cell.

Next, an example of a random access method in the communication system will be described. In random access, 4-step random access and 2-step random access are used. In each of the 4-step random access and the 2-step random access, there are contention-based random access, that is, random access which may cause contention of timings with other mobile terminals, and contention-free random access.

An example of a contention-based 4-step random access method will be described. As a first step, the mobile terminal transmits a random access preamble to the base station. The random access preamble may be selected by the mobile terminal from a predetermined range, or may be individually assigned to the mobile terminal and notified from the base station.

As a second step, the base station transmits a random access response to the mobile terminal. The random access response includes uplink scheduling information to be used in a third step, a terminal identifier to be used in uplink transmission in the third step, and the like.

As the third step, the mobile terminal performs uplink transmission to the base station. The mobile terminal uses the information acquired in the second step in the uplink transmission. As a fourth step, the base station notifies the mobile terminal as to whether contention resolution is achieved. The mobile terminal notified of "without contention" ends random access processing. The mobile terminal notified of "with contention" resumes processing from the first step.

A contention-free 4-step random access method is different from the contention-based 4-step random access method in the following. In other words, prior to the first step, the base station assigns a random access preamble and uplink scheduling to the mobile terminal in advance. A notification as to whether contention resolution is achieved in the fourth step is unnecessary.

An example of a contention-based 2-step random access method will be described. As a first step, the mobile terminal performs transmission of a random access preamble and uplink transmission to the base station. As a second step, the base station notifies the mobile terminal as to whether there is contention. The mobile terminal notified of "without contention" ends random access processing. The mobile terminal notified of "with contention" resumes processing from the first step.

A contention-free 2-step random access method is different from the contention-based 2-step random access method in the following. In other words, prior to the first step, the base station assigns a random access preamble and uplink scheduling to the mobile terminal in advance. As a second step, the base station transmits a random access response to the mobile terminal.

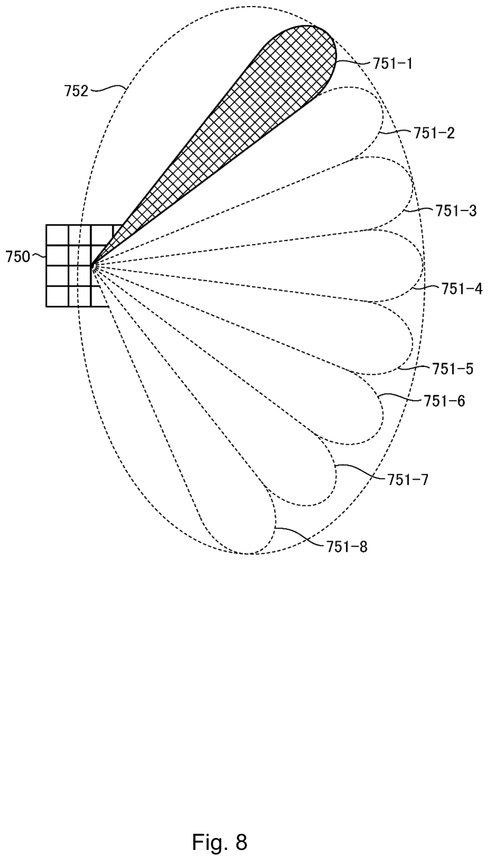

Fig. 8 illustrates an example of a configuration of a cell in NR. In a cell in NR, a narrow beam is formed and is transmitted with its direction being changed. In the example illustrated in Fig. 8, a base station 750 performs transmission and reception to and from the mobile terminal, using a beam 751-1 at a certain time. At another time, the base station 750 performs transmission and reception to and from the mobile terminal, using a beam 751-2. Subsequently, similarly, the base station 750 performs transmission and reception to and from the mobile terminal, using one or a plurality of beams 751-3 to 751-8. In this manner, the base station 750 configures a cell 752 having a wide range.

Although Fig. 8 illustrates an example in which the number of beams used by the base station 750 is eight, the number of beams may be different from eight. In the example illustrated in Fig. 8, although the number of beams simultaneously used by the base station 750 is one, the number of beams may be more than one.

A concept of quasi-colocation (QCL) is used in identification of a beam (see NPL 14 (3GPP TS 38.214)). In other words, identification is performed using information indicating as which beam of a reference signal (for example, an SS block, a CSI-RS) the beam can be considered to be the same. The information may include types of information regarding aspects in which the beam can be considered to be the same beam, for example, information on a Doppler shift, a Doppler shift spread, an average delay, an average delay spread, and a spatial Rx parameter (see NPL 14 (3GPP TS 38.214)).

In 3GPP, a sidelink (SL) is supported for device-to-device (D2D) communication and vehicle-to-vehicle (V2V) communication (see NPL 1 and NPL 16). The SL is defined by a PC5 interface.

In SL communication, support of PC5-S signaling is studied in order to support unicast and groupcast in addition to broadcast (see NPL 27 (3GPP TS 23.287)). For example, the PC5-S signaling is performed to establish the SL, that is, a link for performing PC5 communication. The link is performed in a V2X layer, and is also referred to as a layer 2 link.

In the SL communication, support of RRC signaling is studied (see NPL 27 (3GPP TS 23.287)). The RRC signaling in the SL communication is also referred to as PC5 RRC signaling. For example, notification of a UE capability and notification of an AS layer configuration and the like for performing V2X communication using the PC5 communication between the UEs performing the PC5 communication are proposed.

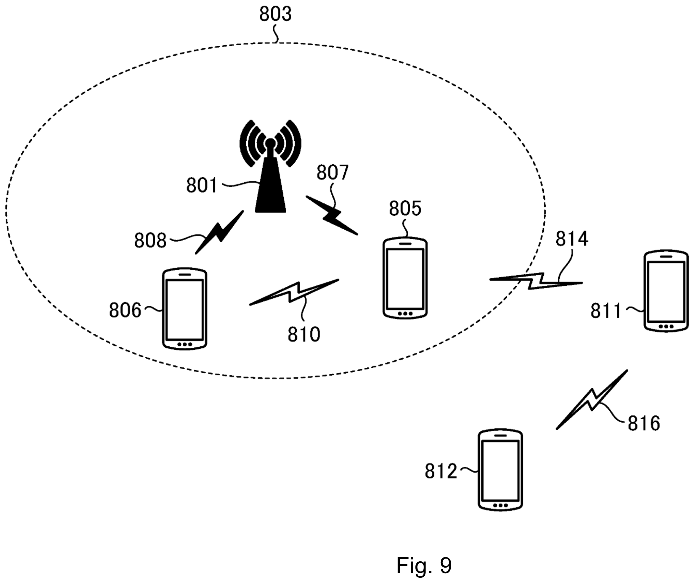

An example of a connection configuration of the mobile terminals in the SL communication is illustrated in Fig. 9. In the example illustrated in Fig. 9, a UE 805 and a UE 806 are present inside coverage 803 of a base station 801. UL/DL communication 807 is performed between the base station 801 and the UE 805. UL/DL communication 808 is performed between the base station 801 and the UE 806. SL communication 810 is performed between the UE 805 and the UE 806. A UE 811 and a UE 812 are present outside the coverage 803. SL communication 814 is performed between the UE 805 and the UE 811. SL communication 816 is performed between the UE 811 and the UE 812.

As an example of communication between the UE and the NW via relay in the SL communication, the UE 805 illustrated in Fig. 9 relays communication between the UE 811 and the base station 801.

A configuration similar to that of Fig. 4 may be used for the UE performing the relay. Relay processing in the UE will be described with reference to Fig. 4. Relay processing performed by the UE 805 in communication from the UE 811 to the base station 801 will be described. A radio signal from the UE 811 is received by the antennas 307-1 to 307-4. The received signal is converted from a radio reception frequency into a baseband signal in the frequency converting unit 306, and is subjected to demodulation processing in the demodulating unit 308. In the demodulating unit 308, weight calculation and multiplication processing may be performed. The demodulated data is delivered to a decoder unit 309, and is subjected to decoding processing such as error correction. The decoded data is delivered to the protocol processing unit 301, and is subjected to protocol processing of the MAC, the RLC, and the like used for communication with the UE 811, for example, operation such as removal of a header in each protocol. Protocol processing of the RLC, the MAC, and the like used for communication with the base station 801, for example, operation such as provision of a header in each protocol, is performed. In the protocol processing unit 301 of the UE 811, protocol processing of the PDCP and the SDAP may be performed. The data subjected to the protocol processing is delivered to the encoder unit 304, and is subjected to encoding processing such as error correction. There may be data that is directly output from the protocol processing unit 301 to the modulating unit 305 without being subjected to the encoding processing. The data subjected to the encoding processing in the encoder unit 304 is subjected to modulation processing in the modulating unit 305. In the modulating unit 305, MIMO precoding may be performed. The modulated data is converted into a baseband signal, and is then output to the frequency converting unit 306 to be converted into a radio transmission frequency. Subsequently, transmission signals are transmitted from the antennas 307-1 to 307-4 to the base station 801.

Although the above description illustrates an example of the relay performed by the UE 805 in communication from the UE 811 to the base station 801, similar processing is also used in relay in communication from the base station 801 to the UE 811.

A 5G base station can support an integrated access and backhaul (IAB) (see NPLs 2 and 20). A base station supporting the IAB (which may be hereinafter referred to as an IAB base station) includes an IAB donor CU being a CU of the base station that operates as an IAB donor providing an IAB function, an IAB donor DU being a DU of the base station that operates as an IAB donor, and an IAB node connected to the IAB donor DU and the UE using a radio interface. An F1 interface is provided between the IAB node and the IAB donor CU (see NPL 2).

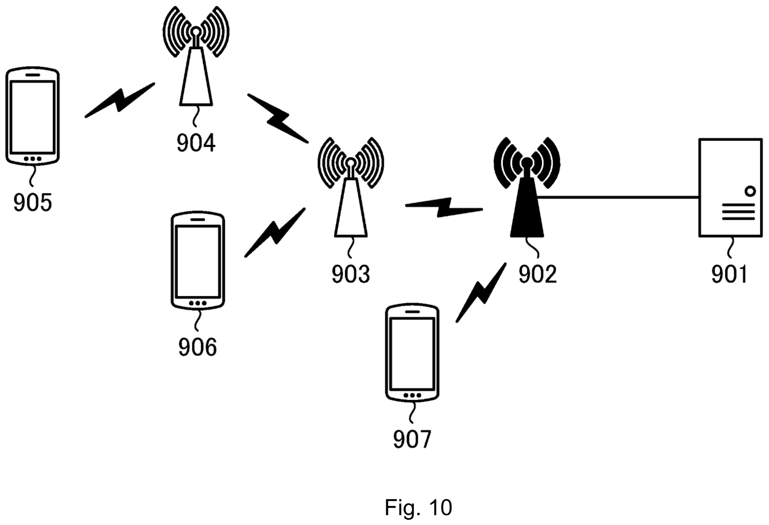

An example of connection of the IAB base stations is illustrated in Fig. 10. An IAB donor CU 901 is connected to an IAB donor DU 902. An IAB node 903 is connected to the IAB donor DU 902, using a radio interface. The IAB node 903 is connected to an IAB node 904, using a radio interface. In other words, multi-stage connection of the IAB nodes may be performed. A UE 905 is connected to the IAB node 904, using a radio interface. A UE 906 may be connected to the IAB node 903 using a radio interface, or a UE 907 may be connected to the IAB donor DU 902 using a radio interface. A plurality of IAB donor DUs 902 may be connected to the IAB donor CU 901, a plurality of IAB nodes 903 may be connected to the IAB donor DU 902, or a plurality of IAB nodes 904 may be connected to the IAB node 903.

A Backhaul Adaptation Protocol (BAP) layer is provided in connection between the IAB donor DU and the IAB node and connection between the IAB nodes (see NPL 29). The BAP layer performs operation such as routing of received data to the IAB donor DU and/or the IAB node and mapping of the received data to an RLC channel (see NPL 29).

As an example of a configuration of the IAB donor CU, a configuration similar to that of the CU 215 is used.

As an example of a configuration of the IAB donor DU, a configuration similar to that of the DU 216 is used. In the protocol processing unit of the IAB donor DU, processing of the BAP layer, for example, processing such as provision of a BAP header in downlink data, routing to the IAB node, and removal of the BAP header in uplink data, is performed.

As an example of a configuration of the IAB node, a configuration except the EPC communication unit 401, such another base station communication unit 402, and the 5GC communication unit 412 illustrated in Fig. 5 may be used.

Transmission and reception processing in the IAB node will be described with reference to Fig. 5 and Fig. 10. Transmission and reception processing of the IAB node 903 in communication between the IAB donor CU 901 and the UE 905 will be described. In uplink communication from the UE 905 to the IAB donor CU 901, a radio signal from the IAB node 904 is received by the antenna(s) 408 (a part or all of the antennas 408-1 to 408-4). The received signal is converted from a radio reception frequency into a baseband signal in the frequency converting unit 407, and is subjected to demodulation processing in the demodulating unit 409. The demodulated data is delivered to the decoder unit 410, and is subjected to decoding processing such as error correction. The decoded data is delivered to the protocol processing unit 403, and is subjected to protocol processing of the MAC, the RLC, and the like used for communication with the IAB node 904, for example, operation such as removal of a header in each protocol. Routing to the IAB donor DU 902 using a BAP header is performed, and protocol processing of the RLC, the MAC, and the like used for communication with the IAB donor DU 902, for example, operation such as provision of a header in each protocol, is performed. The data subjected to the protocol processing is delivered to the encoder unit 405, and is subjected to encoding processing such as error correction. There may be data that is directly output from the protocol processing unit 403 to the modulating unit 406 without being subjected to the encoding processing. The encoded data is subjected to modulation processing in the modulating unit 406. In the modulating unit 406, MIMO precoding may be performed. The modulated data is converted into a baseband signal, and is then output to the frequency converting unit 407 to be converted into a radio transmission frequency. Subsequently, transmission signals are transmitted to the IAB donor DU 902 from the antennas 408-1 to 408-4. Similar processing is also performed in downlink communication from the IAB donor CU 901 to the UE 905.

Transmission and reception processing similar to that of the IAB node 903 is also performed in the IAB node 904. In the protocol processing unit 403 of the IAB node 903, as processing of the BAP layer, for example, processing such as provision of a BAP header in uplink communication, routing to the IAB node 904, and removal of the BAP header in downlink communication is performed.

In a standard for mobile communication systems in 3GPP, a UE needs to perform random access (RA) processing for processing of connection to a cell, for example, processing of connection to a cell at the time of cell selection or sell re-selection. In such RA processing, a UE transmits a PRACH to a cell. If the UE cannot receive a response for the PRACH from a base station, the UE increases transmission power by a certain amount and retransmits a PRACH. By increasing the transmission power significantly, connection can be established with a small number of times of transmission. However, high transmission power causes interference to another UL communication. Hence, a problem arises that various kinds of KPIs required by mobile communication systems cannot be improved unless appropriate PRACH transmission power is derived.

In the present embodiment, a method of enabling more efficient RA processing according to a communication situation will be disclosed.

In the present embodiment, AI/ML is introduced to RA processing. Examples of the RA processing include PRACH transmission processing, random access problem (RA problem) processing, and backoff processing (refer to NPL 15). By using AI/ML for such RA processing, optimization of information to be used for PRACH transmission processing, RA problem processing, backoff processing, or the like is performed, for example.

Learning of a model (referred to as training in some cases in the present description) will be described. In the present description, a model (including a learned model) is referred to as an AI/ML model in some cases.

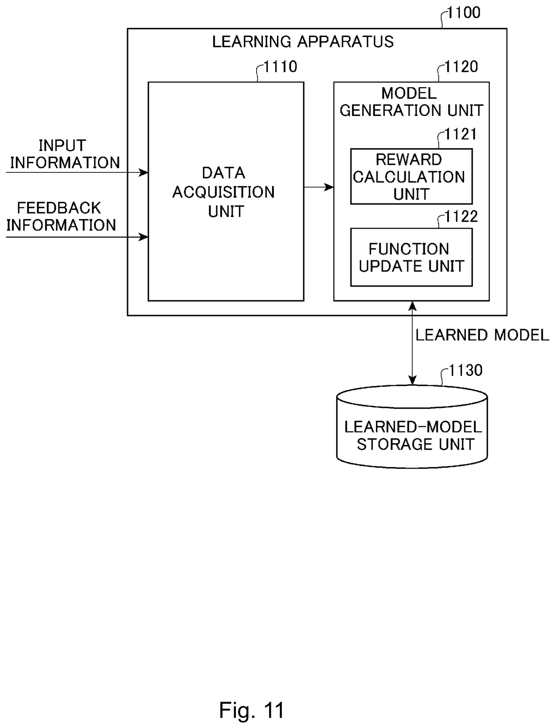

In a communication system according to the present embodiment, a configuration of a learning apparatus 1100 illustrated in Fig. 11 is used. Fig. 11 is a diagram illustrating a configuration example of the learning apparatus 1100 related to the communication system. The learning apparatus 1100 includes a data acquisition unit 1110 and a model generation unit 1120. A learned model generated by the model generation unit 1120 is stored in a learned-model storage unit 1130. Although Fig. 11 illustrates a configuration example that the learned-model storage unit 1130 is present outside the learning apparatus 1100, a configuration that the learned-model storage unit 1130 is included in the learning apparatus 1100 may be used. The learning apparatus 1100 illustrated in Fig. 11 may be applied to a base station.

The data acquisition unit 1110 acquires input information and feedback information as data for learning.

The model generation unit 1120 learns output information, based on data for learning including the input information and the feedback information. In other words, the model generation unit 1120 generates a learned model for inferring output information from the input information from the communication system.

A learning algorithm used by the model generation unit 1120 can be a known algorithm such as supervised learning, unsupervised learning, or reinforcement learning. As an example, a case where reinforcement learning is applied will be described. In reinforcement learning, an agent (action subject) in a given environment observes a current state (parameter of the environment) and determines an action to take. The environment is dynamically changed by the action of the agent, and the agent is rewarded according to the change of the environment. The agent repeats this to learn an action course to be able to receive the largest reward through a series of actions. As a typical technique of the reinforcement learning, Q-learning and TD-learning are known. For example, in a case of Q-learning, a general update expression of an action value function Q(s, a) is expressed by Expression (1).

[Math. 1]

$$Q(s_t, a_t) \leftarrow Q(s_t, a_t) + \alpha \left( r_{t+1} + \gamma \max_a Q(s_{t+1}, a) - Q(s_t, a_t) \right) \quad \cdots (1)$$

In Expression (1), st denotes a state of environment at time point t, and at denotes an action at time point t. By action $a_t$, the state is changed to $s_{t+1}$. $r_{t+1}$ denotes reward given according to the change of the state, $\gamma$ denotes a discount rate, and $\alpha$ denotes a learning coefficient. Note that it is assumed that $\gamma$ is within a range of $0 < \gamma \leq 1$, and $\alpha$ is within a range of $0 < \alpha \leq 1$. By assuming action at and state st by using input information, best action at in state st at time point t is learnt.

The update expression expressed by Expression (1) increases action value Q when action value Q of action a with the highest Q value at time point t + 1 is larger than action value Q of action a performed at time point t, and reduces action value Q in the opposite case. In other words, action value function Q(s, a) is updated to make action value Q of action a at time point t closer to the best action value at time point t + 1. Consequently, the best action value in a given environment sequentially propagates to action values in the environment previous to the given environment.

As described above, when a learned model is generated by enforcement learning, the model generation unit 1120 includes a reward calculation unit 1121 and a function update unit 1122.

The reward calculation unit 1121 calculates reward, based on the input information and the feedback information. The reward calculation unit 1121 calculates reward r, based on a reward reference. For example, reward r is increased in a case corresponding to a reward increase reference (for example, by giving reward "1"), while reward r is decreased in a case corresponding to a reward decrease reference (for example, by giving reward "-1").

The function update unit 1122 updates a function for determining output according to the reward calculated by the reward calculation unit 1121 and outputs the updated function to the learned-model storage unit 1130. For example, in a case of Q-learning, the function is used for computing output information of action value function Q(st, $a_t$) expressed by Expression (1).

The learning apparatus 1100 repeatedly performs learning as that described above. The learned-model storage unit 1130 stores action value function Q(st, $a_t$) obtained by the update by the function update unit 1122, i.e., the learned model.

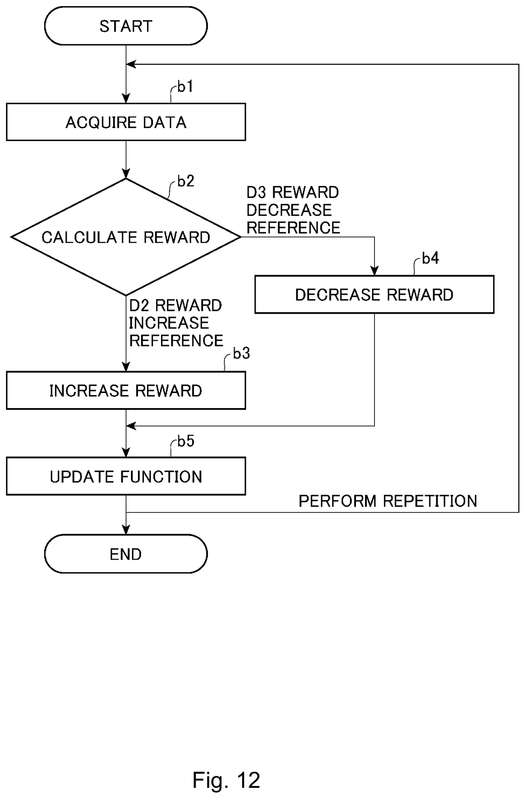

Next, processing of learning by the learning apparatus 1100 will be described with reference to Fig. 12. Fig. 12 is a flowchart related to learning processing of the learning apparatus.

In Step b1, the data acquisition unit 1110 acquires input information and feedback information as data for learning.

In Step b2, the model generation unit 1120 calculates reward, based on the input information and the feedback information. Specifically, the reward calculation unit 1121 acquires the input information and the feedback information and judges whether to increase the reward (Step b3) or decrease the reward (Step b4), based on a predefined reward reference.

The reward calculation unit 1121 increases, when judging to increase the reward, the reward in Step b3. By contrast, the reward calculation unit 1121 decreases, when judging to decrease the reward, the reward in Step b4.

In Step b5, the function update unit 1122 updates action value function Q(st, at) expressed by Expression (1) stored in the learned-model storage unit 1130, based on the reward calculated by the reward calculation unit 1121.

The learning apparatus 1100 repeatedly performs the steps from Step b1 to Step b5 above, to cause the learned-model storage unit 1130 to store generated action value function Q(st, at) as a learned model.

Inference using a learned model will be described.

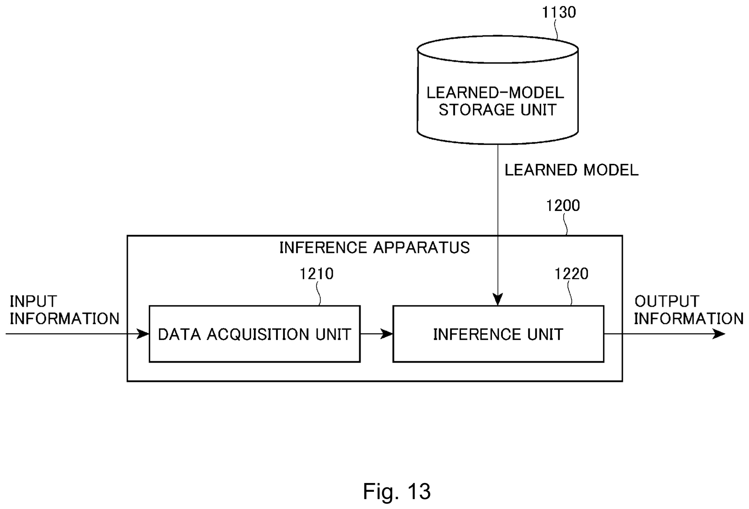

Fig. 13 is a configuration diagram of an inference apparatus 1200 related to the communication system. The inference apparatus 1200 includes a data acquisition unit 1210 and an inference unit 1220.

The data acquisition unit 1210 acquires input information.

The inference unit 1220 uses a learned model to infer output information. In other words, by inputting the input information acquired by the data acquisition unit 1210 to the learned model, output information suitable for the input information can be inferred.

Note that, although the description has been given by assuming that output information is output by using a learned model learnt by the model generation unit 1120 of the communication system in the present embodiment, a learned model may be acquired from another communication system to output output information, based on this learned model.

Although Fig. 13 illustrates a configuration example that the learned-model storage unit 1130 is present outside the inference apparatus 1200, a configuration that the learned-model storage unit 1130 is included in the inference apparatus 1200 may be used. The inference apparatus 1200 illustrated in Fig. 13 may be applied to a base station. The inference apparatus 1200 may be applied to the same node as that of the learning apparatus 1100 or may be applied to a different node.

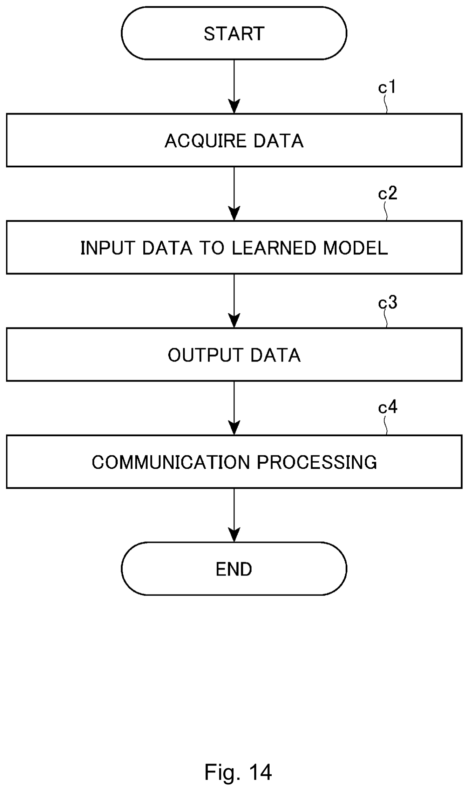

Next, by using Fig. 14, processing for obtaining output information by using the inference apparatus 1200 will be described.

In Step c1, the data acquisition unit 1210 acquires input information.

In Step c2, the inference unit 1220 acquires a learned model from the learned-model storage unit 1130, inputs the input information to the acquired learned model, and obtains output information.

In Step c3, the inference unit 1220 outputs the output information obtained from the learned model, to the communication system.

In Step c4, the communication system uses the output information thus output, to perform communication processing. In this way, more effective communication processing using a learned model can be performed.

Note that, although a case where reinforcement learning is applied to a learning algorithm used by the inference unit 1220 has been described in the present embodiment, this is not restrictive. To the learning algorithm, supervised learning, unsupervised learning, or semisupervised learning, or the like other than reinforcement learning can be applied.

As the learning algorithm used by the model generation unit 1120, deep learning for learning extraction of a feature itself can be used, and machine learning may be performed according to another known method such as neural network, genetic programming, inductive logic programming, or support vector machine, for example.

Note that the learning apparatus 1100 and the inference apparatus 1200 may be connected to the communication system via a network, for example. The learning apparatus 1100 and the inference apparatus 1200 may be built in the communication system. Further, the learning apparatus 1100 and the inference apparatus 1200 may be present on a cloud server.

The model generation unit 1120 may use data for learning acquired from a plurality nodes, to learn output information. Note that the model generation unit 1120 may acquire data for learning from a plurality nodes used in the same area, or use data for learning collected from a plurality of nodes operating independently in different areas, to learn output information. A node for collecting data for learning may be added to a target or removed from the target, halfway. Further, the learning apparatus 1100 that has learnt output information on a given node may be applied to a node different from the given node, to re-learn output information on the different node for update.

In the present embodiment, an AI/ML model for RA processing, which is an AI/ML model to be used for RA processing, is provided in the base station. A learning (which is referred to as model training in some cases) apparatus and an inference apparatus may be provided in the base station. The AI/ML model for RA processing may be provided in a RAN node. For example, the AI/ML model may be provided in a CU or provided in a DU. The AI/ML model for RA processing may be provided in an IAB donor. For example, the AI/ML model may be provided in an IAB donor CU or an IAB donor DU. The AI/ML model for RA processing may be provided in an IAB node. The IAB node constitutes an IAB-DU having a DU function. For example, the AI/ML model may be provided in an IAB-DU. This enables configuration information necessary for RA processing to be derived by the base station or each node using the AI/ML model, which facilitates configuration.

The base station may transmit information indicating whether or not the base station has an AI/ML model for RA processing (which may be information including the model), to the UE. For the transmission, RRC signaling may be used. The base station may transmit information indicating whether or not the base station has an AI/ML model for RA processing, to a neighboring base station. For the transmission, Xn signaling may be used. The base station may transmit information indicating whether or not the base station has an AI/ML model for RA processing, to a core network (CN) node (which may be a function). The CN node may be a network data analysis function (NWDAF), for example. The base station may transmit information indicating whether or not to have an AI/ML model for RA processing, to a node for management. The node for management may be a management service (MnS) node or an operation, administration and management (OAM), for example. In this way, the UE or the node notified of the information can recognize whether or not the base station, which is a notification source, has an AI/ML model for RA processing. The UE or the node can recognize whether or not AI/ML can be introduced to the RA processing using the base station.

Input information for AI/ML model for RA processing is provided. 30 examples of the input information for AI/ML model for RA processing are disclosed below.

(1) Information on a state of a UE.

(2) Information on a trajectory of a UE.

(3) Information on a base station to which a UE is connected.

(4) Information on a base station to which a UE is connected, the information being acquired from a neighboring base station.

(5) Information on cell selection or cell re-selection of a UE.

(6) Information on cell selection or cell re-selection of a UE, the information being acquired from a neighboring base station.

(7) Information on RA processing of a UE.

(8) Information on RA processing of a UE, the information being acquired from a neighboring base station.

(9) Information on an RA problem of a UE.

(10) Information on an RA problem of a UE, the information being acquired from a neighboring base station.

(11) Information on radio link failure (RLF) based on an RA problem of a UE.

(12) Information on RLF based on an RA problem of a UE, the information being acquired from a neighboring base station.

(13) Information on radio measurement of a UE.

(14) Information on minimization of drive tests (MDTs) of a UE.

(15) Information of cross-link interference management (CLI) at a UE.

(16) Information on RACH configuration.

(17) Information on a resource of a base station.

(18) Information on UE traffic.

(19) Information on RRC_Idle UEs.

(20) Information on RRC_Inactive UEs.

(21) Information on load of a base station.

(22) Information on UL interference.

(23) Remote interference management (RIM) information at a base station.

(24) RIM information at a neighboring base station.

(25) Information on layer 2 (L2) measurement of a UE.

(26) Information on L2 measurement from a base station.

(27) Information on performance of a UE.

(28) Information on the quality of experience (QoE) of a UE.

(29) Information on propagation delay between a UE and a cell.

(30) Combination of (1) to (29).

(1) may be the location, moving speed, moving direction of the UE, for example. The location of the UE may be coordinates, for example. For example, the location of the UE may be an area. For example, the location of the UE may be information identifying a TA, an RNA, a base station, a cell, a CU, a DU, or a TRP the coverage of which the UE is located at or to which the UE is connected. For example, the location of the UE may be information identifying a TA, an RNA, a base station, a cell, a CU, a DU, or a TRP having the best reception quality (which may be the highest reception power). (1) may be information on time. The information on time may be a year, a month, a day, a day of the week and the like without being limited to a time, a minute, and a second. The information on time may be information on time used by an NW such as a hyper frame number (HFN) or an SFN. These pieces of information and the time may be combined. (1) may be the remaining battery level of the UE. (1) may be information on power consumption of the UE. These pieces of information may be combined. The state of the UE can be used as input information for training and inference.

To (2), which is information on a trajectory of a UE, the information on a state of a UE disclosed in (1) may be applied as appropriate, for example. For example, (2) may be information on a connected base station disclosed in (3). For example, (2) may be the information on cell selection or cell re-selection disclosed in (5). (2) may be information on past and current trajectories of the UE. The information on past and current trajectories of the UE may be history information. The information on the trajectory may be information on a future trajectory of the UE. The information on the future trajectory may be predicted information. These pieces of information may be listed. (2) may include information on time. The information on a trajectory of the UE and the information on time may be associated with each other. The information on a trajectory of the UE can be used as input information for training and inference.

(3) may be information of a RAN node (which may be a base station, for example) to which the UE has been connected in the past, for example. The RAN node may be a base station, a cell, a cell group, a CU, a DU, a TRP, or the like, for example. The information of the base station may be information identifying the base station, for example. For example, the information may be configuration information of a base station to which the UE has been connected in the past. For example, the information may be history information of base stations to which the UE has been connected in the past. For example, the information may be a list of pieces of information of the base stations. (3) may include information on the location of the UE. The information may include information on time. Information of a base station to which the UE has been connected in the past and information on a location and time may be associated with each other. The base station to which the UE has been connected in the past may be limited to information of a base station to which the UE has been connected by RA processing.

(4) is information of a base station to which the UE has been connected in the past, the information being held by the neighboring base station, for example. The information on a connected base station of the UE may be information disclosed in (3).

(5) may be information of a base station for which the UE has performed cell selection and/or cell re-selection in the past, for example. For example, the information may be information identifying the base station. For example, the information may be configuration information of the base station. The information may be history information of base stations for which the UE has performed cell selection and/or cell re-selection in the past. For example, the information may be a list of pieces of information of the base stations. (5) may include information on the location of the UE. The information may include information on time. Information of a base station for which cell selection and/or cell re-selection has been performed in the past and information on a location and time may be associated with each other. The information of the UE in an RRC_Idle or RRC_Inactive state can be used as input information for training and inference. The information of a base station for which the UE has performed cell selection and/or cell re-selection in the past may be limited to information of a base station for which the UE has performed RA processing.

(6) may be information of a base station for which the UE has performed cell selection and/or cell re-selection in the past, the information being held by the neighboring base station, for example. The information on cell selection and/or cell re-selection of the UE may be information disclosed in (5).

(7) may be information on RA processing performed by the UE in the past, for example. For example, the information may be information indicating whether or not the RA processing has been successful. For example, the information may be information of a base station for which the UE has performed the RA processing. For example, the information may be information identifying the base station. For example, the information may be configuration information used by the UE for the RA processing. The information may be history information of RA processing performed by the UE in the past. For example, the information may be information derived by the UE to perform the RA processing (referred to as UE derived information below). For example, the information includes reception power (RSRP) for a synchronization signal block (SSB) of the UE to be used to determine PRACH transmission power, pathloss derived from the reception power, the number of times of PRACH retransmission, PRACH transmission power determined by using these, a selected RA resource, a time from PRACH transmission to random access response (RAR) reception, a history of RA problems, and the like. The information may be history information of past UE derived information. For example, the information may be a list of pieces of the information. (7) may include information on the location of the UE. The information may include information on time. The information on RA processing and the information on a location and time may be associated with each other. For example, for which base station the UE has performed RA processing in the past can be used as input information for training and inference.

(8) is information on RA processing of the UE held by the neighboring base station, for example. The information on RA processing of the UE may be information disclosed in (7).

(9) may be information on a past RA problem of the UE, for example. For example, the information on a past RA problem of the UE may be past RA problem occurrence history information. For example, the information may be information on a base station for which an RA problem has occurred in the past. For example, the information may be information on a configuration used for RA processing in which an RA problem has occurred in the past. For example, the information may be information on RACH configuration at the time when an RA problem has occurred. For example, the information may be PRACH transmission power at the time when an RA problem has occurred. For example, the information may be a list of pieces of the information. (9) may include information on the location of the UE. The information may include information on time. The information on an RA problem and the information on a location and time may be associated with each other. For example, for which base station the UE has encountered an occurrence of an RA problem in the past and in which RA configuration the UE has encountered an occurrence of an RA problem can be used as input information for training and inference.

(10) is information on an RA problem of the UE in the past held by the neighboring base station, for example. The information on an RA problem of the UE may be information disclosed in (9).

(11) may be information on RLF based on a past RA problem of the UE, for example. For example, the information may be history information of RLF occurrence based on a past RA problem of the UE. For example, the information may be information on a base station for which the UE has encountered occurrence of RLF based on an RA problem in the past. For example, the information may be information on a configuration used for RA processing in which the UE has encountered occurrence of RLF based on an RA problem in the past. For example, the information may be a list of pieces of the information. (11) may include information on the location of the UE. The information may include information on time. The information on RLF based on an RA problem and the information on a location and time may be associated with each other. For example, for which base station the UE has encountered an occurrence of RLF based on an RA problem in the past and in which RA configuration RLF based on an RA problem has occurred can be used as input information for training and inference.

(12) is information on RLF based on an RA problem of the UE in the past held by the neighboring base station. The information on RLF based on an RA problem of the UE in the past may be information disclosed in (11).

(13) is a radio measurement result by the UE, for example. (13) may be an RSRP, an RSRQ, or a signal to interference noise ratio (SINR), for example. (13) may include information on the location of the UE. The information may include information on time. The radio measurement result and the information on a location and time may be associated with each other. Reception quality according to the location and the state of the UE can be used as input information for training and inference.

(14) is a measurement result by MDT, for example. For example, the measurement result may be a measurement result by immediate MDT or a measurement (logged measurement) result by logged MDT. The measurement result may be a measurement result by managementbased MDT. The measurement result may be a measurement result by signaling-based MDT. The measurement result may be a measurement result by a trace function. The measurement result by MDT and the information on a location and time of the UE may be associated with each other. The information on a location and time of the UE may be information measured by MDT. By performing configuration of MDT on the UE, a measurement result by MDT can be obtained as input information for AI/ML model for RA processing. More states and more pieces of information the UE can be used as input information for training and inference.

(15) may be a CLI measurement result from the UE, for example (refer to NPL 2, Section 17.2). The CLI measurement result and the information on a location and time of the UE may be associated with each other. By performing CLI measurement configuration on the UE, a measurement result by CLI can be obtained as input information for training and inference. The information on uplink interference by another UE can be used as input information for training and inference.

(16) is information on RACH configuration of the base station, for example. For example, the information may be target reception power of the base station, RS transmission power of the base station, a ramping factor, the maximum number of times of PRACH transmission, a RAR window, or backoff indicator information. The information may be information on current RACH configuration or may be information on past RACH configuration. For example, the history information may be a list of pieces of the information. (16) may include information on the location of the base station. (16) may include information on time at which the RACH configuration has been performed. (16) may include information on load of the base station. The information on RACH configuration and the information on a location, time, and load may be associated with each other. For example, in which base station which RACH configuration is performed can be used as input information for training and inference.

(17) is the resource use amount of the base station, for example. The resource use amount may be the current resource use amount or may be a predicted resource use amount. For example, the resource use amount may be a resource use amount per base station, per cell group, per cell, per DU, or per TRP. The resource may be a frequency resource or may be a time resource. The frequency resource use amount may be the number of carriers (which may be component carriers (CCs)), the number of RBs, the number of subcarriers, or the like. For example, the resource use amount may be a BWP use amount. The BWP use amount may be in units of carrier, may be in units of physical resource block (PRB), or may be in units of subcarrier. The time resource use amount may be the number of subframes, the number of slots, the number of symbols, or the like. The time resource use amount may be in units of subframe, may be in units of slot, or may be in units of symbol. How much resource of the base station is used and the like can be used as input information for training and inference.

(18) is UE traffic at a base station, for example. The UE traffic may be current traffic or may be predicted traffic. The UE traffic may be the number of UEs connected to the base station, for example, or may be, for example, the number of UEs using the base station. For example, the UE traffic may be the number of UEs connected to or using the base station, per base station, per cell group, per cell, per DU, or per TRP. How many UEs are connected to the base station and the like can be used as input information for training and inference.

(19) is the number of RRC_Idle UEs, for example. The number of UEs may be a current number of UEs or may be a predicted number of UEs. The number of RRC_Idle UEs may be limited to location registered (which may be referred to as registered) UEs, for example. For example, the number may be the number of UEs obtained by subtracting the number of UEs in an RRC-connected state and an RRC_Inacive state from the number of location registered UEs. For example, the number may be the number of RRC_Idle UEs per PLMN or per TA. For example, the number may be the number of RRC_Idle UEs in a paging notification area. For example, how many RRC_Idle UEs that have the possibility of performing RA processing are present and the like can be used as input information for training and inference.

(20) is the number of RRC_Inacitve UEs, for example. The number may be a current number of UEs or may be a predicted number of UEs. The number of RRC_Inactive UEs may be the number of UEs for which a base station holds UE context for RRC_Inactive, for example. For example, the number of RRC_Inactive UEs may be the number of UEs for which the base station has notified RRCRelease to RRC_Inactive. For example, the number may be the number of RRC_Inacive UEs per PLMN, per TA, or per RNA. For example, how many RRC_Inactive UEs that have the possibility of performing RA processing are present and the like can be used as input information for training and inference.

(21) is load information of the base station, for example. The load information may be current load information or may be predicted load information. The load information may be the number of data radio bearers (DRBs) configured by the base station, the buffer use amount, and the like, for example. Information on resources, information on the traffic of the UE, or load information other than the number of RRC_Idle and RRC_Inactive UEs disclosed in the above may be used as the load information. How much load the base station has and the like can be used as input information for training and inference.

(22) is information on UL interference at the base station, for example. For example, the information may be UL interference power derived from a UL signal received by the base station from the UE. For example, the information may be UL interference power from a UE not connected to the base station. The UL interference power may be an SINR. The UL interference power may be current interference power or may be predicted UL interference power. How much UL interference has occurred at the base station and the like can be used as input information for training and inference.

(23) may be an RIM measurement result at the base station, for example (refer to NPL 2, Section 17.1). Information on interference from another base station can be used as input information for training and inference.

(24) may be an RIM measurement result at a neighboring base station, for example.

(25) may be a measurement result of L2 measurement information by the UE, for example. The measurement result may be a current L2 measurement result or may be a predicted L2 measurement result. The L2 measurement information may be information measured by the UE described in NPL 32, for example. For example, the information may be a packet delay amount. The L2 measurement result by the UE may be an L2 measurement result by a UE connected to a base station by RA processing. For example, the L2 measurement result may be an L2 measurement result by the UE for a PCell, a PSCell, an SPCell, or an SCell connected by RA processing. (25) may include information on the location of the UE. The information may include information on time. The information on L2 measurement by the UE and the information on a location and time may be associated with each other. Information on performance of communication with a base station can be used as input information for training and inference.

(26) may be an L2 measurement result at a base station, for example. The L2 measurement result may be an L2 measurement result held by a neighboring base station. The measurement result may be a current L2 measurement result or may be a predicted L2 measurement result. The L2 measurement information by the base station may be information measured by the base station described in NPL 32, for example. For example, the information may be the number of received RA preambles, a packet delay amount, the number of UEs in a connected state, the number of stored contexts of UEs in an Inactive state, a packet loss rate, PRB information used for multiple input multiple output (MIMO), the number of PDCP packets in split DRB, the total radio access network (RAN) delay amount at split DRB, or the like. The L2 measurement result may be an L2 measurement result by a base station held by the neighboring base station. The L2 measurement result by the base station may be an L2 measurement result by the base station related to a UE. The L2 measurement result by the base station related to a UE may include information on the location of the UE. The information may include information on time. The information on L2 measurement by the base station related to the UE and the information on a location and time may be associated with each other. Information on performance of communication at the base station can be used as input information for training and inference.

(27) may be the QoS of the UE, for example. The QoS of may be a packet loss rate or delay time. For example, the QoS may be data communication quality. For example, the QoS may be reception quality of an SSB by the UE. For example, the QoS may be reception quality of a PDCCH and a PDSCH by the UE. The reception quality may be an RSRP, an RSRQ, an SINR, or a BER. The information on the performance of the UE may be information after establishment of connection to a base station by RA processing. The information may be information on performance that the UE is required. (27) may include information on the location of the UE. The information may include information on time. The information on performance of the UE and the information on a location and time may be associated with each other. The information on performance of the UE can be used as input information for training and inference.

(28) may be a QoE measurement result (referred to as an application layer measurement result in some cases), for example. The QoE measurement result may be information after establishment of connection to a base station by RA processing. The QoE measurement result may be information on QoE that the UE is required. (28) may include information on the location of the UE. The information may include information on time. The information on QoE and the information on a location and time of the UE may be associated with each other. A measurement result in the application layer of the UE can be used as input information for training and inference.

(29) may be propagation delay information between the UE and the cell, for example. The propagation delay information may be timing advance information, for example. The propagation delay information may be round trip time (RTT) information, for example. RTT may be a measurement value of a transmission-reception time difference, for example. For example, the propagation information may be information measured by the UE or may be information measured by a base station. The cell is not restrictive and may be a RAN node. For example, by using the propagation delay information, a more accurate distance between the UE and a base station and a more accurate location of the UE can be obtained.

The input information disclosed in the above may be current information or predicted information. By using predicted information as input information for AI/ML model, more effective future output information can be derived.

Input information disclosed in the above may be associated with a base station. The base station may be a base station, a cell, a cell group, a CU, a DU, a TRP, or the like, for example. By associating input information with a base station, for which base station the information is can be taken into account for the input information.

The input information disclosed in the above may be associated with information related to the state of the UE. As the information on the state of the UE, information disclosed in the above may be applied as appropriate. By associating input information with the state of the UE, for which state of the UE the input information is can be taken into account for the input information.

To perform RA processing, there may be some information known only by the UE. Examples of the information include received power (RSRP) for an SSB by the UE to be used to determine PRACH transmission power, pathloss derived from the received power, the number of times of PRACH retransmission, PRACH transmission power determined by using these, a selected RA resource, a time from PRACH transmission to RAR reception, a history of RA problems, and the like as those disclosed in example (7) of input information above. These are not configured by the base station but are determined or selected by the UE. By using such information as input information for AI/ML model, processing performed in the UE can be performed more effectively.

A RAN node may transmit input information for AI/ML model for RA processing, to a RAN node having an AI/ML model for RA processing. This notification may include information indicating what is indicated by the information. For example, information indicating that this is input information may be included. This facilitates distinguishing between input information and feedback information. The notification may include information indicating what is indicated by the input information. For example, information indicating that this is input information for training may be included. This facilitates distinguishing from another input information.

A base station having an AI/ML model for RA processing inputs input information for AI/ML model for RA processing disclosed in the above, to the AI/ML model for RA processing for training or for inference. In this way, more effective RA processing can be performed by using an AI/ML model for RA processing.

The base station transmits the input information for AI/ML model for RA processing to a neighboring base station. The base station may transmit the input information for AI/ML model for RA processing, to a base station having an AI/ML model for RA processing. The base station having an AI/ML model for RA processing may transmit a request for input information for AI/ML model for RA processing, to the neighboring base station. The request may include information on a UE targeted for the RA processing. The information on the UE may be an identifier of the UE. The base station that has received the request transmits the input information for AI/ML model for RA processing to the base station being the request source. Signaling between base stations may be used for transmission of input information for AI/ML model for RA processing and a request for the information between base stations. For example, Xn signaling may be used. For example, an Xn message may be provided for the transmission. For example, current information and predicted information may be transmitted in separate messages.

A DU transmits input information for AI/ML model for RA processing to a CU. The DU may transmit the input information for AI/ML model for RA processing, to a CU having an AI/ML model for RA processing. The CU may be a CU-control plane (CU-CP) or may be a CU-user plane (CU-UP). The CU having an AI/ML model for RA processing may transmit a request for input information for AI/ML model for RA processing, to the DU. The request may include information on a UE targeted for the RA processing. The information on the UE may be an identifier of the UE. The DU that has received the request transmits the input information for AI/ML model for RA processing to the CU being the request source. Inter CU-DU signaling may be used for transmission of input information for AI/ML model for RA processing and a request for the information between a CU and a DU. For example, F1 signaling may be used. For example, an F1 message may be provided for the transmission. For example, current information and predicted information may be transmitted in separate messages.

A CU-UP may transmit input information for AI/ML model for RA processing to a CU-CP. The CU-UP may transmit the input information for AI/ML model for RA processing, to a CU-CP having an AI/ML model for RA processing. The CU-CP having an AI/ML model for RA processing may transmit a request for input information for AI/ML model for RA processing, to the CU-UP. The request may include information on a UE targeted for the RA processing. The information on the UE may be an identifier of the UE. The CU-UP that has received the request transmits the input information for AI/ML model for RA processing to the CU-CP being the request source. Signaling between a CU-UP and a CU-CP may be used for transmission of input information for AI/ML model for RA processing and a request for the information between a CU-UP and a CU-CP. For example, E1 signaling may be used. For example, an E1 message may be provided for the transmission. For example, current information and predicted information may be transmitted in separate messages.

The UE transmits an input information for AI/ML model for RA processing to the base station. The UE may transmit the input information for AI/ML model for RA processing, to a base station having an AI/ML model for RA processing. The base station having an AI/ML model for RA processing may transmit a request for input information for AI/ML model for RA processing, to the UE. The request may include information on a UE targeted for the RA processing. The information on the UE may be an identifier of the UE. The UE that has received the request transmits the input information for AI/ML model for RA processing to the base station being the request source. A signaling between the UE and the base station may be used for transmission of input information for AI/ML model for RA processing and a request for the information between a UE and a base station. For example, RRC signaling may be used. As another method, MAC signaling may be used. Alternatively, L1/L2 signaling may be used. This may be included in UCI. A PUCCH may be used. The information or a request for the information can be transmitted early.

Transmission of the information or a request for the information between the UE and the base station may be performed after success in RA processing, for example. For example, the transmission may be performed in RRC connection procedure. Signaling required for the information or a request for the information can be reduced.

Transmission of the information between the UE and the base station may be performed even when no request for the information is received. For example, it may be assumed that transmission of the information is performed after success of RA processing. For example, transmission of the information may be performed after completion of RRC connection processing. Signaling required for a request for the information can be reduced.

When the base station has received input information from the UE, the base station may transmit the input information to a neighboring base station. The base station may transmit input information even when no request for input information is received from a neighboring base station. Signaling required for a request for the information can be reduced.

A combination of the transmission methods described above may be used for each request for the information or for each piece of information between the UE and the base station. A flexible configuration method is enabled.

Output information for AI/ML model for RA processing is disclosed. Information to be used for RA processing may be used as output information. 14 examples of the output information for AI/ML model for RA processing are disclosed below.

(1) Information on a trajectory of a UE.
(2) Information on RACH configuration.
(3) Priority of RACH configuration.
(4) Information on a base station candidate for which RA processing is performed.
(5) Probability of arrival to a base station candidate for which RA processing is performed.
(6) Connection time by RA processing.
(7) Information on a resource of a base station.
(8) Information on UE traffic.
(9) Information on RRC_Idle UEs.
(10) Information on RRC_Inactive UEs.
(11) Information on load of a base station.
(12) Information on UL interference.
(13) Information on propagation delay between a UE and a cell.
(14) Combination of (1) to (13).

(1) may be predicted future UE trajectory information, for example. The information on a trajectory of the UE may be information disclosed in Example (2) of input information for AI/ML model for RA processing. The information may include information on past and current trajectories. History information of past and current trajectories of the UE may be included together with the predicted future UE trajectory information. These pieces of information may be listed. (1) may include information on time. The information on a trajectory of the UE and the information on time may be associated with each other.

(2) is information on RACH configuration predicted by an AI/ML model. The information on RACH configuration may be information disclosed in Example (16) of input information for AI/ML model for RA processing. (2) may include predicted information on a location of the UE. (2) may include information on predicted time. The information on RACH configuration and the information on a location and time may be associated with each other. The number of pieces of information on RACH configuration may be not only one but also more than one. (2) may include prediction accuracy of information on RACH configuration predicted by an AI/ML model. A UE can use RACH configuration derived by the AI/ML model. More effective RA processing is enabled.

(3) is the priority of information on RACH configuration indicated by the information disclosed in (2). A priority may be provided to RACH configuration. Predicted RACH configuration and the priority of the RACH configuration may be associated. Priority is given to a plurality of respective output RACH configurations. For example, when an RA problem has occurred in the first RACH configuration, RA processing may be performed by using the RACH configuration of the next priority. More effective RA processing is enabled more flexibly.

(4) is information on a base station candidate for which predicted RA processing is performed. A base station candidate on which RA processing is to be performed may be provided. The number of base station candidates for performing RA processing may be not only one but also more than one. (4) may include information on a prediction accuracy of the base station candidate on which predicted RA processing is performed. For example, the UE can recognize on which base station RA processing is to be performed to be more effective.

(5) is information on the probability of arrival to a base station candidate for which predicted RA processing is performed. (5) may include information on a reliable section with respect to the probability of arrival to a base station candidate predicted by an AI/ML model. For example, the UE can recognize on which base station RA processing is to be performed to be more effective.

(6) is predicted information on connection time by RA processing. Predicted connection time by RA processing may be provided for each RACH configuration candidate, for example. For example, the connection time may be provided for each base station candidate for performing RA processing. For example, the UE can recognize on which base station RA processing is to be performed to be more effective.

(7) is predicted information on a resource state of the base station. The information on a resource state of the base station may be information disclosed in Example (17) of input information for AI/ML model for RA processing. The resource state of the base station may be a predicted resource state in a base station candidate. For example, a neighboring base station can recognize a predicted resource state of a base station on which RA processing has been performed.

(8) is predicted information on UE traffic. The information on UE traffic may be information disclosed in Example (18) of input information for AI/ML model for RA processing. The predicted information on UE traffic may be predicted UE traffic in a base station candidate. For example, a neighboring base station can recognize predicted UE traffic of a base station on which RA processing has been performed.

(9) may be predicted information on RRC_Idle UE, for example. The information on an RRC_Idle UE may be information disclosed in Example (19) of input information for AI/ML model for RA processing. For example, a neighboring base station can recognize the number of RRC_Idle UEs of a case where RA processing is performed.

(10) may be predicted information on RRC_Inactive UE, for example. The information on RRC_Inactive UE may be information disclosed in Example (20) of input information for AI/ML model for RA processing. For example, a neighboring base station can recognize the number of RRC_Inactive UEs in a case where RA processing is performed.

(11) may be predicted information on load of a base station, for example. The information on load of the base station may be information disclosed in Example (21) of input information for AI/ML model for RA processing. For example, a neighboring base station can recognize a load situation of the base station of a case where RA processing is performed.

(12) may be predicted information on UL interference, for example. The information on UL interference may be information disclosed in Example (22) of input information for AI/ML model for RA processing. The predicted information on UL interference may be predicted information on UL interference in a base station candidate. For example, the UE and a neighboring base station can recognize predicted information on UL interference of a base station on which RA processing has been performed.

(13) may be predicted information on propagation delay between a UE and a cell, for example. The information on propagation delay between the UE and the cell may be information disclosed in Example (29) of input information for AI/ML model for RA processing. The information may include information on past and current propagation delays between a UE and a cell. History information of past and current propagation delays between the UE and the cell may be included together with predicted information on the future propagation delay between the UE and the cell. These pieces of information may be listed. (13) may include information on time. The information on propagation delay between the UE and the cell and the information on time may be associated with each other. For example, the UE and a base station can recognize predicted information on propagation delay between the UE and the cell of a base station on which RA processing has been performed.

An offset may be provided to output information for AI/ML model for RA processing may be provided. An offset may be provided to one or some of or all of the pieces of output information disclosed in the above. An offset value is derived by an AI/ML model for RA processing. The offset may be provided for each UE. By adding a UE-dedicated offset to output information per cell, configuration can be performed in a UE-dedicated manner. Optimization of output information can be attempted in a UE-dedicated manner. The offset may be configured for each UE group. An offset may be configured for each certain group. For example, a UE group may be configured for those performing the same service. For example, a UE group may be configured for those present in the same area. Optimization of output information can be performed for each UE group. For example, the offset may be per base station, per cell group, per RNA, or per TA. A predicted offset may be provided. An offset value predicted by an AI/ML model for RA processing may be derived. In this way, a more flexible configuration of output information is enabled.

For example, an offset for PRACH transmission power derivation is provided. For example, a UE-dedicated offset is provided for target received power of a base station. For example, a UE-dedicated offset is provided for a ramping factor. Not only a positive value but also 0 or a negative value may be configurable as the offset value. In this way, an offset value per UE can be added to a RACH configuration configured for each cell, which enables a RACH configuration per UE. By providing an offset, a RACH configuration per cell can be used as it used to.

The offset value may be used as input information for AI/ML model for RA processing. An AI/ML model and an inference result in consideration of the offset value can be obtained.

As another method, output information for AI/ML model for RA processing per UE may be provided. One or some of or all of the pieces of output information disclosed in the above may be used as the output information per UE. As disclosed in the above, output information per UE group may be provided instead per UE. For example, UE-dedicated output information may be configured by RRC, and output information notified by an SIB may be updated. Flexible configuration of output information is enabled.

Information on a relationship between the state of a UE and the output information may be provided. The information may be a list. As the information on the state of the UE, information on the state of the UE disclosed for the input information described above may be applied as appropriate. For example, the information may be a list indicating a relationship between the location of the UE and RACH configuration information. For example, the information may be a list indicating a relationship between RA processing start time and RACH configuration information. The information on the state of the UE may be not only one but also a combination of a plurality of pieces of information disclosed in the above. In this way, the relationship between a state of the UE and the output information can be indicated.

A node having an AI/ML model may notify a node needing output information of information on the relationship between the state of the UE and the above output information in advance. The node needing output information may be a UE, for example. The node may be a base station, for example. In this way, for example, when a UE performs RA processing, notification from a base station to the UE is not needed. Even when the UE is in RRC_Idle or RRC_Inactive, the UE itself can judge which RACH configuration to use according to the state of the UE.

A RAN node that performs RA processing and a UE are notified of the output information of an AI/ML model for RA processing disclosed in the above, as appropriate. A node having an AI/ML model may notify a UE of the information via a RAN node to which the UE is connected most recently. The node having an AI/ML model may broadcast the information to UEs under the node. In this way, more effective RA processing can be performed by using an AI/ML model for RA processing. This notification may include information indicating what is indicated by the information. For example, information indicating that this is output information may be included. This facilitates distinguishing between input information and feedback information.

The base station transmits the output information for AI/ML model for RA processing to a neighboring base station. The base station having an AI/ML model for RA processing may transmit output information for AI/ML model for RA processing, to a base station related to RA processing. The base station related to RA processing may transmit a request for output information for AI/ML model for RA processing, to a base station having an AI/ML model for RA processing. The base station that has received the request transmits the output information for AI/ML model for RA processing to the base station being the request source. Signaling between base stations may be used for transmission of output information for AI/ML model for RA processing and a request for the information between base stations. For example, Xn signaling may be used. For example, an Xn message may be provided for the transmission.

A CU transmits output information for AI/ML model for RA processing to a DU. A CU having an AI/ML model for RA processing may transmit output information for AI/ML model for RA processing, to the DU. The DU may transmit a request for output information for AI/ML model for RA processing, to the CU having an AI/ML model for RA processing. The CU that has received the request transmits the output information for AI/ML model for RA processing to the DU being the request source. Inter CU-DU signaling may be used for transmission of output information for AI/ML model for RA processing and a request for the information between a CU and a DU. For example, F1 signaling may be used. For example, an F1 message may be provided for the transmission.

A base station transmits output information for AI/ML model for RA processing to a UE. A base station having an AI/ML model for RA processing may transmit output information for AI/ML model for RA processing, to the UE. A UE may transmit a request for output information for AI/ML model for RA processing, to the base station having an AI/ML model for RA processing. The base station that has received the request transmits the output information for AI/ML model for RA processing to the UE being the request source. Inter-UE-base station signaling may be used for transmission of output information for AI/ML model for RA processing and a request for the information between a UE and a base station. For example, RRC signaling may be used. As another method, MAC signaling or L1/L2 signaling may be used. The information or a request for the information can be transmitted early.

The base station may transmit configuration information per cell of the output information to the UE for each cell. For example, the information may be included in an SIB. The SIB may be broadcast. For example, the information may be transmitted to UEs under the cell by RRC signaling. Configuration information per cell can be changed easily, and optimization of RA processing per cell is enabled.

The base station may transmit configuration information per UE of the output information to the UE in a UE-dedicated manner. For example, the information may be transmitted by using individual RRC signaling, MAC signaling, or L1/L2 signaling. Transmission of configuration information per UE is enabled, and optimization of RA processing per UE is enabled.

These methods of transmitting output information may be combined. Flexible configuration of output information is enabled, and optimization of RA processing is further enabled.

Feedback information by RA processing using an AI/ML model for RA processing (this feedback information being referred to as "feedback information of RA processing using an AI/ML model for RA processing" below) will be disclosed. Information on performance of each node or communication by RA processing and the like may be used as the feedback information. 15 examples of the feedback information of RA processing using an AI/ML model for RA processing are disclosed below.

(1) Information on performance of a UE.
(2) Information on QoE of a UE.
(3) Information on L2 measurement of a UE.
(4) Information on L2 measurement from a base station.
(5) Information on RA processing of a UE.
(6) Information on an RA problem of a UE.
(7) Information on RLF due to an RA problem of a UE.
(8) Information on a resource of a base station.
(9) Information on UE traffic.
(10) Information on RRC_Idle UEs.
(11) Information on RRC_Inactive UEs.
(12) Information on load of a base station.
(13) Information on UL interference.
(14) Information on propagation delay between a UE and a cell.
(15) Combination of (1) to (14).

(1) may be Example (27) of input information for AI/ML model for RA processing above, for example.
(2) may be Example (28) of input information for AI/ML model for RA processing above, for example.
(3) may be Example (25) of input information for AI/ML model for RA processing above, for example.
(4) may be Example (26) of input information for AI/ML model for RA processing above, for example.
(5) may be Example (7) or (8) of input information for AI/ML model for RA processing above, for example.
(6) may be Example (9) or (10) of input information for AI/ML model for RA processing above, for example.
(7) may be Example (11) or (12) of input information for AI/ML model for RA processing above, for example.
(8) may be Example (17) of input information for AI/ML model for RA processing above, for example.
(9) may be Example (18) of input information for AI/ML model for RA processing above, for example.
(10) may be Example (19) of input information for AI/ML model for RA processing above, for example.
(11) may be Example (20) of input information for AI/ML model for RA processing above, for example.
(12) may be Example (21) of input information for AI/ML model for RA processing above, for example.
(13) may be Example (22) of input information for AI/ML model for RA processing above, for example.
(14) may be Example (29) of input information for AI/ML model for RA processing above, for example.
An RA processing node may notify a node having an AI/ML model for RA processing of the feedback information of RA processing using an AI/ML model for RA processing disclosed in the above, as appropriate. In this way, evaluation such as calculation of reward of an AI/ML model for RA processing is enabled, and update of the model is enabled. This enables more effective RA processing to be performed. This notification may include information indicating what is indicated by the information. For example, information indicating that this is feedback information may be included. This facilitates distinguishing between input information and output information.
The base station transmits feedback information of RA processing using an AI/ML model for RA processing to a neighboring base station. The base station related to RA processing may transmit the feedback information of RA processing using an AI/ML model for RA processing, to a base station having an AI/ML model for RA processing. The base station having an AI/ML model for RA processing may transmit a request for feedback information of RA processing using an AI/ML model for RA processing, to a base station related to RA processing. The base station that has received the request transmits the feedback information of RA processing using an AI/ML model for RA processing to the base station being the request source. Signaling between base stations may be used for transmission of feedback information of RA processing using an AI/ML model for RA processing and a request for the information between base stations. For example, Xn signaling may be used.
A DU transmits feedback information of RA processing using an AI/ML model for RA processing to a CU. A DU related to RA processing may transmit feedback information of RA processing using an AI/ML model for RA processing, to the CU. The DU related to RA processing may transmit the feedback information of RA processing using an AI/ML model for RA processing, to a CU having an AI/ML model for RA processing. The CU having an AI/ML model for RA processing may transmit a request for feedback information of RA processing using an AI/ML model for RA processing, to the DU. The DU that has received the request transmits the feedback information of RA processing using an AI/ML model for RA processing to the CU being the request source. Signaling between a CU and a DU may be used for transmission of feedback information of RA processing using an AI/ML model for RA processing and a request for the information between a CU and a DU. For example, F1 signaling may be used.

A UE transmits feedback information of RA processing using an AI/ML model for RA processing to a base station. The UE may transmit the feedback information of RA processing using an AI/ML model for RA processing, to a base station having an AI/ML model for RA processing. The base station having an AI/ML model for RA processing may transmit a request for feedback information of RA processing using an AI/ML model for RA processing, to the UE. The UE that has received the request transmits the feedback information of RA processing using an AI/ML model for RA processing to the base station being the request source. Inter-UE-base station signaling may be used for transmission of feedback information of RA processing using an AI/ML model for RA processing and a request for the information between a UE and a base station. For example, RRC signaling may be used. As another method, MAC signaling or L1/L2 signaling may be used. The information or a request for the information can be transmitted early.

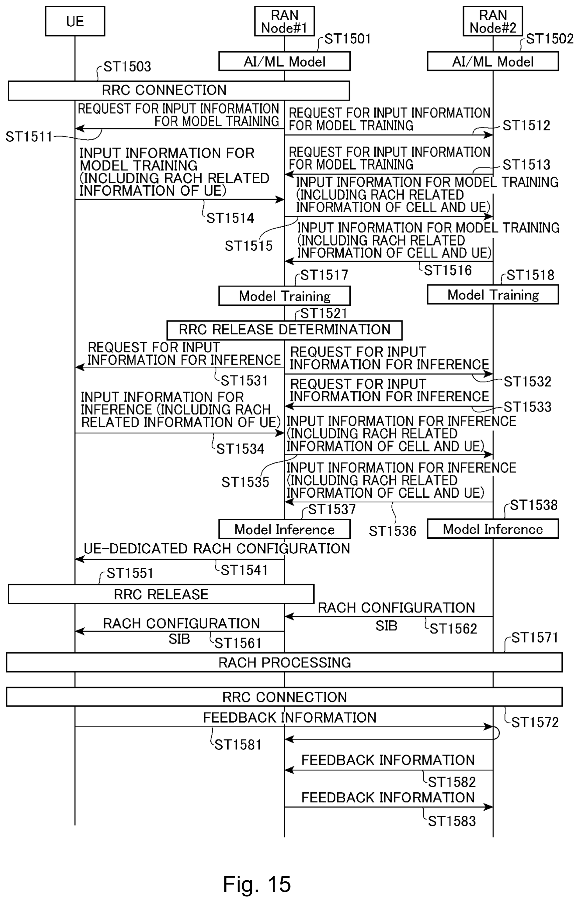

Fig. 15 is a diagram illustrating a sequence example of RA processing using AI/ML for RA processing according to Embodiment 1. An example where a RAN node has an AI/ML model for RA processing and performs training and inference is disclosed. The RAN node may be a base station, for example.

In Step ST1501 and Step ST1502, an AI/ML model for RA processing is provided in each of RAN nodes #1 and #2. An AI/ML model for RA processing may be provided to each of all the RAN nodes capable of performing AI/ML for RA processing. The same AI/ML model may be provided within a PLMN. The same model may be provided within an RNA. The same model may be provided within a certain area. In Step ST1503, a UE is in an RRC-connected state with RAN node #1. RAN node #1 having the AI/ML model for RA processing transmits a request for input information for model training, to the UE in Step ST1511 and to a neighboring RAN node (RAN node #2 in the example) in Step ST1512. Similarly, RAN node #2 having the AI/ML model for RA processing also transmits a request for input information for model training, to a neighboring RAN node (RAN node #1 in the example) and a UE connected to RAN node #2 (not illustrated in Fig. 15) in Step ST1513.

The request may be made in response to receipt of a request for input information for AI/ML model for RA processing from the neighboring RAN node. As another method, RAN node #1 may transmit a request for performance of model training to the neighboring RAN node. For example, when the RAN node itself has determined to perform model training, the RAN node may transmit a request for performance of model training to the neighboring RAN node. In this way, model training using an AI/ML model for RA processing can be performed even in the neighboring RAN node without being limited to RAN node #1.

The request may include information indicating necessary information. The request may include information indicating usage of the input information for AI/ML model for RA processing. For example, the request may include information indicating that the input information is for RA processing. For example, the request may include information indicating that the input information is for model training. For example, this is effective when information for model training is provided to the input information for AI/ML model for RA processing. For example, when information for model training, information for inference, and information for feedback are present in information held by the UE, the UE can quickly grasp information of which the RAN node is to be notified, and consequently quick notification from the UE to the RAN node is enabled.

For transmission of the request between the RAN node and the UE, RRC signaling may be used, for example. The request for input information for AI/ML model for RAN node may be included in a measurement configuration transmitted from the RAN node to the UE. A signaling amount can be reduced.

For transmission of the request between the RAN nodes, Xn signaling may be used, for example.

In Step ST1514 and Step ST1516, the UE and RAN node #2 each transmit input information for model training, to RAN node #1. RAN node #2 may transmit input information for model training acquired from the connected UE, to RAN node #1. This enables RAN node #1 to input information of the UE connected to RAN node #2, to the AI/ML model. In Step ST1515, RAN node #1 transmits input information for model training to RAN node #2. Although not illustrated in Fig. 15, the UE connected to RAN node #2 transmits input information for model training, to RAN node #2. RAN node #1 may transmit input information for model training acquired from the UE, to RAN node #2. This enables RAN node #2 to input information of the UE connected to RAN node #1, to the AI/ML model.

A measurement result by the UE may be transmitted to each RAN node in a measurement result report. The measurement result may be a radio measurement result, an L2 measurement result, or a measurement result by MDT. The measurement result by Logged MDT may be a result measured when the UE is in an RRC_Inactive or RRC_Idle state. These measurement results may be transmitted in the same signaling or may be transmitted in different signalings. The measurement result by the UE can be used as the input information for model training.

For transmission of the input information for model training between each RAN node and the UE, RRC signaling may be used, for example. For example, a UEInformationResponse message may be used. For example, a Measurement Report message may be used for transmission of a radio measurement result and an L2 measurement result. Complexity of processing can be prevented by using an existing message.

For transmission of the input information between the RAN nodes, Xn signaling may be used, for example.

In Step ST1517 and Step ST1518, RAN node #1 and RAN node #2 each use the input information for AI/ML model for RA processing held by the node itself and the pieces of input information for AI/ML model for RA processing acquired from the UE and the neighboring RAN node to perform training of the AI/ML model for RA processing. By the training, the AI/ML model for RA processing is updated. These processing steps may be performed as appropriate. This may be performed periodically or may be performed every time RA processing is performed by the node itself or the neighboring RAN node.

In Step ST1521, RAN node #1 determines to perform RRC release on the UE. In Step ST1531 and Step ST1532, RAN node #1 transmits a request for input information for inference, to the UE and the neighboring RAN node. Similarly, RAN node #2 having the AI/ML model for RA processing also transmits a request for input information for inference, to the neighboring RAN node and the UE connected to RAN node #2 (not illustrated in Fig. 15) in Step ST1533. The request may be made in response to receipt of a request for input information for AI/ML model for RA processing from the neighboring RAN node. As another method, RAN node #1 may transmit a request for performance of inference to the neighboring RAN node. For example, RAN node #1 that has determined RRC release for the UE may transmit a request for performance of inference to the neighboring RAN node. In this way, inference using an AI/ML model for RA processing can be performed even in the neighboring RAN node without being limited to RAN node #1.

The request may include information indicating necessary information. The request may include information indicating usage of the input information for AI/ML model for RA processing. For example, the request may include information indicating that the input information is for inference. For example, this is effective when information for inference is provided to the input information for AI/ML model for RA processing.

In Step ST1534 and Step ST1536, the UE and RAN node #2 each transmit input information for inference, to RAN node #1. RAN node #2 may transmit input information for inference acquired from the connected UE, to RAN node #1. This enables RAN node #1 to input information of the UE connected to RAN node #2, to the AI/ML model. In Step ST1535, RAN node #1 transmits input information for inference, to RAN node #2. Although not illustrated in Fig. 15, the UE connected to RAN node #2 transmits input information for inference, to RAN node #2. RAN node #1 may transmit input information for inference acquired from the UE, to RAN node #2. This enables RAN node #2 to input information of the UE connected to RAN node #1, to the AI/ML model.

As a method of transmitting a request for input information for AI/ML model for RA processing (corresponding to the request for input information for model training and the request for input information for inference illustrated in Fig. 15) and input information for AI/ML model for RA processing (corresponding to the input information for model training and input information for inference illustrated in Fig. 15), the method disclosed in the above may be applied as appropriate.

In Step ST1537 and Step ST1538, RAN nodes #1 and #2 each use the input information for AI/ML model for RA processing held by the node itself and the pieces of input information for AI/ML model for RA processing acquired from the UE and the neighboring base station to perform inference using the AI/ML model for RA processing. The RAN node derives output information for AI/ML model for RA processing through the inference.

In Step ST1541, RAN node #1 transmits output information for AI/ML model for RA processing to the UE. For example, RAN node #1 may transmit UE-dedicated output information. For example, RAN node #1 may transmit a UE-dedicated RACH configuration. For example, a UE-dedicated offset added to a RACH configuration of a cell may be transmitted. Before the UE switches to an RRC_Idle or RRC_Inactive state, for example, before the UE performs RRC release processing, or in the RRC release processing, processing for transmitting and receiving output information for AI/ML model for RA processing may be performed. In this way, the UE can acquire UE-specific output information.

The output information for AI/ML model for RA processing may be transmitted between the RAN nodes. RAN node #1 that has performed inference in Step ST1537 may transmit output information (inference result) to RAN node #2. RAN node #2 that has performed inference in Step ST1538 may transmit output information (inference result) to RAN node #1. Output information for AI/ML model for RA processing can be shared by the RAN nodes. RAN node #1 may transmit output information received from RAN node #2, to the UE. For example, the output information may be transmitted in Step ST1541. The UE can acquire the output information for AI/ML model for RA processing from each RAN node. For example, when the output information for AI/ML model for RA processing of RN node #1 and output information for AI/ML model for RA processing of RAN node #2 are different from each other, this may be effective.

In Step ST1551, RAN node #1 performs RRC release processing with the UE. The UE switches to an RRC_Idle or RRC_Inactive state.

In Step ST1561 and Step ST1562, RAN nodes #1 and #2 each transmit output information derived by using the AI/ML model for RA processing. For example, each RAN node transmits a RACH configuration. The output information may be included in an SIB for broadcasting, for example. These processing steps may be performed before the processing in Step ST1551. The processing steps may be performed after Step ST1537 and Step ST1538. In this way, RAN node #1 and the neighboring RAN node can each transmit output information for AI/ML model for RA processing, and the UE can perform RA processing by using the output information for AI/ML model for RA processing.

The UE determines RRC connection to the RAN node. The UE may move. In Step ST1571, the UE uses the output information for AI/ML model for RA processing received from RAN node #2 and/or the output information for AI/ML model for RA processing received from RAN node #1, to perform RA processing with RAN node #2. Fig. 15 illustrates a case where the UE selects RAN node #2. In this way, RA processing can be performed between the UE and RAN node #2 by using output information derived from the AI/ML model for RA processing.

In Step ST1572, the UE performs RRC connection processing with RAN node #2. Part of the RRC connection processing may be performed in RA processing. Through this step, the UE can switch to an RRC-connected state with RAN node #2. For example, data communication and the like between the UE and an NW are enabled.

In Step ST1581, the UE transmits feedback information of RA processing using an AI/ML model for RA processing to RAN node #2. The feedback information may include information on a RAN node to which the UE has been RRC-connected lastly. For example, the feedback information may include information identifying the RAN node. The RAN node that has received the information can recognize the RAN node to which the UE has been RRC-connected lastly. The feedback information can be transmitted to the RAN node.

As another method, the UE may transmit information for requesting transmission of feedback information to RAN node #2 by including this information in the feedback information or separately. In response to receipt of the information, RAN node #2 may transmit the feedback information to the neighboring RAN node. RAN node #2 may use the information on the RAN node to which the UE has been RRC-connected lastly received from the UE, to transmit the feedback information to RAN node #1. The UE can request transmission of feedback information from RAN node #2 to RAN node #1 as appropriate. Flexible control is enabled.

The transmission of feedback information in Step ST1581 may be performed when the UE has performed RA processing. By the UE performing RA processing, the transmission may be performed on the RRC-connected RAN node. In this way, the RAN node can acquire feedback information every time the UE performs RA processing.

As another method, RAN node #2 to which the UE has established connection through RA processing may transmit a request for feedback information to the UE. The UE that has received the request may transmit feedback information to RAN node #2. In this way, the UE can transmit feedback information to RAN node #2 as needed. Reduction of a signaling amount can be attempted.

In Step ST1581, RAN node #2 that has received the feedback from the UE transmits the feedback information for RAN node #1 from the UE. In Step ST1582, RAN node #2 transmits feedback information held by the RAN node itself to RAN node #1. In Step ST1583, RAN node #1 may transmit feedback information held by the RAN node itself to RAN node #2.

As a method of transmitting a request for feedback information for RA processing using an AI/ML model for RA processing (illustration omitted in Fig. 15) and feedback information for RA processing using an AI/ML model for RA processing (corresponding to the feedback information illustrated in Fig. 15), the method for input information disclosed in the above may be applied as appropriate.

A request for input information for AI/ML model for RA processing and a request for feedback information need not be used. Each node may transmit input information for AI/ML model for RA processing and feedback information to a node having an AI/ML model for RA processing. For example, the node may transmit such information regularly. For example, when the node has obtained new input information or feedback information, the node may transmit input information and feedback information. Reduction of a signaling amount can be attempted. When the node having an AI/ML model for RA processing has received the information from another node or the node itself, the node may transmit a request for input information to the node other than the node. Redundant signaling such as transmission of the same input information can be reduced.

As another method, any one of the RAN nodes may perform AI/ML model training. The RAN node that has performed the model training may transmit update information of the AI/ML model to the other RAN node. The other RAN node may update the AI/ML model by using the received update information of the model. The base station to which the UE has been RRC-connected lastly may perform AI/ML model inference and transmit output information to the UE through RRCRelease processing. In this way, processing using an AI/ML model as a system can be simplified.

In this way, each RAN node can acquire information on performance of RA processing using an AI/ML model for RA processing. The RAN node may use the feedback information for RA processing using an AI/ML model for RA processing held by the node itself and the pieces of feedback information for RA processing using an AI/ML model for RA processing acquired from the UE and the neighboring RAN node to evaluate effects of RA processing of a case of using an AI/ML model for RA processing.

In this way, by introducing AI/ML to RA processing, more effective RA processing is enabled.

By using a method as those disclosed in the present embodiment, training and inference in RA processing can be performed by using an AI/ML model. By deriving output information of an AI/ML model by using various kinds of input information, RA processing can be optimized. By providing a UE-dedicated RACH configuration, optimization of RACH configuration to be suitable for a state of a UE can be performed. Since more suitable RACH configuration is enabled, time required for establishing connection to a cell by RA processing by a UE can be shortened. Optimization of various kinds of KPIs in RA processing is enabled, such as reduction in UL interference, reduction in UE transmission power, and reduction in RA processing failure, in RA processing.

Alteration 1 of Embodiment 1

To solve the problem disclosed in Embodiment 1, another method of enabling efficient RA processing according to a communication state will be disclosed.

In this alteration, an AI/ML model for RA processing may be provided in a UE. A learning apparatus and an inference apparatus are provided in the UE. This enables the UE to derive configuration information necessary for RA processing by using the AI/ML model. The UE may be an IAB node. The IAB node constitutes an IAB-MT having a terminal function. For example, the AI/ML model for RA processing may be provided to the IAB-MT. This enables the IAB node to derive configuration information necessary for RA processing by using the AI/ML model.

Information disclosed in Embodiment 1 may be applied to each of input information, output information, and feedback information for AI/ML model for RA processing as appropriate. Similar effects can be obtained.

The UE may transmit information indicating whether or not the UE has an AI/ML model for RA processing (which may be information including the model), to a base station. For the transmission, RRC signaling may be used. The base station that has received the information from the UE may transmit the information indicating whether or not the UE has an AI/ML model for RA processing, to a neighboring base station. For the transmission, Xn signaling may be used. The UE may transmit information indicating whether or not the UE has an AI/ML model for RA processing, to a core network (CN) node (which may be a function). The base station that has received the information from the UE may transmit the information to a CN node. The CN node may be a network data analysis function (NWDAF), for example. The UE may transmit information indicating whether or not to have an AI/ML model for RA processing, to a node for management. The base station that has received the information from the UE or the CN node may transmit the information to a node for management. The node for management may be a management service (MnS) node or an operation, administration and management (OAM), for example. In this way, the base station notified of the information, the CN node, and the node for management can recognize whether or not the UE, which is a notification source, has an AI/ML model for RA processing. The base station, the CN node, and the node for management can recognize whether or not AI/ML can be introduced to the RA processing in the UE.

The UE receives input information for AI/ML model for RA processing from a RAN node. The RAN node may be the base station, for example. For example, a serving cell may be used. The UE may receive input information when being in an RRC-connected state. The UE may be switched to an RRC-connected state for the reception of input information. The UE may perform RRC connection processing on the RAN node. As another method, the UE may receive input information by using small data transmission (SDT) processing. This enables reception of input information without shifting to an RRC-connected mode. Reduction of a signaling amount can be attempted, and complexity of processing can be prevented.

The UE may transition to an RRC-connected state for training of an AI/ML model for RA processing. For example, the UE may receive input information for model training via the base station to which the UE is RRC-connected. As another method, the UE need not transition to an RRC-connected state for training of an AI/ML model for RA processing. For example, the UE may receive the input information for model training by using SDT processing.

Training of an AI/ML model for RA processing is performed as appropriate. For example, the training may be performed periodically. Update of the model is performed periodically. The periodicity may be defined statically such as in technical specifications or the like in advance, or may be notified from an NW node. As another method, training of an AI/ML model for RA processing may be performed when the UE has performed RA processing. The UE can receive input information for model training when the UE being RRC_Inactive or RRC_Idle is RRC-connected to a cell in which the UE has performed RA processing. As another method, training of an AI/ML model for RA processing may be performed when the UE has performed cell selection or cell re-selection. For example, model training may be performed when RNA update processing is performed. For example, model training may be performed when TA update processing is performed. The UE being RRC_Inactive or RRC_Idle can receive input information for model training when the UE is to establish an RRC connection with a new cell.

Inference using an AI/ML model for RA processing is performed when the UE starts RA processing. This may be performed when the UE is RRC_Idle or RRC_Inactive. Input information for inference may be limited to information on RA processing of the UE and/or information on a state of the UE. No input information from another node may be needed for inference in the UE.

An NW node may transmit a request for performance of model training to the UE. The NW node may transmit a request for performance of inference to the UE. As a method of transmitting the request, paging processing may be used. The request may be included in paging information to be transmitted from the base station. As another method, the base station may include the request in an SIB for broadcast. In this way, the NW node can transmit a request for performance of model training and inference to the UE. The UE can perform model training and inference in response to a request from the NW node. Judgment by the NW node can cause the UE to perform model training and inference.

The number of target UEs that perform model training and inference may be more than one without being limited to one. The target UE(s) may be a specific UE. For example, the target UE(s) may be a certain UE group. For example, the target UE(s) may be a UE group that provides the same service. For example, the target UE(s) may be a UE(s) under the base station. For example, the target UE(s) may be a UE(s) in an RNA. For example, the target UE(s) may be a UE(s) in a TA.

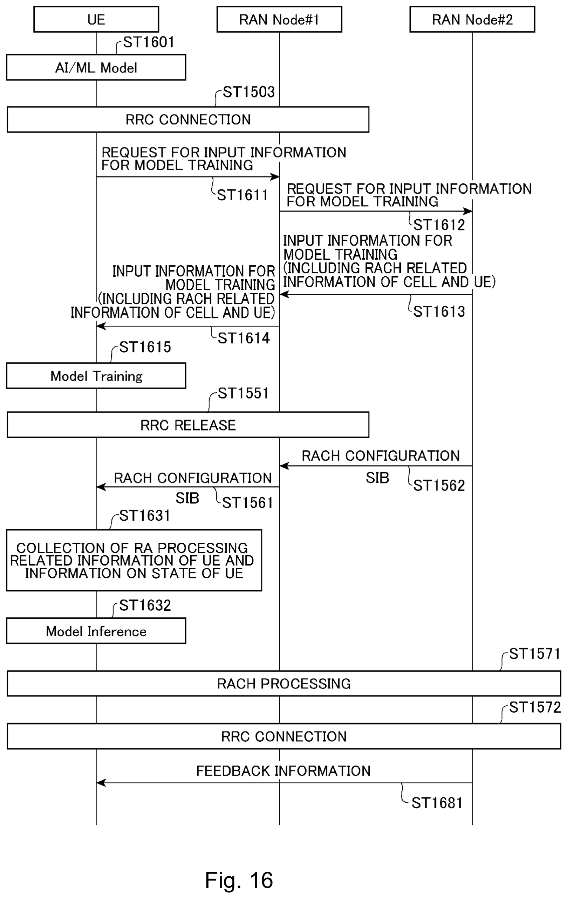

Fig. 16 is a diagram illustrating a sequence example of RA processing using AI/ML for RA processing according to Alteration 1 of Embodiment 1. An example where a UE has an AI/ML model for RA processing and performs training and inference is disclosed. The steps common to those of Fig. 15 are denoted by the same step numbers, and common description is omitted. In Step ST1601, an AI/ML model for RA processing is provided to a UE. In Step ST1503, a UE is in an RRC-connected state with RAN node #1.

In Step ST1611, the UE having the AI/ML model for RA processing transmits a request for input information for model training, to a connected RAN node (RAN node #1 in the example). In Step ST1612, RAN node #1 transmits a request for input information for model training to a neighboring RAN node (RAN node #2 in the example). The request may be made in response to receipt of a request for input information for AI/ML model for RA processing from the UE.

For information included in the request, any of the method disclosed in Embodiment 1 may be applied as appropriate. The request may include information indicating that the UE has an AI/ML model or information identifying the UE. The RAN nodes (including the neighboring RAN node) can quickly recognize information of which the UE is to be notified, and consequently quick notification from the RAN node to the UE is enabled.

For transmission of the request for input information and the input information between the RAN node and the UE, RRC signaling may be used, for example. The request for input information for AI/ML model for RAN node may be included in a measurement configuration transmitted from the RAN node to the UE. A signaling amount can be reduced.

For transmission of the request for input information and the input information between the RAN nodes, Xn signaling may be used, for example.

In Step ST1615, the UE uses the input information for AI/ML model for RA processing held by the UE itself and the input information for AI/ML model for RA processing acquired from the RAN node, to perform training of the AI/ML model for RA processing. By the training, the AI/ML model for RA processing is updated. These processing steps may be performed as appropriate. The training may be performed periodically. By performing training as appropriate, the AI/ML model is updated to be suitable for more effective RA processing.

In Step ST1551, RAN node #1 performs RRC release for the UE. Different from Embodiment 1, RAN node #1 may start, immediately after determining RRC release for the UE, RRC release processing, for example. The UE transitions to an RRC_Idle or RRC_Inactive state.

Prior to the RRC release processing in Step 1551, transmission and reception of input information for AI/ML for RA processing may be performed. For example, RAN node #1 may transmit input information for AI/ML for RA processing to the UE. For example, RAN node #1 may transmit input information for AI/ML for RA processing to RAN node #2. RAN node #2 that has received the request transmits the input information for AI/ML for RA processing to RAN node #1. RAN node #1 transmits the input information received from RAN node #2, to the UE. RAN node #1 may transmit input information of the RAN node itself and the input information from RAN node #2 together to the UE. The input information may be used for training of the AI/ML model or may be used for inference. In this way, the UE can input information received from the RAN node immediately before RRC release, to the AI/ML model. The period from reception of the input information from the RAN node to performance of RA processing by the UE can be shortened. Hence, especially in a case of using the input information for inference, output information for AI/ML model for more effective RA processing can be obtained.

In Step ST1561 and Step ST1562, RAN nodes #1 and #2 each transmit a RACH configuration.

The UE determines RRC connection to the RAN node. The UE may move. In Step ST1631, the UE collects input information for AI/ML model for RA processing in the UE itself. For example, information related to RA processing of the UE, information on the state of the UE, and the like are collected.

In Step ST1632, the UE uses the input information for AI/ML model for RA processing of the UE itself and/or the RACH configuration acquired from RAN node #1 to perform inference using the AI/ML model for RA processing. The UE derives output information for AI/ML model for RA processing through the inference. As the input information for inference, the UE may use the most recent input information for model training acquired from each of RAN node #1 and RAN node #2. A larger variety of kinds of input information can be input to the inference.

In Step ST1571, the UE performs RA processing with RAN node #2. The UE uses output information derived by using the AI/ML model for RA processing to perform RA processing. In this way, RA processing using AI/ML is enabled.

In Step ST1572, the UE performs RRC connection processing with RAN node #2. Part of the RRC connection processing may be performed in RA processing. Through this step, the UE can transition to an RRC-connected state with RAN node #2. For example, data communication and the like between the UE and an NW are enabled.

In Step ST1681, RAN node #2 transmits feedback information for RA processing using an AI/ML model for RA processing to the UE.

The transmission of feedback information in Step ST1681 may be performed when the UE has performed RA processing. By the UE performing RA processing, the transmission may be performed by the RRC-connected RAN node. In this way, the UE can acquire feedback information every time the UE performs RA processing.

The UE may transmit a request for feedback information to RAN node #2. RAN node #2 can explicitly recognize that the UE has requested feedback information. The request may include information on a RAN node to which the UE has been RRC-connected lastly. For example, the request may include information identifying the RAN node. RAN node #2 that has received the information can recognize the RAN node to which the UE has been RRC-connected lastly. RAN node #2 may request feedback information to the RAN node to which the UE has been RRC-connected lastly (RAN node #1 in the example). The request may include information on the UE that has performed RA processing. The request may include information identifying the UE. RAN node #1 that has received the request for feedback information transmits feedback information to RAN node #2. RAN node #2 may transmit the feedback information acquired from RAN node #1, to the UE. In this way, the UE can obtain the feedback information from RAN node #1 as well as the feedback information from RAN node #2. RAN node #2 may request feedback information to the neighboring RAN node without limiting to RAN node #1. The RAN node that has received the request transmits feedback information to RAN node #2. RAN node #2 may transmit the feedback information acquired from the neighboring RAN node, to the UE. In this way, the UE can obtain the feedback information from the neighboring RAN node of RAN node #2.

In this way, the UE can acquire information on performance of RA processing using an AI/ML model for RA processing. The UE may use the feedback information for RA processing using an AI/ML model for RA processing held by the UE itself and the feedback information for RA processing using an AI/ML model for RA processing acquired from each RAN node to evaluate effects of RA processing of a case of using an AI/ML model for RA processing.

A request for input information for AI/ML model for RA processing and a request for feedback information need not be used. Each node may transmit input information for AI/ML model for RA processing and feedback information to the UE having an AI/ML model for RA processing, as appropriate. For example, the node may transmit such information regularly. For example, when the node has obtained new input information or feedback information, the node may transmit input information and feedback information. Reduction of a signaling amount can be attempted. When the node having an AI/ML model for RA processing has received the information from another node or the node itself, the node may transmit a request for input information to a node other than the node. Redundant signaling such as transmission of the same input information can be reduced.

In this way, by introducing AI/ML to RA processing, more effective RA processing is enabled.

By using such a method as that disclosed in this alteration, effects similar to those in Embodiment 1 can be obtained. Since a UE can perform inference when staring RA processing, more suitable RA processing according to a state of the UE can be performed. Since the UE performs inference, it is possible to attempt to reduce a signaling amount for inference and simplify inference processing.

For a node to which an AI/ML model for RA processing is provided (a UE is also included in such a node in some cases in this specification), the methods disclosed in Embodiment 1 and this alteration may be combined. For example, a learning apparatus that performs training of an AM/ML model for RA processing is provided to a RAN node, and an inference apparatus is provided to a UE. The model training may be performed in the method disclosed in Embodiment 1, and the inference may be performed in the method disclosed in Alteration 1 of Embodiment 1. Input information necessary for the model training may be transmitted to the RAN node, and input information necessary for the inference may be transmitted to the UE. For example, the model training being performed based on pieces of input information from many RAN nodes can improve the accuracy of a model, and inference being performed by the UE can derive output information at timing closer to RA processing, which thereby enables more effective RA processing to be performed.

For example, an AI/ML model for RA processing may be provided in a RAN node and a UE. Input information for this model and feedback information may be transmitted between the RAN node and the UE. For example, by applying this to RA processing in the UE in an RRC_Connected state, more effective RA processing can be performed.

The methods disclosed in Embodiment 1 and this alteration may be applied to RA processing at the time when a UE is connected to an SCell, a PSCell or an SCell of SCG as well as a PCell of MCG. Such a method may be applied to RA processing at the time of connection to a cell. The method may be applied to RA processing performed by an IAB node. The method may be applied to RA processing performed by a UE in an RRC_Connected state as well as RA processing performed by a UE in an RRC_Idle or RRC_Inactive state. The method may be applied to RA processing at the time of connection to a RAN node being an HO destination or a RAN node being a DC destination of the UE. Similar effects can be achieved.

Embodiment 2.

In 3GPP, small data transmission (SDT) is supported (refer to NPL 2, Section 18). SDT is a function for enabling an RRC_INACTIVE UE to transmit and receive data without being shifted to RRC_CONNECTED. Hence, the UE can transmit and receive data early. For example, when data communication is needed intermittently, SDT, which enables data communication with low delay, is enabled and hence effective. However, SDT can be started only when a UL data amount is equal to or smaller than a certain threshold and received power is larger than a certain threshold. The UL data amount threshold and the received power threshold are configured by a base station. Optimization of the UL data amount threshold and the received power threshold to enable the RRC_INACTIVE UE to use SDT as much as possible is needed.

In the present embodiment, a method of enabling more efficient SDT processing according to a communication state will be disclosed.

In the present embodiment, AI/ML is introduced to SDT processing. For the SDT processing, configuration of a UL data amount threshold, a received power threshold, and a timer value for SDT, and the like may be used. Optimization of such configuration is performed by using AI/ML for the SDT processing.

For an AI/ML model, a learning apparatus, and an inference apparatus, the method disclosed in Embodiment 1 may be applied as appropriate.

In the present embodiment, an AI/ML model for SDT processing, which is an AI/ML model to be used for SDT processing, is provided in the base station. The learning apparatus and the inference apparatus may be provided in a base station. The AI/ML model for SDT processing may be provided in a RAN node. For example, the AI/ML model may be provided in a CU or provided in a DU. This enables configuration information necessary for SDT processing to be derived by the base station or each node by using the AI/ML model, which facilitates configuration.

For whether or not to have an AI/ML model for SDT processing, the method disclosed in Embodiment 1 may be applied as appropriate.

Input information for AI/ML model for SDT processing is provided. 25 examples of the input information for AI/ML model for RA processing are disclosed below.

(1) Information on a state of a UE.
(2) Information on a trajectory of a UE.
(3) Information on a base station to which a UE is connected.
(4) Information on a base station to which a UE is connected, the information being acquired from a neighboring base station.
(5) Information on cell selection or cell re-selection of a UE.
(6) Information on cell selection or cell re-selection of a UE, the information being acquired from a neighboring base station.
(7) Information on SDT processing of a UE.
(8) Information on SDT processing of a UE, the information being acquired from a neighboring base station.
(9) Information on expiration of a timer for SDT of a UE.
(10) Information on expiration of a timer for SDT of a UE, the information being acquired from a neighboring base station.
(11) Information on radio measurement of a UE.
(12) Information on MDT of a UE.
(13) Information on SDT configuration.
(14) Information on a resource of a base station.
(15) Information on UE traffic.
(16) Information on RRC_Idle UEs.
(17) Information on RRC_Inactive UEs.
(18) Information on load of a base station.
(19) Information on layer 2 (L2) measurement of a UE.
(20) Information on L2 measurement from a base station.
(21) Information on performance of a UE.
(22) Information on the quality of experience (QoE) of a UE.
(23) Information on performance of a base station.
(24) Information on propagation delay between a UE and a cell.
(25) Combination of (1) to (24).

To (1) to (6), Examples (1) to (6) of input information for AI/ML model for RA processing disclosed in Embodiment 1 may be applied respectively as appropriate. For Examples (3) and (5) of input information disclosed in Embodiment 1, description of RA processing may be replaced with SDT processing.

(7) may be information on SDT processing performed by the UE in the past, for example. For example, the information may be information indicating whether or not the SDT processing has been successful. For example, the information may be information of a base station for which the UE has performed the SDT processing. For example, the information may be information identifying the base station. For example, the information may be configuration information used by the UE for the SDT processing. The information may be history information of SDT processing performed by the UE in the past. For example, the information may be information derived by the UE to perform the SDT processing (referred to as UE derived information below). For example, the information may be a UL data amount, received power, or the like. The information may be history information of past UE derived information. For example, the information may be a list of pieces of the information. (7) may include information on the location of the UE. The information may include information on time. The information on SDT processing and the information on a location and time may be associated with each other. For example, for which base station the UE has performed SDT processing in the past can be used as input information.

(8) is information on SDT processing of the UE held by the neighboring base station, for example. The information on SDT processing of the UE may be information disclosed in (7).

(9) may be information on past expiration of the timer for SDT of the UE, for example. For example, the information may be history information of past occurrences of expiration of the timer for SDT of the UE. For example, the information may be information on a base station for which expiration of the timer for SDT of the UE has occurred in the past. For example, the information may be information on a configuration used for SDT processing in which expiration of the timer for SDT of the UE has occurred in the past. For example, the information may be a list of pieces of the information. (9) may include information on the location of the UE. The information may include information on time. The information on expiration of the timer for SDT and the information on a location and time may be associated with each other. For example, for which base station the UE has encountered an occurrence of a problem of expiration of the timer for SDT in the past and in which SDT configuration the UE has encountered an occurrence of expiration of the timer for SDT can be used as input information.

(10) is information on expiration of the timer for SDT of the UE in the past held by the neighboring base station, for example. The information on expiration of the timer for SDT of the UE may be information disclosed in (9).

To (11) and (12), Examples (13) and (14) of input information for AI/ML model for RA processing disclosed in Embodiment 1 may be applied respectively as appropriate.

(13) is information on SDT configuration of the base station, for example. The information may be a UL data amount threshold, a received power threshold, and a timer value for SDT, and the like, for example. The information may be information on current SDT configuration or may be information on past SDT configuration. For example, the information may be a list of pieces of the information. For example, the information may be an SDT configuration included in an SIB for transmission or may be an SDT configuration included in an RRCRelease message for transmission. For example, the information may be an SDT configuration configured for each cell or may be an SDT configuration configured for each UE. (13) may include information on the location of the base station. (13) may include information on time at which the SDT configuration has been performed. (13) may include information on load of the base station. The information on SDT configuration and the information on a location, time, and load may be associated with each other. For example, in which base station which SDT configuration is performed can be used as input information.

To (14) to (18), Examples (17) to (21) of input information for AI/ML model for RA processing disclosed in Embodiment 1 may be applied respectively as appropriate.

To (19) to (22), Examples (25) to (28) of input information for AI/ML model for RA processing disclosed in Embodiment 1 may be applied respectively as appropriate. For (19), the information "may be an L2 measurement result by a UE connected to a base station by RA processing. For example, the L2 measurement result may be an L2 measurement result by the UE for a PCell, a PSCell, an SPCell, or an SCell connected by RA processing" of input information (25) for AI/ML model for RA processing disclosed in Embodiment 1 may be interpreted as the information "may be an L2 measurement result by a UE having communicated with a base station by SDT processing. For example, the L2 measurement result may be an L2 measurement result by the UE for a PCell, a PSCell, an SPCell, or an SCell having communicated by SDT processing". For (21), the information "may be information after establishment of connection to a base station by RA processing" of input information (27) for AI/ML model for RA processing disclosed in Embodiment 1 may be interpreted as the information "may be input information after communication with a base station by SDT processing". For (22), the information "may be information after establishment of connection to a base station by RA processing" of input information (28) for AI/ML model for RA processing disclosed in Embodiment 1 may be interpreted as the information "may be input information after communication with a base station by SDT processing".

(23) may be information on throughput of a base station, for example. For example, the information may be information on delay time of the base station. For example, the information may be information on a packet loss rate of the base station. The information may be the total amount, the average, the largest value, or the smallest value, at the base station. For example, the information may be information limited to a connected UE, may be information limited to a UE having performed SDT processing, or may be information combining these. (23) may include information on the location of the base station. The information may include information on time. The information on performance of the base station and the information on a location and time may be associated with each other. Information on performance of the base station can be used as input information for training and inference.

To (24), Example (29) of input information for AI/ML model for RA processing disclosed in Embodiment 1 may be applied as appropriate.

The input information for AI/ML model for RA processing disclosed in the above may be current information or predicted information. By using predicted information as input information for AI/ML model, more effective future output information can be derived.

Input information for AI/ML model for RA processing disclosed in the above may be associated with a base station. The base station may be a base station, a cell, a cell group, a CU, a DU, a TRP, or the like, for example. By associating input information with a base station, for which base station the information is can be taken into account for the input information.

The input information for AI/ML model for RA processing disclosed in the above may be associated with information related to the state of the UE. As the information on the state of the UE, information disclosed in the above may be applied as appropriate. By associating input information with the state of the UE, for which state of the UE the input information is can be taken into account for the input information.

To perform SDT processing, there may be some information known only by the UE. For example, the information may be a UL data amount, received power, and the like as disclosed in Example (7) of input information. The UE judges whether or not to perform SDT processing by using these pieces of information. By using such information as input information for AI/ML model, processing performed by the UE can be performed more effectively.

A base station having an AI/ML model for SDT processing inputs input information for AI/ML model for SDT processing disclosed in the above, to the AI/ML model for SDT processing for training or for inference. In this way, more effective SDT processing can be performed by using an AI/ML model for SDT processing.

To a method of transmitting input information for AI/ML model for SDT processing between base stations, between a CU and a DU, or between a UE and a base station, the method of transmitting input information disclosed in Embodiment 1 may be applied as appropriate.

Output information for AI/ML model for SDT processing is disclosed. Information to be used for SDT processing may be used as output information. 13 examples of the output information for AI/ML model for SDT processing are disclosed below.

(1) Information on a trajectory of a UE.
(2) Information on SDT configuration.
(3) Priority of SDT configuration.
(4) Information on a base station candidate for which SDT processing is performed.
(5) Probability of arrival to a base station candidate for which SDT processing is performed.
(6) Communication time by SDT processing.
(7) Information on a resource of a base station.
(8) Information on UE traffic.
(9) Information on RRC_Idle UEs.
(10) Information on RRC_Inactive UEs.
(11) Information on load of a base station.
(12) Information on propagation delay between a UE and a cell.
(13) Combination of (1) to (12).

To (1), Example (1) of output information of AI/ML model for RA processing disclosed in Embodiment 1 may be applied as appropriate.

(2) is information on SDT configuration predicted by an AI/ML model. The information on SDT configuration may be information disclosed in Example (13) of input information for AI/ML model for SDT processing. (2) may include predicted information on a location of the UE. (2) may include predicted information on time. The information on SDT configuration and the information on a location and time may be associated with each other. The number of pieces of information on SDT configuration may be not only one but also more than one. (2) may include prediction accuracy of information on SDT configuration predicted by an AI/ML model. A UE can use SDT configuration derived by the AI/ML model. More effective SDT processing is enabled.

(3) is the priority of information on SDT configuration indicated by the information disclosed in (2). A priority may be provided to the SDT configuration. Predicted SDT configuration and the priority of the RACH configuration may be associated. Priorities are given to a plurality of respective output SDT configurations. For example, when expiration of a timer for SDT has occurred in the first SDT configuration, SDT processing may be performed by using the SDT configuration of the next priority. More effective SDT processing is enabled more flexibly.

To (4) and (5), Examples (4) and (5) of output information disclosed in Embodiment 1 may be applied respectively as appropriate. RA processing described in Examples (4) and (5) of output information of AI/ML model for RA processing disclosed in Embodiment 1 may be replaced with SDT processing.

(6) is predicted information on communication time by SDT processing. Predicted communication time by SDT processing may be provided for each SDT configuration candidate, for example. For example, the communication time may be provided for each base station candidate for performing SDT processing. For example, the UE can recognize on which base station SDT processing is to be performed to be more effective.

(7) is predicted information on a resource state of the base station. The information on a resource state of the base station may be information disclosed in Example (14) of input information for AI/ML model for SDT processing. The resource state of the base station may be a predicted resource state in a base station candidate. For example, a neighboring base station can recognize a predicted resource state of a base station on which SDT processing has been performed.

(8) is predicted information on UE traffic. The information on UE traffic may be information disclosed in Example (15) of input information for AI/ML model for SDT processing. The predicted information on UE traffic may be predicted UE traffic in a base station candidate. For example, a neighboring base station can recognize predicted UE traffic of a base station on which RA processing has been performed.

(9) may be predicted information on RRC_Idle UE, for example. The information on RRC_Idle UE may be information disclosed in Example (16) of input information for AI/ML model for SDT processing. For example, a neighboring base station can recognize the number of RRC_Idle UEs of a case where SDT processing is performed.

(10) may be predicted information on RRC_Inactive UE, for example. The information on RRC_Inactive UE may be information disclosed in Example (17) of input information for AI/ML model for SDT processing. For example, a neighboring base station can recognize the number of RRC_Inactive UEs of a case where SDT processing is performed.

(11) may be predicted information on load of a base station, for example. The information on load of the base station may be information disclosed in Example (18) of input information for AI/ML model for SDT processing. For example, a neighboring base station can recognize a load situation of the base station of a case where SDT processing is performed.

To (12), Example (13) of output information disclosed in Embodiment 1 may be applied as appropriate. RA processing described in Example (13) of output information of AI/ML model for RA processing disclosed in Embodiment 1 may be replaced with SDT processing.

An offset may be provided to output information for AI/ML model for SDT processing may be provided. A method of providing an offset to output information of AI/ML model for RA processing disclosed in Embodiment 1 may be applied as appropriate.

For example, an offset for each UE is provided for a UL data amount threshold. For example, an offset per UE is provided for a received power threshold. Not only a positive value but also 0 or a negative value may be configurable as the offset value. In this way, an offset value per UE can be added to an SDT configuration configured for each cell, which enables an SDT configuration per UE. By providing an offset, an SDT configuration per cell can be used as it used to.

The offset value may be used as input information for AI/ML model for SDT processing. An AI/ML model and an inference result in consideration of the offset value can be obtained.

As another method, output information for AI/ML model for SDT processing per UE may be provided. One or some of or all of the pieces of output information disclosed in the above may be used as the output information per UE. As disclosed in the above, output information per UE group may be provided instead per UE. For example, UE-specific output information may be configured by RRC, and output information notified by an SIB may be updated. Flexible configuration of output information is enabled.

Information on a relationship between the state of a UE and the output information may be provided. To a method of providing the information and a method of notifying the information, the method disclosed in Embodiment 1 may be applied as appropriate.

A RAN node and a UE that perform SDT processing are notified of the output information of an AI/ML model for SDT processing disclosed in the above, as appropriate. A node having an AI/ML model may notify a UE of the information via a RAN node to which the UE is connected most recently. The node having an AI/ML model may broadcast the information to UEs under the node. In this way, more effective SDT processing can be performed by using an AI/ML model for SDT processing. This notification may include information indicating what is indicated by the information. For example, information indicating that this is output information may be included. This facilitates distinguishing between input information and feedback information.

To a method of transmitting output information for AI/ML model for SDT processing between base stations, between a CU and a DU, or between a UE and a base station, the method of transmitting output information disclosed in Embodiment 1 may be applied as appropriate.

Feedback information by SDT processing using an AI/ML model for SDT processing (this feedback information being referred to as "feedback information of SDT processing using an AI/ML model for SDT processing" below) will be disclosed. Information on performance of each node or communication by SDT processing and the like may be used as the feedback information. 14 examples of the feedback information of SDT processing using an AI/ML model for SDT processing are disclosed below.

(1) Information on performance of a UE.
(2) Information on QoE of a UE.
(3) Information on L2 measurement of a UE.
(4) Information on L2 measurement from a base station.
(5) Information on SDT processing of a UE.
(6) Information on expiration of a timer for SDT of a UE.
(7) Information on a resource of a base station.
(8) Information on UE traffic.
(9) Information on RRC_Idle UEs.
(10) Information on RRC_Inactive UEs.
(11) Information on load of a base station.
(12) Information on performance of a base station.
(13) Information on propagation delay between a UE and a cell.
(14) Combination of (1) to (13).

(1) may be Example (1) of input information for AI/ML model for SDT processing above, for example.
(2) may be Example (22) of input information for AI/ML model for SDT processing above, for example.
(3) may be Example (19) of input information for AI/ML model for SDT processing above, for example.
(4) may be Example (20) of input information for AI/ML model for SDT processing above, for example.
(5) may be Example (7) or (8) of input information for AI/ML model for SDT processing above, for example.
(6) may be Example (9) or (10) of input information for AI/ML model for SDT processing above, for example.
(7) may be Example (14) of the input information for AI/ML model for SDT processing above, for example.
(8) may be Example (15) of input information for AI/ML model for SDT processing above, for example.
(9) may be Example (16) of input information for AI/ML model for SDT processing above, for example.
(10) may be Example (17) of input information for AI/ML model for SDT processing above, for example.
(11) may be Example (18) of input information for AI/ML model for SDT processing above, for example.
(12) may be Example (23) of input information for AI/ML model for SDT processing above, for example.
(13) may be Example (24) of input information for AI/ML model for SDT processing above, for example.
The feedback information disclosed in the above may be an increase or decrease amount. For example, the information may be an increase or decrease amount of the amount of UE traffic. For example, the information may be an increase or decrease value of the number of RRC_Inactive UEs.
An SDT processing node may notify a node having an AI/ML model for SDT processing of the feedback information of SDT processing using an AI/ML model for SDT processing disclosed in the above, as appropriate. In this way, evaluation such as calculation of reward of an AI/ML model for SDT processing is enabled, and update of the model is enabled. This enables more effective SDT processing to be performed.
To a method of transmitting SDT processing feedback information for AI/ML model for SDT processing between base stations, between a CU and a DU, or between a UE and a base station, the method of transmitting RA processing feedback information using an AI/ML model for RA processing disclosed in Embodiment 1 may be applied as appropriate.

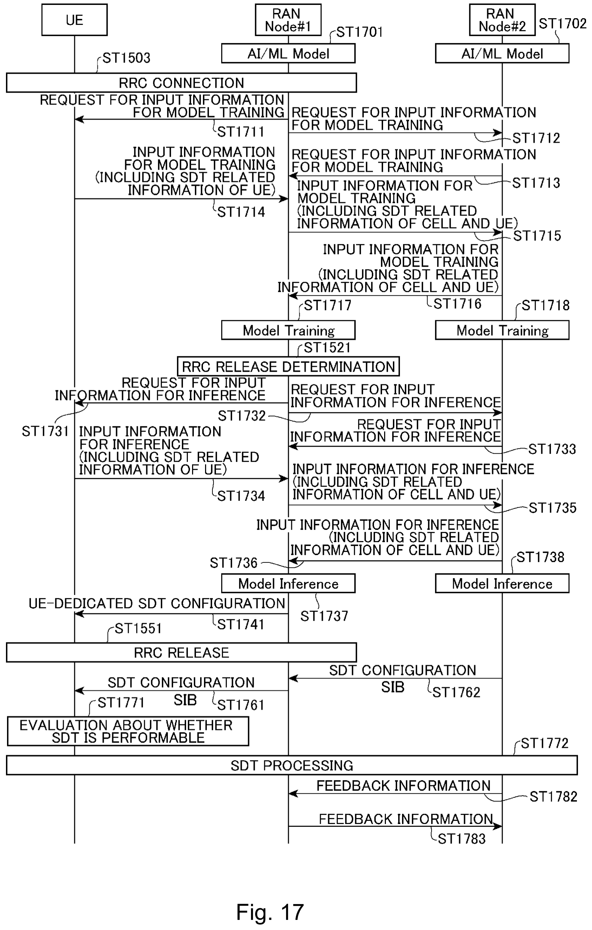

Fig. 17 is a diagram illustrating a sequence example of SDT processing using AI/ML for SDT processing according to Embodiment 2. An example where a RAN node has an AI/ML model for SDT processing and performs training and inference is disclosed. The RAN node may be a base station, for example. The steps common to those of Fig. 15 are denoted by the same step numbers, and common description is omitted.
In Step ST1701 and Step ST1702, an AI/ML model for SDT processing is provided in each of RAN nodes #1 and #2. An AI/ML model for SDT processing may be provided to each of all the RAN nodes capable of performing AI/ML for SDT processing. In Step ST1503, a UE is in an RRC-connected state with RAN node #1. RAN node #1 having the AI/ML model for SDT processing transmits a request for input information for model training, to the UE in Step ST1711 and to a neighboring RAN node (RAN node #2 in the example) in Step ST1712. Similarly, RAN node #2 having the AI/ML model for SDT processing also transmits a request for input information for model training, to a neighboring RAN node (RAN node #1 in the example) and a UE connected to RAN node #2 (not illustrated in Fig. 17) in Step ST1713.
The request may be made in response to receipt of a request for input information for AI/ML model for SDT processing from the neighboring RAN node. As another method, RAN node #1 may transmit a request for performance of model training to the neighboring RAN node. For example, when the RAN node itself has determined to perform model training, the RAN node may transmit a request for performance of model training to the neighboring RAN node. In this way, model training using an AI/ML model for SDT processing can be performed even in the neighboring RAN node without being limited to RAN node #1.

The request may include information indicating necessary information. The request may include information indicating usage of the input information for AI/ML model for SDT processing. For example, the request may include information indicating that the input information is for SDT processing. For example, the request may include information indicating that the input information is for model training. For example, this is effective when information for model training is provided to the input information for AI/ML model for SDT processing. For example, when information for model training, information for inference, and information for feedback are present in information held by the UE, the UE can quickly grasp information of which the RAN node is to be notified, and consequently quick notification from the UE to the RAN node is enabled.

For transmission of the request between the RAN node and the UE, RRC signaling may be used, for example. The request for input information for AI/ML model for RAN node may be included in a measurement configuration transmitted from the RAN node to the UE. A signaling amount can be reduced.

For transmission of the request between the RAN nodes, Xn signaling may be used, for example.

In Step ST1714 and Step ST1716, the UE and RAN node #2 each transmit input information for model training, to RAN node #1. RAN node #2 may transmit input information for model training acquired from the connected UE, to RAN node #1. This enables RAN node #1 to input information of the UE connected to RAN node #2, to the AI/ML model. In Step ST1715, RAN node #1 transmits input information for model training to RAN node #2. Although not illustrated in Fig. 17, the UE connected to RAN node #2 transmits input information for model training, to RAN node #2. RAN node #1 may transmit input information for model training acquired from the UE, to RAN node #2. This enables RAN node #2 to input information of the UE connected to RAN node #1, to the AI/ML model.

A measurement result by the UE may be transmitted to each RAN node in a measurement result report. The measurement result may be a radio measurement result, an L2 measurement result, or a measurement result by MDT. The measurement result by Logged MDT may be a result measured when the UE is in an RRC_Inactive or RRC_Idle state. These measurement results may be transmitted in the same signaling or may be transmitted in different signalings. The measurement result by the UE can be used as the input information for model training.

For transmission of the input information for model training between each RAN node and the UE, RRC signaling may be used, for example. For example, a UEInformationResponse message may be used. For example, a MeasurementReport message may be used for transmission of a radio measurement result and an L2 measurement result. Complexity of processing can be prevented by using an existing message.

For transmission of the input information between the RAN nodes, Xn signaling may be used, for example.

In Step ST1717 and Step ST1718, RAN node #1 and RAN node #2 each use the input information for AI/ML model for SDT processing held by the node itself and the pieces of input information for AI/ML model for SDT processing acquired from the UE and the neighboring RAN node to perform training of the AI/ML model for SDT processing. By the training, the AI/ML model for SDT processing is updated. These processing steps may be performed as appropriate. This may be performed periodically or may be performed every time SDT processing is performed by the node itself or the neighboring RAN node.

In Step ST1521, RAN node #1 determines to perform RRC release on the UE. In Step ST1731 and Step ST1732, RAN node #1 transmits a request for input information for inference, to the UE and the neighboring RAN node. Similarly, RAN node #2 having the AI/ML model for SDT processing also transmits a request for input information for inference, to the neighboring RAN node and the UE connected to RAN node #2 (not illustrated in Fig. 17) in Step ST1733. The request may be made in response to receipt of a request for input information for AI/ML model for SDT processing from the neighboring RAN node. As another method, RAN node #1 may transmit a request for performance of inference to the neighboring RAN node. For example, RAN node #1 that has determined RRC release for the UE may transmit a request for performance of inference to the neighboring RAN node. In this way, inference using an AI/ML model for SDT processing can be performed even in the neighboring RAN node without being limited to RAN node #1.

The request may include information indicating necessary information. The request may include information indicating usage of the input information for AI/ML model for SDT processing. For example, the request may include information indicating that the input information is for inference. For example, this is effective when information for inference is provided to the input information for AI/ML model for SDT processing.

In Step ST1734 and Step ST1736, the UE and RAN node #2 each transmit input information for inference, to RAN node #1. RAN node #2 may transmit input information for inference acquired from the connected UE, to RAN node #1. This enables RAN node #1 to input information of the UE connected to RAN node #2, to the AI/ML model. In Step ST1735, RAN node #1 transmits input information for inference, to RAN node #2. Although not illustrated in Fig. 17, the UE connected to RAN node #2 transmits input information for inference, to RAN node #2. RAN node #1 may transmit input information for inference acquired from the UE, to RAN node #2. This enables RAN node #2 to input information of the UE connected to RAN node #1, to the AI/ML model.

As a method of transmitting a request for input information for AI/ML model for SDT processing (corresponding to the request for input information for model training and the request for input information for inference illustrated in Fig. 17) and input information for AI/ML model for SDT processing (corresponding to the input information for model training and input information for inference illustrated in Fig. 17), the method disclosed in the above may be applied as appropriate.

In Step ST1737 and Step ST1738, RAN nodes #1 and #2 each use the input information for AI/ML model for SDT processing held by the node itself and the pieces of input information for AI/ML model for SDT processing acquired from the UE and the neighboring base station to perform inference using the AI/ML model for SDT processing. The RAN node derives output information for AI/ML model for SDT processing through the inference.

In Step ST1741, RAN node #1 transmits output information for AI/ML model for SDT processing to the UE. For example, RAN node #1 may transmit UE-dedicated output information. For example, RAN node #1 may transmit a UE-dedicated SDT configuration. For example, a UE-dedicated offset added to an SDT configuration of a cell may be transmitted. Before the UE switches to an RRC_Idle or RRC_Inactive state, for example, before the UE performs RRC release processing, or in the RRC release processing, processing for transmitting and receiving output information for AI/ML model for SDT processing may be performed. In this way, the UE can acquire UE-dedicated output information.

The output information for AI/ML model for SDT processing may be transmitted between the RAN nodes. RAN node #1 that has performed inference in Step ST1737 may transmit output information (inference result) to RAN node #2. RAN node #2 that has performed inference in Step ST1738 may transmit output information (inference result) to RAN node #1. Output information for AI/ML model for SDT processing can be shared by the RAN nodes. RAN node #1 may transmit output information received from RAN node #2, to the UE. For example, the output information may be transmitted in Step ST1741. The UE can acquire the output information for AI/ML model for SDT processing from each RAN node. For example, when the output information for AI/ML model for SDT processing of RN node #1 and output information for AI/ML model for SDT processing of RAN node #2 are different from each other, this may be effective.

In Step ST1551, RAN node #1 performs RRC release processing with the UE. The UE switches to an RRC_Idle or RRC_Inactive state.

In Step ST1761 and Step ST1762, RAN nodes #1 and #2 each transmit output information derived by using the AI/ML model for SDT processing. For example, each RAN node transmits an SDT configuration. The output information may be included in an SIB for broadcasting, for example. These processing steps may be performed before the processing in Step ST1551. The processing steps may be performed after Step ST1737 and Step ST1738. In this way, RAN node #1 and the neighboring RAN node can each transmit output information for AI/ML model for SDT processing, and the UE can perform SDT processing by using the output information for AI/ML model for SDT processing.

The UE determines RRC connection to the RAN node. The UE may move. In Step ST1771, the UE uses the output information for AI/ML model for SDT processing received from RAN node #2 and/or the output information for AI/ML model for SDT processing received from RAN node #1, to evaluate whether the SDT is performable. A RAN node to perform SDT processing may be determined. Fig. 17 illustrates a case where the UE selects RAN node #2. In this way, SDT processing can be performed between the UE and RAN node #2 by using output information derived from the AI/ML model for SDT processing.

In Step ST1772, the UE performs SDT processing with RAN node #2. Through this step, the UE can communicate with RAN node #2 without switching to an RRC-connected state. For example, data communication and the like between the UE and an NW are enabled.

The UE transmits feedback information of SDT processing using an AI/ML model for SDT processing to RAN node #2. The transmission of feedback information may be performed in SDT processing The feedback information may include information on a RAN node to which the UE has been RRC-connected lastly. For example, the request may include information identifying the RAN node. The RAN node that has received the information can recognize the RAN node to which the UE has been RRC-connected lastly. The feedback information can be transmitted to the RAN node.

As another method, the UE may transmit information for requesting transmission of feedback information to RAN node #2 by including this information in the feedback information or separately. The transmission of the information may be performed in SDT processing. In response to receipt of the information, RAN node #2 may transmit the feedback information to the neighboring RAN node. RAN node #2 may use the information on the RAN node to which the UE has been RRC-connected lastly received from the UE, to transmit the feedback information to RAN node #1. The UE can request transmission of feedback information from RAN node #2 to RAN node #1 as appropriate. Flexible control is enabled.

The transmission of feedback information may be performed when the UE has performed SDT processing. By the UE performing SDT processing, the transmission may be performed on the RRC-connected RAN node. In this way, the RAN node can acquire feedback information every time the UE performs SDT processing.

As another method, RAN node #2 to which the UE has established connection by using SDT processing may transmit a request for feedback information to the UE. The transmission of the request may be performed in SDT processing The UE that has received the request may transmit feedback information to RAN node #2. In this way, the UE can transmit feedback information to RAN node #2 as needed. Reduction of a signaling amount can be attempted.

In the SDT processing in Step ST1772, RAN node #2 that has received the feedback from the UE transmits the feedback information from the UE to RAN node #1. In Step ST1782, RAN node #2 transmits feedback information held by the RAN node itself to RAN node #1. In Step ST1783, RAN node #1 may transmit feedback information held by the RAN node itself to RAN node #2.

As a method of transmitting a request for feedback information for RA processing using an AI/ML model for SDT processing (illustration omitted in Fig. 17) and feedback information for SDT processing using an AI/ML model for SDT processing (corresponding to the feedback information illustrated in Fig. 17), the method for input information disclosed in the above may be applied as appropriate.

In this way, each RAN node can acquire information on performance of RA processing using an AI/ML model for SDT processing. The RAN node may use the feedback information for SDT processing using an AI/ML model for SDT processing held by the node itself and the pieces of feedback information for SDT processing using an AI/ML model for SDT processing acquired from the UE and the neighboring RAN node to evaluate effects of SDT processing of a case of using an AI/ML model for SDT processing.

A request for input information for AI/ML model for SDT processing and a request for feedback information need not be used. Each node may transmit input information for AI/ML model for RA processing and feedback information to a node having an AI/ML model for SDT processing. For example, the node may transmit such information regularly. For example, when the node has obtained new input information or feedback information, the node may transmit input information and feedback information. Reduction of a signaling amount can be attempted. When the node having an AI/ML model for SDT processing has received the information from another node or the node itself, the node may transmit a request for input information to a node other than the node. Redundant signaling such as transmission of the same input information can be reduced.

As another method, any one of the RAN nodes may perform AI/ML model training. The method disclosed in Embodiment 1 may be applied as appropriate. Processing using an AI/ML model as a system can be simplified.

In this way, by introducing AI/ML to SDT processing, more effective SDT processing is enabled.

By using a method as those disclosed in the present embodiment, training and inference in SDT processing can be performed by using an AI/ML model. By deriving output information of an AI/ML model by using various kinds of input information, SDT processing can be optimized. By providing a UE-dedicated SDT configuration, optimization of SDT configuration, for example, a UL data amount threshold, a received power threshold, and a timer for SDT, to be suitable for a state of a UE can be performed. More suitable SDT configuration is enabled. This enables an RRC_INACTIVE UE to use SDT as much as possible and thereby the UE to transmit and receive data early, for example. In SDT processing, optimization of various kinds of KPIs such as shortening of delay time, improvement of reliability, improvement of user experience, and the like is enabled.

In the above, it is disclosed that an AI/ML model for SDT processing may be provided in a RAN node. As another method, an AI/ML model for SDT processing may be provided in a UE. A learning apparatus and an inference apparatus may be provided to a UE. This enables the UE to derive configuration information necessary for SDT processing by using the AI/ML model.

To a method of providing an AI/ML model for SDT processing to a UE, the method of providing an AI/ML model for RA processing disclosed in Alteration 1 of Embodiment 1 to a UE may be applied as appropriate.

In this way, effects similar to those in the above can be achieved. Since a UE can perform inference when staring SDT processing, more suitable SDT processing according to a state of the UE can be performed. Since the UE performs inference, it is possible to attempt to reduce a signaling amount for inference and simplify inference processing.

For a node to which an AI/ML mode for SDT processing is provided, a method of providing the model to a RAN node and a method of providing the model to a UE may be combined. More effective SDT processing can be performed.

Embodiment 3.

A UE being RRC_Idle or RRC_Inactive is not connected to a base station. In communication processing performed by a UE in an RRC_Idle or RRC_Inactive state, such as cell selection processing or cell re-selection processing, for example, the UE uses information configured for each cell. Hence, the UE cannot perform communication processing suitable for a UE-specific state, which prevents more preferable communication performance from being obtained.

In the present embodiment, as a method for solving such a problem, a method of improving communication performance of a UE being RRC_Idle or RRC_Inactive in communication processing will be disclosed.

In the present embodiment, information provided to the UE or information acquired by the UE for communication processing by the UE being RRC_Idle or RRC_Inactive is associated with information on a state of the UE. The associated information is referred to as state-associated information in some cases. The number of pieces of information provided to the UE or information acquired by the UE may be not only one but also more than one. The number of pieces of information on a state of the UE may be not only one but also more than one. The state-associated information may be a list.

To the information on a state of the UE, Example (1) of input information for AI/ML model for RA processing disclosed in Embodiment 1 may be applied as appropriate. For example, the information may be the location, time, moving speed, moving direction, or the like of the UE.

Examples of the communication processing of the UE being RRC_Idle or RRC_Inactive include cell selection processing, cell re-selection processing, DRX processing, RA processing, SDT processing, early data transmission (EDT) processing, control plane CIoT 5GS optimization processing, and user plane CIoT 5GS optimization processing.

A base station transmits state-associated information to the UE. The UE may be a UE under the base station or an individual UE. The UE uses the state-associated information for communication processing in a state of being RRC_Idle or RRC_Inactive. The UE may use the state-associated information to derive information to be used for communication processing in a state of being RRC_Idle or RRC_Inactive. The UE uses the derived information for communication processing in a state of being RRC_Idle or RRC_Inactive. In this way, the UE can use information in consideration of the state of the UE itself at the time of starting communication processing in a state of being RRC_Idle or RRC_Inactive, to perform communication processing.

AI/ML may be introduced to communication processing of the UE being RRC_Idle or RRC_Inactive. AI/ML is used to derive configuration information for the communication processing. An AI/ML model used for the communication processing is referred to as an AI/ML model for communication processing. AI/ML may be used to derive state-associated information. The derived information may be AI/ML model output information.

In the present embodiment, an AI/ML model for communication processing is provided in a RAN node. The RAN node may be a base station, a CU, a DU, an IAB node, an IAB donor, or the like, for example. By providing the model to RAN, configuration information for communication processing configured by the RAN can be directly transmitted to the UE, for example. Complexity of processing can be avoided. To a method of providing an AI/ML model for communication processing of an RRC_Idle or RRC_Inactive UE to a RAN node, the method of providing an AI/ML model for RA processing to a RAN node disclosed in Embodiment 1 and the method of providing an AI/ML model for SDT processing to a RAN node disclosed in Embodiment 2 may be applied as appropriate. Information specific to each processing such as information on each processing of input information for AI/ML model may be information on individual communication processing described above (for example, cell selection processing, cell re-selection processing, or the like described above). As another method, the AI/ML model for communication processing may be provided to a CN node. The CN node may be an AMF, an NWDAF, or the like, for example. By providing the model to the CN node, this facilitates configuration of configuration information for communication processing for a UE moving across a plurality of RAN nodes, for example. As another method, the AI/ML model for communication processing may be provided to a node for management. The node for management may be an MnS node, an OAM, or the like, for example. By providing the model to the node for management, management and transmission of configuration information for communication processing is enabled together with management of the base station and the UE, for example. Control combined with another management is enabled. An examples of the control combined with another management is optimization of durability in movement. Similarly, a learning apparatus and an inference apparatus may be provided to a RAN node, may be provided to a CN node, or may be provided to a node for management. Similar effects can be obtained. The above-described methods may be combined. Flexible management of AI/ML is enabled.

The period of validity may be provided to configuration information for communication processing of the UE being RRC_Idle or RRC_Inactive. The period of validity may be a time limit. The period of validity may be a timer. The period of validity may be a year, a month, a day, a day of the week and the like without being limited to a time, a minute, and a second. The period of validity may be information on time used by an NW such as an HFN or an SFN. For example, the period of validity is started when the UE has received the configuration information, and the configuration information is no longer used upon expiration of the period of validity. Upon notification of new configuration information, the period of validity is started again, and communication processing is performed with the new configuration information. The base station may notify the UE of the period of validity. For example, the base station may include the period of validity in an SIB for transmission to a UE under the base station or for transmission by RRC signaling in a UE-dedicated manner. This enables consideration of radio wave propagation environment, load of the base station, and the like that change with time, for configuration information for communication processing of the UE being RRC_Idle or RRC_Inactive.

The period of validity of configuration information for communication processing of the UE being RRC_Idle or RRC_Inactive may be used as input information, output information, and feedback information for AI/ML model for communication processing of the UE being RRC_Idle or RRC_Inactive. An AI/ML model considering radio wave propagation environment, load of the base station, and the like that change with time can be used.

By using a method as that disclosed in the present embodiment, in communication processing of an RRC_Idle or RRC_Inactive UE, a state of the UE can be considered. Enabling consideration of a state per UE enables communication processing suitable for each UE. By introducing AI/ML to communication processing of the UE being RRC_Idle or RRC_Inactive, training and inference in communication processing in a state of RRC_Idle or RRC_Inactive by using an AI/ML model can be performed, which enables more effective communication processing.

In the above, it is disclosed that an AI/ML model for communication processing of the UE being RRC_Idle or RRC_Inactive may be provided to a RAN node. As another method, an AI/ML model for communication processing of the UE being RRC_Idle or RRC_Inactive may be provided in the UE. A learning apparatus and an inference apparatus may be provided to a UE. This enables the UE to use an AI/ML model to derive configuration information necessary for communication processing of the UE being RRC_Idle or RRC_Inactive.

To a method of providing an AI/ML model for communication processing of a UE being RRC_Idle or RRC_Inactive to a UE, the method of providing an AI/ML model for RA processing disclosed in Alteration 1 of Embodiment 1 to a UE may be applied as appropriate.

In this way, effects similar to those in the above can be obtained. Since a UE can perform inference when staring communication processing of a UE being RRC_Idle or RRC_Inactive, more suitable communication processing of a UE being RRC_Idle or RRC_Inactive according to a state of the UE can be performed. Since the UE performs inference, it is possible to attempt to reduce a signaling amount for inference and simplify inference processing.

For a node to which an AI/ML model for communication processing of a UE being RRC_Idle or RRC_Inactive is provided, a method of providing the model to a RAN node and a method of providing the model to a UE may be combined. More effective communication processing of a UE being RRC_Idle or RRC_Inactive can be performed.

In the above, it is disclosed that an AI/ML model for communication processing of a UE being RRC_Idle or RRC_Inactive is provided. However, the AI/ML model for communication processing may be provided for each individual communication processing (for example, cell selection processing, cell re-selection processing, or the like disclosed in the above) of a UE being RRC_Idle or RRC_Inactive.

Embodiment 4.

In 3GPP, IAB is supported (refer to NPLs 2, 20, and 29). An IAB node includes an IAB-mobile termination (MT) having a terminal function and an IAB-DU having a DU function. Selection of a parent IAB-DU of the IAB-MT is performed by an IAB-donor-CU, based on a measurement result from the IAB-MT. In such a method, only radio wave propagation environment between the IAB-MT and the parent IAB-DU is considered, the selected parent IAB-DU is not necessarily optimal in some state of the IAB node on a backhaul (BH) route (path) or some radio wave propagation environment between IAB nodes. For example, even when the radio wave propagation environment between the IAB-MT and the selected parent IAB-DU is the best, the radio wave propagation environment between the IAB node including the parent IAB-DU and the parent IAB node of the IAB node is poor in some cases. When the load of any of the IAB nodes on the BH route is high, for example, degradation in communication performance, such as decrease in throughput, occurs in communication using the BH route in some cases.

In the present embodiment, a method of enabling more efficient IAB processing according to a communication state to solve such a problem will be disclosed.

AI/ML is introduced to IAB processing. Examples of the IAB processing include BAP configuration processing and IAB node resource configuration processing. For example, the examples include IAB node integration processing, IAB-MT setup processing, IAB-DU setup processing, BH RLC channel establishment processing, and routing update processing. By using AI/ML, optimization of information necessary for the IAB processing is performed.

For an AI/ML model, a learning apparatus, and an inference apparatus, the method disclosed in Embodiment 1 may be applied as appropriate. In the following, an AI/ML model used for the IAB processing is referred to as an AI/ML model for IAB processing in some cases.

In the present embodiment, an AI/ML model for IAB processing, which is an AI/ML model to be used for IAB processing, is provided in the base station. The learning apparatus and the inference apparatus may be provided in a base station. The AI/ML model for IAB processing may be provided in a RAN node. For example, the AI/ML model may be provided to a CU or provided to a DU. The AI/ML model for IAB processing may be provided in an IAB donor. For example, the model may be provided in an IAB-donor-CU or may be provided in an IAB-donor-DU. This enables configuration information necessary for IAB processing to be derived by the base station or each node using the AI/ML model, which facilitates configuration.

For whether or not to have an AI/ML model for IAB processing, the method disclosed in Embodiment 1 may be applied as appropriate.

Input information for AI/ML model for IAB processing is provided. 22 examples of the input information for AI/ML model for IAB processing are disclosed below.

(1) Information on a state of an IAB node.
(2) Information on a trajectory of an IAB node.
(3) Information on an IAB node to which an IAB node is connected.
(4) Information on an IAB donor to which an IAB node is connected.
(5) Information on radio measurement of an IAB node.
(6) Information on MDT of an IAB node.

(7) Information on a BAP configuration of an IAB node.

(8) Information on a BH link.

(9) Information on a resource configuration of an IAB node.

(10) Information on a resource use amount of an IAB node.

(11) Information on UE traffic of an IAB node.

(12) Information on load of an IAB node.

(13) Information on inter-UE-NW communication using an IAB node.

(14) Information on resource collision at an IAB node.

(15) Information on communication quality of an IAB node.

(16) Information on layer 2 (L2) measurement of an IAB node.

(17) Information on layer 2 (L2) measurement of an IAB donor.

(18) Information on layer 2 (L2) measurement of a UE via an IAB node.

(19) Information on performance of a UE via an IAB node.

(20) Information on QoE of a UE via an IAB node.

(21) Information on propagation delay between IAB nodes.

(22) Combination of (1) to (21).

(1) may be the location, moving speed, moving direction of the IAB node, for example. The location of the IAB node may be coordinates, for example. For example, the location of the IAB node may be an area. For example, the location of the UE may be information identifying a TA, an RNA, a base station, a cell, a CU, a DU, or a TRP the coverage of which the UE is located in. For example, the location of the IAB node may be information identifying a TA, an RNA, a base station, a cell, a CU, a DU, or a TRP having the best reception quality (which may be the highest received power). (1) may be information on time. These pieces of information and the time may be combined. (1) may be the remaining battery level of the IAB node. (1) may be information on power consumption of the IAB node. These pieces of information may be combined. The state of the IAB node can be used as input information for training and inference.

In (2), to the information on a trajectory of the IAB node, the information on a state of an IAB node disclosed in (1) may be applied as appropriate, for example. For example, the information may be information on a connected IAB node disclosed in (3). For example, the information may be the information on a connected IAB donor disclosed in (4). The information may be information on past and current trajectories of the IAB node. The information on past and current trajectories of the IAB node may be history information. The information on the trajectory may be information on a future trajectory of the IAB node. The information on the future trajectory may be predicted information. These pieces of information may be listed. (2) may include information on time. The information on a trajectory of the IAB node and the information on time may be associated with each other. The information on a trajectory of the IAB node can be used as input information for training and inference.

(3) may be information of an IAB node to which the IAB node has been connected in the past, for example. The IAB node may be a parent IAB node or a child IAB node. The information on the IAB node may be information identifying the IAB node, for example. For example, the information may be information of an IAB node to which the IAB node has been connected in the past. For example, the information may be history information of an IAB node to which the IAB node has been connected in the past. For example, the information may be a list of pieces of information of the IAB node. (3) may include information on the location of the IAB node. The information may include information on time. Information of an IAB node to which the UE has been connected in the past and information on a location and time may be associated with each other. The IAB node to which the IAB node has been connected in the past may be limited to information of an IAB node to which the IAB node has been connected by IAB processing.

(4) may be information of an IAB donor to which the IAB node has been connected, for example. The connection may be a case of indirect connection without being limited to direct connection. For example, the information may be information of an IAB-donor node to which the IAB node has been connected via another IAB node. The IAB donor may be an IAB-donor CU or an IAB-donor DU. The information on the IAB donor may be information identifying the IAB node, for example. For example, the information may be configuration information of an IAB donor to which the IAB node has been connected in the past. For example, the information may be history information of an IAB donor to which the IAB node has been connected in the past. For example, the information may be a list of pieces of information of the IAB donor. (4) may include information on the location of the IAB node. The information may include information on time. Information of an IAB donor to which the IAB node has been connected in the past and information on a location of the IAB node and time may be associated with each other. The IAB donor to which the IAB node has been connected in the past may be limited to information of an IAB donor to which the IAB node has been connected by IAB processing.

(5) is a radio measurement result by the IAB node, for example. The IAB node may be an IAB-MT. The radio measurement result may be an RSRP, an RSRQ, or an SINR, for example. (5) may include information on the location of the IAB node. The information may include information on time. The radio measurement result and the information on a location and time may be associated with each other. Reception quality according to the location and the state of the IAB node can be used as input information for training and inference.

(6) is a measurement result by MDT by the IAB node, for example. The IAB node may be an IAB-MT. The IAB node may perform measurement by MDT. For example, the IAB node may perform measurement by immediate MDT or measurement by logged MDT. The IAB node may perform measurement by management-based MDT. The IAB node may perform measurement by signaling-based MDT. The IAB node may support a trace function. The IAB node may perform measurement by the trace function. The IAB node may associate a measurement result by MDT and the information on a location and time of the IAB node with each other. The information on a location and time of the IAB node may use information measured by MDT. By performing configuration of MDT on the IAB node, a measurement result by MDT can be obtained as input information for AI/ML model for IAB processing. More states and more pieces of information the IAB node can be used as input information for training and inference.

(7) is BAP configuration information configured for the IAB node, for example. Examples of the information include a BAP mapping configuration, a BH RLC channel configuration, and the like. Examples of the BAP mapping configuration include information on BH routing, information on traffic mapping, and the like. The information on BH routing is BAP routing information such as a BAP address and a path identifier, for example. The information on traffic mapping is information on mapping of BAP routing information and a BH RLC channel, for example. Information on the number of IAB nodes on a BH route may be provided. The information may be information per BH route. The information may be included in information on a BAP configuration. The information may be included in the information on BH routing. The information on a BAP configuration may be configured by an IAB-donor-CU. The BAP configuration information configured for the IAB node can be used as input information for training and inference.

(8) is the number of BH links configured for the IAB node, for example. For example, the information may be information identifying the BH links. For example, the information may be information indicating the number of BH links in use, the number of BH links not in use, which BH links are used, which BH links are not used, or the like. The information on a BH link in the IAB node can be used as input information for training and inference.

(9) is resource configuration information configured for the IAB node. Examples of the information include a configuration of a cell, information on an activated cell, information on a deactivated cell, information on a child IAB node, information on a cell of a neighboring node, and information on a serving cell. The information on a resource configuration may be configured by an IAB-donor-CU. The resource configuration information configured for the IAB node can be used as input information for training and inference.

(10) is the resource use amount of the IAB node, for example. The resource use amount may be the current resource use amount or may be a predicted resource use amount. For example, the resource use amount may be a resource use amount per IAB node, per cell group, per cell, per DU, or per TRP. The resource may be a frequency resource or may be a time resource. The frequency resource use amount may be the number of carriers, the number of RBs, the number of subcarriers, or the like. For example, the resource use amount may be a BWP use amount. The BWP use amount may be in units of carrier, may be in units of PRB, or may be in units of subcarrier. The time resource use amount may be the number of subframes, the number of slots, the number of symbols, or the like. The time resource use amount may be in units of subframe, may be in units of slot, or may be in units of symbol. How much resource of the base station is used and the like can be used as input information for training and inference.

(11) is UE traffic at an IAB node, for example. The UE traffic may be current traffic or may be predicted traffic. The UE traffic may be the number of UEs connected to the IAB node, for example, or may be the number of UEs using the IAB node, for example. For example, the UE traffic may be the number of UEs connected to or using the IAB node, per IAB node, per cell group, per cell, per DU, or per TRP. How many UEs are connected to the IAB node and the like can be used as input information for training and inference.

(12) is load information of the IAB node. The load information may be current load information or may be predicted load information. The load information may be the number of DRBs configured by the IAB node, the buffer use amount, or the like, for example. The information may be the number of child IAB nodes, the number of parent IAB nodes, or the like, for example. For example, the information may be the number of BH routes including the IAB node itself. The information may be load information other than the information on a resource use amount or the information on UE traffic disclosed in the above. How much load the IAB node has and the like can be used as input information for training and inference.

(13) is information on inter-UE-NW communication using an IAB node, for example. For example, the information may be the number of inter-UE-NW communications. For example, the information may be configuration information for inter-UE-NW communication. For example, the information may be information on a PDU session, information on a bearer, information on a slice, or the like. For example, the information may be the number of PDU sessions, PDU session configuration information, information identifying a PDU session, the number of bearers, bearer configuration information, information identifying a bearer, the number of slices, slice configuration information, information identifying a slice, or the like. A configuration for communication at the time of the UE performing communication with an NW via the IAB node can be used as input information for training and inference.

(14) is information on collision of a resource to a child IAB node and a resource to a parent IAB node, for example. The information is information on collision of a resource used for communication with the child IAB node and a resource used for communication between an IAB-MT and the parent IAB node (which may be an IAB donor) at an IAB-DU. The information on collision of resources may be information on interference, for example. The resources may be pieces of information disclosed in (9) and (10). For example, information on collision of resources scheduled by or scheduled for the IAB node can be used as input information for training and inference.

(15) is information on quality of communication between the IAB node and a parent IAB node, for example. For example, the information may be information on quality of communication between the IAB node and a child IAB node. The information may be information on quality of communication between the IA node and an IAB donor. For example, the information may be quality of communication between an IAB-MT and an IAB-donor CU. For example, the information may be quality of communication between the IAB-MT and an IAB-DU of the parent IAB node. For example, the information may be quality of communication between the IAB-DU and the IAB-donor-CU. For example, the information may be quality of communication between an IAB-DU and an IAB-MT of a child IAB node. The communication quality may be a packet loss rate or delay time, for example. For example, the QoS may be data communication quality. For example, quality of communication may be reception quality of an SSB transmitted from the IAB-DU at the IAB-MT. For example, the quality of communication may be reception quality of a PDCCH or a PDSCH transmitted from the IAB-DU at the IAB-MT. The reception quality may be an RSRP, an RSRQ, an SINR, or a BER. (15) may include information on the location of the IAB node. The information may include information on time. The information on communication quality of the IAB node and the information on a location and time may be associated with each other. The information on quality of communication between the IAB node and another IAB node or an IAB donor can be used as input information for training and inference.

(16) may be a measurement result of L2 measurement information by the IAB node, for example. The measurement result may be a current L2 measurement result or may be a predicted L2 measurement result. L2 measurement information may be information measured by a UE or information measured by a base station disclosed in Examples (25) and (26) of input information for AI/ML model for RA processing in Embodiment 1. The L2 measurement result by the IAB node may be an L2 measurement result of a case of being connected to an IAB donor, a parent IAB node, or a child IAB node by IAB processing. (16) may include information on the location of the IAB node. The information may include information on time. The information on L2 measurement by the IAB node and the information on a location and time may be associated with each other. The information on communication performance of the IAB node can be used as input information for training and inference.

(17) may be a measurement result of L2 measurement information by the IAB donor, for example. The measurement result may be a current L2 measurement result or may be a predicted L2 measurement result. The L2 measurement information may be information measured by a base station disclosed in Example (26) of input information for AI/ML model for RA processing in Embodiment 1. (17) may include information on the location of the IAB donor. The information may include information on time. The information on L2 measurement by the IAB donor and the information on a location and time may be associated with each other. The information on communication performance at the IAB donor can be used as input information for training and inference.

(18) may be a measurement result of L2 measurement information measured by a UE via the IAB node, for example. The measurement result may be a current L2 measurement result or may be a predicted L2 measurement result. The L2 measurement information may be information measured by a UE disclosed in Example (25) of input information for AI/ML model for RA processing in Embodiment 1, for example. For example, the information may be a packet delay amount. The L2 measurement result by the UE may be an L2 measurement result by a UE connected to an NW via the IAB node by IAB processing. (18) may include information on the location of the UE. The information may include information on time. The information on L2 measurement by the UE and the information on a location and time may be associated with each other. Information on communication performance at the time of the UE performing communication with an NW via the IAB node can be used as input information for training and inference.

(19) may be the QoS of the UE, for example. The QoS of may be a packet loss rate or delay time. For example, the QoS may be data communication quality. For example, the QoS may be reception quality of an SSB by the UE. For example, the QoS may be reception quality of a PDCCH and a PDSCH by the UE. The reception quality may be an RSRP, an RSRQ, an SINR, or a BER. The information on the performance of the UE may be information after establishment of connection to an NW via the IAB node by IAB processing. The information may be information on performance that the UE is required. (19) may include information on the location of the UE. The information may include information on time. The information on performance of the UE and the information on a location and time may be associated with each other. The information on performance of the UE can be used as input information for training and inference.

(20) may be a QoE measurement result, for example. The QoE measurement result may be information after establishment of connection to an NW via the IAB node by IAB processing. The QoE measurement result may be information on QoE that the UE is required. (20) may include information on the location of the UE. The information may include information on time. The information on QoE and the information on a location and time of the UE may be associated with each other. Measurement information in the application layer of the UE can be used as input information for training and inference.

(21) may be information on propagation delay between the IAB node and a parent IAB node or a child IAB node, for example. The information may be information on propagation delay between the IAB node and an IAB-donor-DU or between the IAB node and a UE, without being limited to between IAB nodes. The information on propagation delay may be the information on propagation delay disclosed in Example (29) of input information for AI/ML model for RA processing. For example, the information may be information measured by an IAB-MT or may be information measured by an IAB-DU. For example, the information may be information measured by the UE or may be information measured by an IAB-donor-DU. The information on propagation delay between IAB nodes may be information derived by an IAB-donor-CU. A more accurate distance between the IAB nodes and more accurate locations of the IAB nodes can be obtained.

The IAB nodes disclosed in the above may be IAB nodes targeted for IAB processing. Information on the IAB nodes can be used as input information for IAB processing using AI/ML. The IAB nodes may be part or all of the IAB nodes in a BH route. The information on IAB nodes included in the BH route can be used as input information for training and inference. The IAB nodes may be an IAB node targeted for IAB processing and a neighboring IAB node. The information on a neighboring IAB node as well as an IAB node targeted for IAB processing can be used as input information for training and inference. The IAB nodes may be part or all of the IAB nodes in a PLMN. The information on IAB nodes included in a PLMN supporting IAB can be used as input information for training and inference.

The input information disclosed in the above may be current information or predicted information. By using predicted information as input information for AI/ML model, more effective future output information can be derived.

The input information disclosed in the above may be associated with information related to the state of the IAB node. As the information on the state of the IAB node, information disclosed in the above may be applied as appropriate. By associating the input information with the state of the IAB node, for which state of the IAB node the input information is can be taken into account for the input information.

The input information disclosed in the above may be history information. IAB node history information may be provided. IAB-MT history information, IAB-DU history information, IAB-donor history information, IAB-donor-DU history information, and IAB-donor-CU history information may be provided. These pieces of history information include related input information. These pieces of history information may be included in history information of the UE. Information on whether not it is an IAB node and information identifying an IAB node may be included. This enables the IAB node and the UE to be identified. In this way, pieces of information on IAB nodes can be managed together, which can simplify processing. A method including information in history information of a UE can use existing processing related to UE history, which can prevent complexity of processing.

Input information for AI/ML model for IAB processing may be transmitted prior to model training and inference.

An IAB node transmits input information for AI/ML model for IAB processing to another IAB node. The IAB node may transmit the input information for AI/ML model for IAB processing, to an IAB node having an AI/ML model for IAB processing. The IAB node having an AI/ML model for IAB processing may transmit a request for input information for AI/ML model for IAB processing, to another IAB node. The request may include information on an IAB node targeted for the IAB processing. The information on the IAB node may be an identifier of the IAB node. The IAB node that has received the request transmits the input information for AI/ML model for IAB processing to the IAB node being the request source. RRC signaling may be used for transmission of input information for AI/ML model for IAB processing and a request for the information between IAB nodes. For example, an RRC message may be provided for the transmission. For example, current information and predicted information may be transmitted in separate messages.

An IAB donor may transmit input information for AI/ML model for IAB processing to another IAB donor. The IAB donor may be an IAB-donor-CU. The IAB donor may transmit the input information for AI/ML model for IAB processing, to an IAB donor having an AI/ML model for IAB processing. The IAB donor having an AI/ML model for IAB processing may transmit a request for input information for AI/ML model for IAB processing, to another IAB donor. The request may include information on an IAB donor targeted for the IAB processing. The information on the IAB donor may be an identifier of the IAB donor. The IAB donor that has received the request transmits the input information for AI/ML model for IAB processing to the IAB donor being the request source. Inter-base-station signaling may be used for transmission of input information for AI/ML model for IAB processing and a request for the information between IAB donors. For example, Xn signaling may be used. For example, an Xn message may be provided for the transmission. For example, current information and predicted information may be transmitted in separate messages.

An IAB-DU (which may be an IAB-donor-DU) may transmit input information for AI/ML model for IAB processing to an IAB-donor-CU. The IAB-DU may transmit the input information for AI/ML model for IAB processing, to an IAB-donor-CU having an AI/ML model for IAB processing. The IAB-donor-CU having an AI/ML model for IAB processing may transmit a request for input information for AI/ML model for IAB processing, to the IAB-DU. The request may include information on an IAB-DU targeted for the IAB processing. The information on the IAB-DU may be an identifier of the IAB node or an identifier of the IAB-DU. The IAB-DU that has received the request transmits the input information for AI/ML model for IAB processing to the IAB-donor-CU being the request source. Inter-DU-CU signaling may be used for transmission of input information for AI/ML model for IAB processing and a request for the information between the IAB-DU and the IAB-donor-CU. For example, F1 signaling may be used. For example, an F1 message may be provided for the transmission. For example, current information and predicted information may be transmitted in separate messages.

An IAB-MT may transmit input information for AI/ML model for IAB processing to an IAB-donor-CU. The IAB-MT may transmit the input information for AI/ML model for IAB processing, to an IAB-donor-CU having an AI/ML model for IAB processing. The IAB-donor-CU having an AI/ML model for IAB processing may transmit a request for input information for AI/ML model for IAB processing, to the IAB-MT. The request may include information on an IAB-MT targeted for the IAB processing. The information on the IAB-MT may be an identifier of the IAB node or an identifier of the IAB-MT. The IAB-MT that has received the request transmits the input information for AI/ML model for IAB processing to the IAB-donor-CU being the request source. RRC signaling may be used for transmission of input information for AI/ML model for IAB processing and a request for the information between the IAB-MT and the IAB-donor-CU. For example, an RRC message may be provided for the transmission.

Output information for AI/ML model for IAB processing is disclosed. Information to be used for IAB processing may be used as output information. 13 examples of the output information for AI/ML model for IAB processing are disclosed below.

(1) Information on a trajectory of an IAB node.
(2) Information on a BAP configuration of an IAB node.
(3) Information on a BH link.
(4) Information on a resource configuration of an IAB node.
(5) Priority of configuration.
(6) Information on a connected IAB node candidate.
(7) Probability of arrival to a connected IAB node candidate.
(8) Information on a resource use amount of an IAB node.
(9) Information on UE traffic of an IAB node.
(10) Information on load of an IAB node.
(11) Information on resource collision at an IAB node.
(12) Information on propagation delay between IAB nodes.
(13) Combination of (1) to (12).

(1) may be predicted future trajectory information of an IAB node, for example. The information on a trajectory of the IAB node may be information disclosed in Example (2) of input information for AI/ML model for IAB processing. The information may include information on past and current trajectories. History information of past and current trajectories of the IAB node may be included together with the predicted future trajectory information of the IAB node. These pieces of information may be listed. (1) may include information on time. The information on a trajectory of the IAB node and the information on time may be associated with each other.

(2) is information on BAP configuration predicted by an AI/ML model. The information on BAP configuration may be information disclosed in Example (7) of input information for AI/ML model for IAB processing. (2) may include predicted information on a location of the IAB node. (2) may include predicted information on time. The information on BAP configuration and the information on a location and time may be associated with each other. The number of pieces of information on BAP configuration may be not only one but also more than one. (2) may include prediction accuracy of information on a BAP configuration predicted by an AI/ML model. An IAB node can use BAP configuration derived by the AI/ML model. More effective IAB processing is enabled.

(3) is information on a BH link predicted by an AI/ML model. The information on a BH link may be information disclosed in Example (8) of input information for AI/ML model for IAB processing. (3) may include predicted information on a location of the IAB node. (3) may include predicted information on time. The information on a BH link and the information on a location and time may be associated with each other. The number of pieces of information on a BH link may be not only one but also more than one. (3) may include prediction accuracy of information on a BH link predicted by an AI/ML model. An IAB node can use a BH link derived by the AI/ML model. More effective IAB processing is enabled.

(4) is information on resource configuration predicted by an AI/ML model. The information on resource configuration may be information disclosed in Example (9) of input information for AI/ML model for IAB processing. (4) may include predicted information on a location of the IAB node. (4) may include predicted information on time. The information on resource configuration and the information on a location and time may be associated with each other. The number of pieces of information on resource configuration may be not only one but also more than one. (4) may include prediction accuracy of information on resource configuration predicted by an AI/ML model. An IAB node can use resource configuration derived by the AI/ML model. More effective IAB processing is enabled.

(5) is the priority of information on configurations indicated by the pieces of information disclosed in (2) to (4). Priorities may be provided to part or all of these pieces of information. Predicted configuration and the priority of the configuration may be associated. Priorities are given to a plurality of respective output configurations. For example, when communication interruption has occurred in BH in the first configuration, IAB processing may be performed by using the configuration of the next priority. More effective IAB processing is enabled more flexibly.

(6) is predicted information on a connected IAB node candidate. A connected IAB node candidate may be provided. The number of IAB node candidates may be not only one but also more than one. (6) may include information on the prediction accuracy of the predicted IAB node candidate to be connected. For example, it is possible to recognize to which IAB node the IAB node is to be connected to be more effective.

(7) is predicted information on the probability of arrival to a connected IAB node candidate. (7) may include information on a reliable section with respect to the probability of arrival to an IAB node candidate predicted by an AI/ML model. For example, the IAB node can recognize to which IAB node the IAB node is to be connected to be more effective.

(8) is predicted information on a resource use amount of a connected IAB node. The information on a resource use amount of the IAB node may be information disclosed in Example (10) of input information for AI/ML model for IAB processing. The resource use amount of the IAB node may be a predicted resource use amount in an IAB node candidate. For example, a neighboring IAB node can recognize a predicted resource use amount of an IAB node having performed IAB processing.

(9) is predicted information on UE traffic. The information on UE traffic may be information disclosed in Example (11) of input information for AI/ML model for IAB processing. The predicted information on UE traffic may be predicted UE traffic in an IAB node candidate. For example, a neighboring IAB node can recognize predicted UE traffic of an IAB node having performed IAB processing.

(10) may be predicted information on load of a connected IAB node, for example. The information on load of the IAB node may be information disclosed in Example (12) of input information for AI/ML model for IAB processing. For example, a neighboring IAB node can recognize a load state of an IAB node having performed IAB processing.

(11) is predicted information on resource collision of a connected IAB node candidate. The information on resource collision of the IAB node may be information disclosed in Example (14) of input information for AI/ML model for IAB processing. The information on resource collision of the IAB node may be predicted information on resource collision in an IAB node candidate. For example, a neighboring IAB node can recognize predicted information on resource collision of an IAB node having performed IAB processing.

(12) may be predicted information on future propagation delay between IAB nodes, for example. The information on propagation delay between IAB nodes may be information disclosed in Example (21) of input information for AI/ML model for IAB processing. The information may include information on past and current propagation delays between IAB nodes. History information of past and current propagation delays between the IAB nodes may be included together with predicted information on the future propagation delay between the IAB nodes. These pieces of information may be listed. (12) may include information on time. The information on propagation delay between the IAB nodes and the information on time may be associated with each other. For example, each IAB node can recognize predicted information on propagation delay of an IAB node having performed IAB processing.

An IAB node that performs IAB processing and an IAB-donor-DU are notified of the output information of an AI/ML model for IAB processing disclosed in the above, as appropriate. In this way, more effective IAB processing can be performed by using an AI/ML model for IAB processing.

To a method of transmitting output information for AI/ML model for IAB processing, a method of transmitting configuration information by IAB processing may be performed as appropriate.

An IAB-donor-CU may transmit output information for AI/ML model for IAB processing to an IAB node (which may be an IAB-donor-DU). An IAB-donor-CU having an AI/ML model for IAB processing may transmit output information for AI/ML model for IAB processing, to a an IAB-donor-DU and an IAB node related to IAB processing. The IAB-donor-DU and an IAB node related to IAB processing may transmit a request for output information for AI/ML model for IAB processing, to an IAB-donor-CU having an AI/ML model for IAB processing. The IAB-donor-CU that has received the request transmits the output information for AI/ML model for IAB processing to the IAB-donor-DU and the IAB node being the request sources. The request and the output information may include information on the IAB-donor-DU and the IAB node targeted for the IAB processing. The information may be an identifier. Inter-DU-CU signaling may be used for transmission of output information for AI/ML model for IAB processing and a request for the information between the IAB-donor-CU and each of the IAB-donor-DU and the IAB-DU in the IAB node. For example, F1 signaling may be used. For example, an F1 message may be provided for the transmission. RRC signaling may be used for transmission of output information for AI/ML model for IAB processing and a request for the information between the IAB-donor-CU and the IAB-MT in the IAB node. For example, an RRC message may be provided for the transmission.

Feedback information by IAB processing using an AI/ML model for IAB processing (this feedback information being referred to as "feedback information of IAB processing using an AI/ML model for IAB processing" below) will be disclosed. The feedback information is information on performance of communication between a UE and an NW, information on performance of an IAB node, information on performance of an IAB donor, or the like. Performance of an IAB node and performance of an IAB donor may be performance of an IAB node and performance of an IAB donor used for communication between a UE and an NW. 15 examples of the feedback information of IAB processing using an AI/ML model for IAB processing are disclosed below.

(1) Information on layer 2 (L2) measurement of a UE via an IAB node.

(2) Information on performance of a UE via an IAB node.

(3) Information on QoE of a UE via an IAB node.

(4) Information on a resource use amount of an IAB node.

(5) Information on UE traffic of an IAB node.

(6) Information on load of an IAB node.

(7) Information on inter-UE-NW communication using an IAB node.

(8) Information on resource collision at an IAB node.

(9) Information on communication quality of an IAB node.

(10) Information on layer 2 (L2) measurement of an IAB node.

(11) Information on layer 2 (L2) measurement of an IAB donor.

(12) Information on an IAB node to which an IAB node is connected.

(13) Information on an IAB donor to which an IAB node is connected.

(14) Information on propagation delay between IAB nodes.

(15) Combination of (1) to (14).

(1) to (3) may respectively be Examples (18) to (20) of input information for AI/ML model for IAB processing above, for example.

(4) to (11) may respectively be Examples (10) to (17) of input information for AI/ML model for IAB processing above, for example.

(12) and (13) may respectively be Examples (3) and (4) of input information for AI/ML model for IAB processing above, for example.

(14) may be Example (21) of input information for AI/ML model for IAB processing above, for example.

An IAB processing node and a UE may notify a node having an AI/ML model for IAB processing of the feedback information of IAB processing using an AI/ML model for IAB processing disclosed in the above, as appropriate. In this way, evaluation such as calculation of reward of an AI/ML model for IAB processing is enabled, and update of the model is enabled. This enables more effective IAB processing to be performed.

To a method of transmitting feedback information for IAB processing using an AI/ML model for IAB processing between base stations, between a CU and a DU, or between a UE and a base station, the method of transmitting input information disclosed in the above may be applied as appropriate.

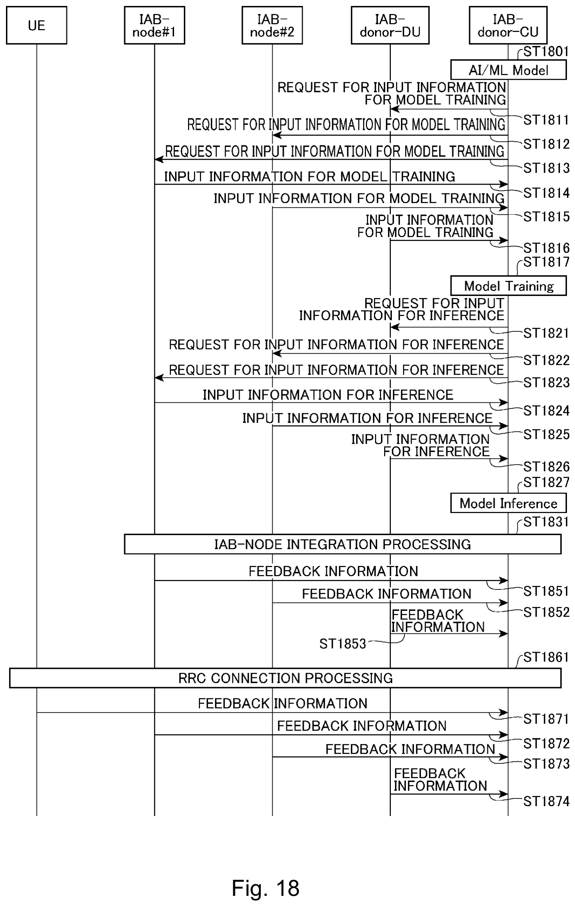

Fig. 18 is a diagram illustrating a sequence example of IAB processing using AI/ML for IAB processing according to Embodiment 4. An example where an IAB-donor-CU has an AI/ML model for IAB processing and performs training and inference is disclosed.

In Step ST1801, an AI/ML model for IAB processing is provided in an IAB-donor-CU. The IAB-donor-CU having the AI/ML model for IAB processing transmits a request for input information for model training, to an IAB-donor-DU, IAB node #2, and IAB node #1 in Step ST1811 to Step ST1813. The IAB donor-DU, IAB node #1, and IAB node #2 may be limited to those under the IAB-donor-CU.

The request may be performed in response to IAB processing. For example, the request may be performed in response to IAB node integration processing by an IAB node. For example, the request may be made in response to BAP configuration update processing, IAB node resource configuration update processing, or BH routing update processing, on the IAB node. Model training is enabled by input information in a state where a new IAB node is added or a state where a configuration is updated.

The request may include information indicating necessary information. The request may include information indicating usage of the input information for AI/ML model for IAB processing. For example, the request may include information indicating that the input information is for IAB processing. For example, the request may include information indicating that the input information is for model training. For example, this is effective when information for model training is provided to the input information for AI/ML model for IAB processing. For example, when information for model training, information for inference, and information for feedback are present in information held by the IAB node, the IAB node can quickly grasp information of which the IAB-donor-CU is to be notified, and consequently quick notification from the IAB node to the IAB-donor-CU is enabled.

For transmission of the request between the IAB-donor-CU and the IAB-donor-DU or the IAB node, F1 signaling may be used, for example. For transmission of the request between the IAB-donor-CU and the IAB node, RRC signaling may be used, for example. For example, a measurement configuration transmitted from the IAB-donor-CU to the IAB node may include a request for input information. A signaling amount can be reduced.

In Step ST1814 to Step ST1816, IAB node #1, IAB node #2, and the IAB-donor-DU each transmit input information for model training to the IAB-donor-CU. The IAB node and the IAB-donor-DU may transmit input information for model training acquired from the connected UE, to the IAB-donor-CU. This enables the IAB-donor-CU to input information of the UE connected to the IAB node and the IAB-donor-DU, to the AI/ML model.

Transmission of the input information between the IAB-donor-DU or the IAB node and the IAB-donor-CU, F1 signaling may be used, for example. For transmission of the input information between the IAB node and the IAB-donor-CU, RRC signaling may be used, for example.

A measurement result by the IAB node may be transmitted to the IAB-donor-CU in a measurement result report. The measurement result may be a radio measurement result or an L2 measurement result. These measurement results may be transmitted in the same signaling or may be transmitted in different signalings. The measurement result by the IAB node can be used as the input information for model training.

In Step ST1817, the IAB-donor-CU uses the input information for AI/ML model for IAB processing held by the node itself and the pieces of input information for AI/ML model for IAB processing acquired from the IAB node and the IAB-donor-DU, to perform training of the AI/ML model for IAB processing. By the training, the AI/ML model for IAB processing is updated. These processing steps may be performed as appropriate. This may be performed periodically or may be performed every time IAB processing is performed. By being performed periodically, change in a load state with time at the IAB node can be input as input information, as appropriate, for example. By being performed every time IAB processing is performed, input information in a state where a new IAB node is added or a state where a configuration is updated can be input as appropriate, for example. More optimal model training in an AI/ML model for IAB processing can be performed.

In Step ST1821 to Step ST1823, the IAB-donor-CU transmits a request for input information for inference, to the IAB-donor-DU, IAB node #2, and IAB node #1. The IAB donor-DU, IAB node #1, and IAB node #2 may be limited to those under the IAB-donor-CU. The request may be performed in response to IAB processing. By acquiring input information for inference by the request for input information for inference, the input information can be input to the AI/ML model for IAB processing, which can derive output information for IAB processing.

The request may include information indicating necessary information. The request may include information indicating usage of the input information for AI/ML model for IAB processing. For example, the request may include information indicating that the input information is for inference. For example, this is effective when information for inference is provided to the input information for AI/ML model for IAB processing.

In Step ST1824 to Step ST1826, IAB node #1, IAB node #2, and the IAB-donor-DU each transmit input information for inference to the IAB-donor-CU. The IAB node and the IAB-donor-DU may transmit input information for inference acquired from the connected UE, to the IAB-donor-CU. This enables the IAB-donor-CU to input information of the UE connected to the IAB node and the IAB-donor-DU, to the AI/ML model.

To a method of transmitting a request for input information for inference and input information for inference, a method of transmitting a request for input information for model training and input information for model training as disclosed in the above may be applied as appropriate.

In Step ST1827, the IAB-donor-CU uses the input information for AI/ML model for IAB processing held by the node itself and the input information for AI/ML model for IAB processing acquired from the IAB node and the IAB-donor-DU, to perform inference using the AI/ML model for IAB processing. The IAB-donor-CU derives output information for AI/ML model for IAB processing through the inference.

In Step ST1831, IAB processing is performed between the IAB-donor-CU, the IAB-donor-DU, IAB node #2, and IAB node #1. For example, IAB node integration processing of IAB node #1 is performed. The IAB-donor-CU transmits the output information for AI/ML model for IAB processing to the IAB-donor-DU, IAB node #2, and IAB node #1 in the IAB processing. For example, the IAB-donor-CU transmits BAP configuration information and IAB node resource configuration information to IAB node #1. For update of IAB node #2 and the IAB-donor-DU, the IAB-donor-CU may transmit output information to IAB node #2 and the IAB-donor-DU. In this way, the IAB node and the IAB-donor-DU used for IAB processing can acquire output information for AI/ML model for IAB processing. By using the output information, IAB processing can be performed among the IAB-donor-CU, the IAB-donor-DU, IAB node #2, and IAB node #1.

Transmission of the output information for AI/ML model for IAB processing from the IAB-donor-CU to the IAB-donor-DU, IAB node #2, and IAB node #1 may be performed separately from IAB processing. For example, the transmission may be performed before IAB processing. For example, the output information may be transmitted after derivation of the output information by an AI/ML model for IAB processing. IAB processing may be performed after transmission of output information for AI/ML model for IAB processing.

To a method of transmitting output information, a method of transmitting configuration information by IAB processing or a method of transmitting a request for input information for AI/ML model for IAB processing disclosed in the above may be applied as appropriate.

In Step ST1851 to Step ST1853, IAB node #1, IAB node #2, and the IAB-donor-DU each transmit feedback information for IAB processing using an AI/ML model for IAB processing to the IAB-donor-CU. The feedback information may include information identifying the IAB node itself and the IAB-donor-DU. The IAB-donor-CU that has received the information can recognize the node that has transmitted the feedback information.

In this way, the IAB-donor-CU can acquire information on performance of IAB processing using an AI/ML model for IAB processing. The IAB-donor-CU may use the feedback information for IAB processing using an AI/ML model for IAB processing held by the node itself and the feedback information for IAB processing using an AI/ML model for IAB processing acquired from each of IAB node #1, IAB node #2, and the IAB-donor-DU to evaluate effects of IAB processing of a case of using an AI/ML model for IAB processing.

To a method of transmitting feedback information, a method of transmitting input information for model training disclosed in the above may be applied as appropriate.

By using the IAB node configured in Step ST1831, communication between the UE and the NW may be performed. In Step ST1861, the UE performs RRC processing with the IAB-donor-CU via IAB node #1, IAB node #2, and the IAB-donor-DU. By using the RRC connection, communication is performed between the UE and the NW.

Information on performance between the UE and the NW may be used as feedback information. In Step ST1871 to Step ST1874, the UE, IAB node #1, IAB node #2, and the IAB-donor-DU each transmit feedback information for IAB processing using an AI/ML model for IAB processing to the IAB-donor-CU. The feedback information may include information identifying the UE, the IAB node itself, and the IAB-donor-DU. The IAB-donor-CU that has received the information can recognize the node that has transmitted the feedback information.

In this way, the IAB-donor-CU can acquire information on performance of communication between the UE and the NW performed via the IAB node and the IAB donor using output information derived from an AI/ML model for IAB processing. The IAB-donor-CU may use the feedback information for IAB processing using an AI/ML model for IAB processing held by the node itself and the feedback information for IAB processing using an AI/ML model for IAB processing acquired from each of the UE, IAB node #1, IAB node #2, and the IAB-donor-DU to evaluate effects of IAB processing of a case of using an AI/ML model for IAB processing.

To a method of transmitting feedback information, a method of transmitting input information for AI/ML model for IAB processing disclosed in the above may be applied as appropriate. For a method of transmitting feedback information from the UE to the IAB-donor-CU, RRC signaling may be used, for example.

Individual performance of transmission of feedback information on performance of IAB processing and transmission of feedback information on performance of communication between the UE and the NW via an IAB node has been disclosed. However, this is not restrictive, and transmissions of these pieces of feedback information may be combined. The transmissions of these pieces of feedback information may be performed in Step ST1871 to Step ST1874 after the RRC connection processing in Step ST1861, for example. As another method, part of the feedback information on the performance of IAB processing may be transmitted in Step ST1851 to Step ST1853, and the other part of the feedback information may be transmitted in Step ST1871 to Step ST1874 in combination with the feedback information on performance of communication between the UE and the NW. Various kinds of feedback information can be transmitted flexibly according to communication processing. By the IAB-donor-CU evaluating effects of IAB processing by using these pieces of feedback information, more effective IAB processing can be performed.

A request for input information for AI/ML model for IAB processing and a request for feedback information need not be used. Each node may transmit input information for AI/ML model for IAB processing and feedback information to a node having an AI/ML model for IAB processing. For example, the node may transmit such information regularly. For example, when the node has obtained new input information or feedback information, the node may transmit the input information and the feedback information. Reduction of a signaling amount can be attempted. When the node having an AI/ML model for IAB processing has received the information from another node or the node itself, the node may transmit a request for input information to a node other than the node. Redundant signaling such as transmission of the same input information can be reduced.

In this way, by introducing AI/ML to IAB processing, more effective IAB processing is enabled.

Another IAB-donor-CU may have an AI/ML model for IAB processing. For example, the IAB-donor-CU of a PLMN supporting IAB may have an AI/ML model for IAB processing. One or some or all of input information, a request for the input information, output information, and feedback information may be transmitted to and received from the other IAB-donor-CU. For the transmission and reception, Xn signaling may be used.

In this way, for example, even when IAB processing based on a change of a connected IAB-donor-CU due to move of an IAB node is performed, input information and feedback information of another IAB-donor-CU, an IAB node under the IAB-donor-CU, an IAB-donor-DU, and the like can be input to an AI/ML model for IAB processing. By further acquiring pieces of information on a larger number of nodes and inputting the pieces of information to the AI/ML model for IAB processing, output information suitable for various states of the IAB node and the UE performing communication by using these can be derived. By performing IAB processing by using the output information, more effective IAB processing can be performed.

By using a method as those disclosed in the present embodiment, training and inference in IAB processing can be performed by using an AI/ML model. By deriving output information of an AI/ML model by using various kinds of input information, IAB processing can be optimized. In a BAP configuration of the IAB node and a configuration of a BH route, information other than a measurement result by IAB-MT can be considered. For example, for which IAB node is to be included in the BH route, what to do with the configuration of the IAB node and a resource configuration, and the like, optimization of IAB processing suitable for a state of the IAB node is enabled. Since more effective IAB processing is enabled, improvement of performance of communication between the UE and the NW using IAB is enabled.

In Fig. 18, an example where an AI/ML model for IAB processing is provided to an IAB-donor-CU has been disclosed. As another method, an AI/ML model for IAB processing may be provided to an IAB node. A learning apparatus and an inference apparatus may be provided to an IAB node. This enables the IAB node to derive configuration information necessary for IAB processing by using the AI/ML model.

The IAB node having an AI/ML model for IAB processing may transmit a request for input information for AI/ML model for IAB processing and feedback information, to another IAB node, an IAB-donor-DU, and an IAB-donor-CU. The other IAB node, the IAB-donor-DU, and the IAB-donor-CU may transmit the input information for AI/ML model for IAB processing, and the feedback information to an IAB node having an AI/ML model for IAB processing.

The IAB node that has performed inference by using the AI/ML model for IAB processing and derived configuration information necessary for IAB processing may transmit output information including the configuration information to the IAB-donor-CU. For example, the output information may be transmitted in the IAB processing. For example, the output information may be transmitted before the IAB processing. In this way, the IAB-donor-CU can perform configuration for the IAB processing, on the IAB node and the IAB-donor-DU by using the output information.

As another method, an IAB node may transmit output information for AI/ML model for IAB processing to another IAB node, an IAB-donor-DU, and an IAB-donor-CU. For example, the output information may be transmitted in the IAB processing. For example, the output information may be transmitted before the IAB processing. In this way, each node can use the output information to perform IAB processing. For example, transmission of configuration information for IAB processing from the IAB-donor-CU to each node can be reduced.

An IAB node having an AI/ML model for IAB processing may perform, when having determined IAB processing, inference using the model. The IAB node may transmit, when having determined IAB processing, a request for input information for inference to each node. Each node may transmit input information for inference to the IAB node according to the request. The IAB node can derive output information for AI/ML model by using the input information for inference. In this way, for example, when the IAB node has determined IAB processing for IAB integration, the IAB node can derive configuration information for the IAB processing by using the AI/ML model. In this way, input information closer to IAB timing can be used. More effective IAB processing can be performed.

For a node to which an AI/ML mode for IAB processing is provided, a method of providing the model to an IAB-donor-CU and a method of providing the model to an IAB node may be combined. More effective IAB processing can be performed.

Alteration 1 of Embodiment 4.

In IAB, RLF occurs in BH in some cases. When BH RLF has occurred, an IAB node uses a new parent IAB node to perform RRC re-establishment. The IAB node performs BH route configuration and BAP configuration with an IAB-donor-CU by using the new parent IAB node. However, when the IAB node has moved, or due to change in neighboring environment with time, radio wave propagation environment changes between the IAB node and the parent IAB node and in a BH route using the new parent IAB node every moment. Hence, RRC re-establishment processing ends up with being failure in some cases. Even if the RRC re-establishment processing is successful, for example, when a communication state of a BH link deteriorates immediately, a problem that BH RLF occurs again and communication between a UE and an NW cannot be performed arises.

In this alteration, a method of solving such a problem will be disclosed.

AI/ML is introduced to BH RLF processing. Examples of the BH RLF processing include selection of a parent IAB node, BAP configuration processing, IAB node resource configuration processing and the like of a case where BH has RLF. Optimization of information to be used for selection of a parent IAB node and the like is performed by using AI/ML for BH RLF processing, for example.

For an AI/ML model, a learning apparatus, and an inference apparatus, the method disclosed in Embodiment 1 may be applied as appropriate.

In the present alteration, an AI/ML model for BH RLF processing, which is an AI/ML model to be used for BH RLF processing, is provided in a base station. The learning apparatus and the inference apparatus may be provided in a base station. The AI/ML model for BH RLF processing may be provided in a RAN node. For example, the AI/ML model may be provided in a CU or provided in a DU. The AI/ML model for BH RLF processing may be provided in an IAB donor. For example, the model may be provided in an IAB-donor-CU or may be provided in an IAB-donor-DU. This enables configuration information necessary for BH RLF processing to be derived by the base station or each node using the AI/ML model, which facilitates configuration.

For information on whether or not to have an AI/ML model for BH RLF processing, the method disclosed in Embodiment 1 may be applied as appropriate.

Input information for AI/ML model for BH RLF processing is provided. For example, the input information may be input information for AI/ML model for IAB processing or may be RLF-related information. Seven examples of the input information for AI/ML model for BH RLF processing are disclosed below.

(1) Input information for AI/ML model for IAB processing.
(2) Information on RLF detection.
(3) Information on RLF detection indication.
(4) Information on a BH link in an IAB node.
(5) Information on RLF recovery.
(6) Information on RLF recovery indication.
(7) Combination of (1) to (6).

(1) may be the example of input information for AI/ML model for IAB processing disclosed in Embodiment 4, for example.

(2) may be information indicating RLF of which BH link, for example. For example, the information may include information identifying the BH link. For example, the information may be information on an IAB node where BH RLF has occurred. For example, the information may include information identifying the IAB node. The IAB node may be a parent IAB node, a child IAB node, an IAB-donor-DU, or the like. For example, the information may be information indicating with which parent IAB node BH RLF has occurred. For example, the information may be information indicating in which path RLF has occurred. For example, the information may include information identifying the path. For example, the information may be a BAP path identifier. For example, the information may be a BAP routing identifier. Information on where RLF has been detected can be used as input information for training and inference. (2) may include information on time. The information on RLF detection and information on time may be associated with each other.

(3) may be transmission information of BH RLF detection indication, for example. The information may be information indicating to which child IAB node the RLF detection indication has been transmitted. For example, the information may be reception information of the RLF detection indication. The information may be information from which parent IAB node the RLF detection indication has been received. The information may include information identifying the IAB node. Information in which RLF detection indication has been transmitted and received can be used as input information for training and inference. (3) may include information on time. The information on RLF detection indication and information on time may be associated with each other.

(4) may be information on a BH link available for an IAB node, for example. For example, the information may be information on a BH link other than a BH link where BH RLF has occurred. For example, the information may be information on a BH link dis-available for the IAB node. For example, the information may be information on a BH link from which BH RLF detection has been received. A state of the BH link at the IAB node can be used as input information for training and inference. (4) may include information on time. The information on a BH link at the IAB node and the information on time may be associated with each other.

(5) may be information on BH RLF recovery, for example. For example, the information may be BH RLF recovery success information. For example, the information may be information on an IAB node where BH RLF recovery has been successful. The information may include information identifying the IAB node. For example, the information may be information indicating with which parent IAB node BH RLF recovery has been successful or information indicating with which child IAB node BH RLF recovery has been successful. The state of BH RLF recovery can be used as input information for training and inference. (5) may include information on time. Information on BH RLF recovery and information on time may be associated with each other.

(6) may be transmission information of BH RLF recovery indication, for example. The information may be information indicating to which child IAB node the BH RLF detection indication has been transmitted. For example, the information may be reception information of the BH RLF recovery indication. The information may be information from which parent IAB node the BH RLF recovery indication has been received. The information may include information identifying the IAB node. Information in which BH RLF recovery indication has been transmitted and received can be used as input information for training and inference. (6) may include information on time. The information on RLF recovery indication and information on time may be associated with each other.

The input information disclosed in the above may be current information or predicted information. By using predicted information as input information for AI/ML model, more effective future output information can be derived.

The input information disclosed in the above may be associated with information related to the state of the IAB node. As the information on the state of the IAB node, information disclosed in the above may be applied as appropriate. By associating input information with the state of the IAB node, for which state of the IAB node the input information is can be taken into account for the input information.

The input information disclosed in the above may be history information. BH RLF history information may be provided. The information may be included in IAB node history information, IAB-MT history information, IAB-DU history information, IAB-donor history information, IAB-donor-DU history information, IAB-donor-CU history information, UE history information, or the like. In this way, information on BH RLF can be managed in association with an IAB node, which can simplify processing. A method including information in history information of a UE can use existing processing related to UE history, which can prevent complexity of processing.

Input information for AI/ML model for BH RLF processing may be transmitted prior to model training and inference.

To a method of transmitting input information for AI/ML model for BH RLF processing, the method of transmitting input information disclosed in Embodiment 4 may be applied as appropriate.

Output information for AI/ML model for BH RLF processing is disclosed. Information to be used for BH RIF processing may be used as output information. Eight examples of the output information for AI/ML model for BH RLF processing are disclosed below.

(1) Output information for AI/ML model for IAB processing.
(2) Information on cell selection or cell re-selection.
(3) Information on a cell in which cell selection or cell re-selection is possible.
(4) Information on a frequency at which cell selection or cell re-selection is possible.
(5) Information on a BH route.
(6) Information on a BH link.
(7) Information on BH RLF configuration.
(8) Combination of (1) to (7).

(1) may be the example of output information for AI/ML model for IAB processing disclosed in Embodiment 4, for example.

(2) may be configuration information to be used for cell selection processing, for example. For example, the information may be configuration information to be used for cell re-selection processing. For example, the information may be a threshold of received power to be used for cell selection processing. For example, the information may be a threshold of a received power to be used for cell re-selection processing. For example, an offset may be provided to configuration information for cell selection processing. For example, an offset may be provided to configuration information for cell re-selection processing. An offset for an IAB node may be provided. For example, an offset related to a state of the IAB node may be provided. Cell selection processing and cell re-selection processing suitable for the IAB node can be performed.

The offset may be broadcast by an SIB or may be notified by RRC signaling. The offset may be included in configuration information for cell selection or configuration information for cell re-selection, for transmission. Information indicating that the offset is for an IAB node may be included. In cell selection processing and cell re-selection processing, operations of a normal UE and an IAB node can be different from each other. Cell selection processing and cell re-selection processing suitable for the IAB node can be performed.

(3) may be the cell of an IAB node capable of cell selection or cell re-selection, for example. For example, (3) may be a candidate for a cell of the IAB node capable of cell selection or cell re-selection. The number of cells may be not only one but also more than one. The number of IAB nodes may be not only one but also more than one. The information may include information identifying an IAB node. The information may include information identifying the cell. Priorities may be provided to IAB nodes. For example, the information may be information indicating the priority of an IAB node to perform cell selection or cell re-selection or information indicating the priority of a cell. For example, the information may be information that the IAB node connected lastly is prioritized. Since an IAB node and a cell or candidates for these can be specified in cell selection or cell re-selection processing by BH RLF, more effective processing can be performed.

(4) may be a carrier frequency at which cell selection or cell re-selection is possible, for example. For example, (4) may be a band at which cell selection or cell re-selection is possible. (4) may be a candidate for a carrier frequency or a band at which cell selection or cell re-selection is possible. The number of carrier frequencies or bands may be not only one but also more than one. (4) may include information identifying a carrier frequency or a band. For example, the information may be information indicating the priority of a carrier frequency or a band at which cell selection or cell re-selection is performed. For example, the information may be information that the carrier frequency for the last connection is prioritized. Since a carrier frequency and a band or candidates for these can be specified in cell selection or cell re-selection processing by BH RLF, more effective processing can be performed.

(5) may be a BH route configured for an IAB node in BH RLF recovery, for example. For example, (5) may be a candidate for the BH route. The BH route may be BAP path information, for example. The information may include information identifying a BAP path. For example, the information may be BAP routing information. The information may include information identifying BAP routing. The number of BH routes may be not only one but also more than one. For example, the information may be information indicating the priority of a BH route. For example, the information may be information that the BH route for the last connection is prioritized. Since a BH route or a candidate for that can be configured in BH RLF recovery, more effective processing can be performed.

(6) may be a BH link selected by an IAB node in BH RLF recovery, for example. For example, (6) may be a candidate for the BH link. (6) may include information identifying the BH link. The number of BH links may be not only one but also more than one. For example, (6) may be information indicating the priority of a BH link. For example, the information may be information that the BH link for the last connection is prioritized. Since a BH link or a candidate for that can be configured in BH RLF recovery, more effective processing can be performed.

(7) may be a timer to be used for BH RLF processing, for example. For example, for example, the timer may be a timer from detection of out-of- synchronization to start of RRC re-establishment due to the failure of synchronization. For example, the timer may be a timer from start of RRC re-establishment to shift to an RRC_Idle state due to a failure of cell selection. For example, the timer may be a counter for physical problem detection. For example, the timer may be a counter for out-of-sync or may be a counter for in-sync.

Information on a relationship between the state of an IAB node and the output information may be provided. The information may be a list. As the information on the state of the IAB node, information on the state of the IAB disclosed for the input information described above may be applied as appropriate. For example, the information may be a list indicating a relationship between the location of the IAB and information of cell selection. The information on the state of the IAB node may be not only one but also a combination of a plurality of pieces of information disclosed in the above. In this way, the relationship between a state of the IAB node and the output information can be indicated.

To a method of transmitting output information for AI/ML model for BH RLF processing, the method of transmitting input information disclosed in Embodiment 4 may be applied as appropriate.

An IAB node that performs BH RLF processing and an IAB-donor-DU are notified of the output information of an AI/ML model for BH RLF processing disclosed in the above, as appropriate. In this way, more effective BH RLF processing can be performed by using an AI/ML model for BH RLF processing.

Feedback information by BH RLF processing using an AI/ML model for BH RLF processing will be disclosed. The feedback information is information on performance of communication between a UE and an NW, information on performance of an IAB node, information on performance of an IAB donor, or the like. Performance of an IAB node and performance of an IAB donor may be performance of an IAB node and performance of an IAB donor used for communication between a UE and an NW, respectively. The information may be information on performance after BH RLF. Input information for AI/ML model for BH RLF processing disclosed in the above may be applied as appropriate. Feedback information for IAB processing using an AI/ML model for IAB processing disclosed in Embodiment 4 may be applied as appropriate.

A BH RLF processing node and a UE may notify a node having an AI/ML model for BH RLF processing of the feedback information of BH RLF processing using an AI/ML model for BH RLF processing disclosed in the above, as appropriate. In this way, evaluation such as calculation of reward of an AI/ML model for BH RLF processing is enabled, and update of the model is enabled. This enables more effective BH RLF processing to be performed.

To a method of transmitting feedback information for BH RLF processing using an AI/ML model for BH RLF processing between base stations, between a CU and a DU, or between a UE and a base station, the method of transmitting input information disclosed in the above may be applied as appropriate.

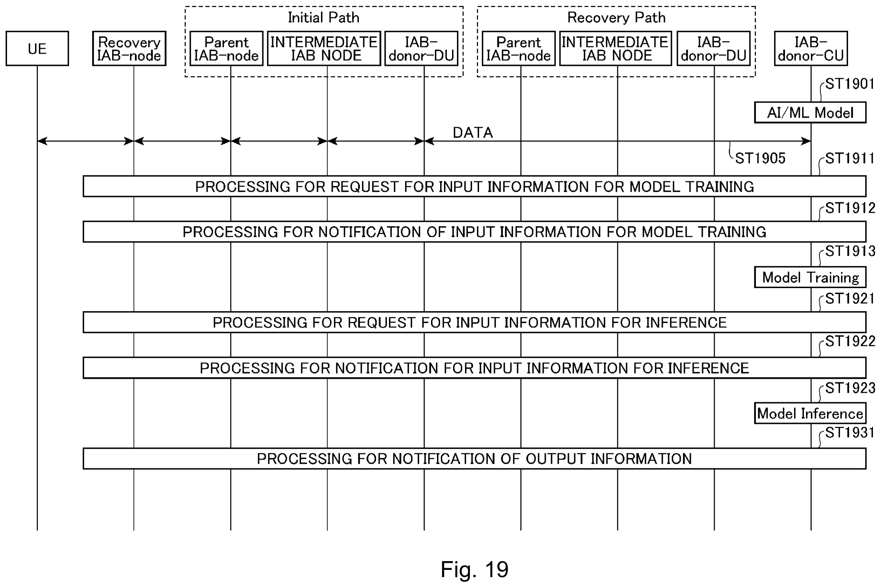

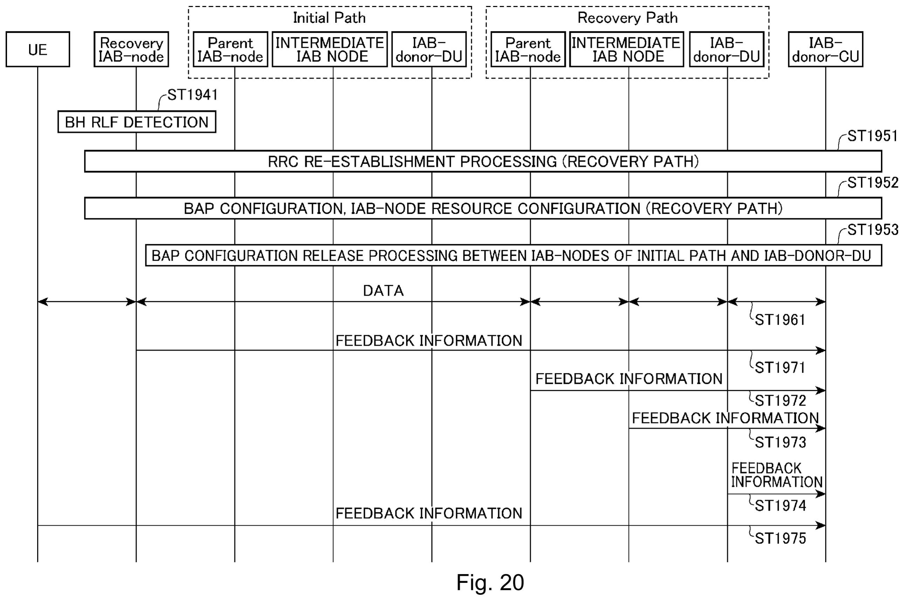

Fig. 19 and Fig. 20 are each a diagram illustrating a sequence example of BH RLF processing using AI/ML for BH RLF processing according to Alteration 1 of Embodiment 4. Fig. 19 illustrates the first half of the sequence example, and Fig. 20 illustrates the second half of the sequence example. Fig. 19 and Fig. 20 disclose an example where an IAB-donor-CU has an AI/ML model for BH RLF processing and performs training and inference.

In Step ST1901, an AI/ML model for BH RLF processing is provided in an IAB-donor-CU. In Step ST1905, data communication among a UE, a recovery IAB node, a parent IAB node, an intermediate IAB node and an IAB-donor-DU of an initial-path, and the IAB-donor-CU is performed.

In Step ST1911, the IAB-donor-CU having the AI/ML model for BH RLF processing transmits a request for input information for model training, to each IAB node and each IAB-donor-DU. The IAB nodes and the IAB-donor-DUs need not be limited to the initial path and the recovery path illustrated in the example in Fig. 19 and Fig. 20. The IAB nodes and the IAB-donor-DUs may be limited to those under the IAB-donor-CU.

The request may be performed in response to BH RLF processing. For example, the request may be performed in response to BH RLF processing based on BH RLF detection at any of the IAB nodes under the IAB-donor-CU. Information on BH RLF can be used as input information for model training. For example, as disclosed in Embodiment 4, the request may be performed in response to IAB processing by an IAB node. The request may be made in response to BAP configuration update processing, IAB node resource configuration update processing, or BH routing update processing, on the IAB node. Model training is enabled by input information in a state where a new IAB node is added or a state where a configuration is updated.

The request may include information indicating necessary information. The request may include information indicating usage of the input information for AI/ML model for BH RLF processing. For example, the request may include information indicating that the input information is for BH RLF processing. For example, the request may include information indicating that the input information is for model training. For example, this is effective when information for model training is provided to the input information for AI/ML model for BH RLF processing. For example, when information for model training, information for inference, and information for feedback are present in information held by the IAB node, the IAB node can quickly grasp information of which the IAB-donor-CU is to be notified, and consequently quick notification from the IAB node to the IAB-donor-CU is enabled.

For transmission of the request between the IAB-donor-CU and the IAB-donor-DU or the IAB node, F1 signaling may be used, for example. For transmission of the request between the IAB-donor-CU and the IAB node, RRC signaling may be used, for example. For example, a measurement configuration transmitted from the IAB-donor-CU to the IAB node may include a request for input information. A signaling amount can be reduced.

In Step ST1912, each IAB node and each IAB-donor-DU each transmit input information for model training to the IAB-donor-CU. The IAB node and the IAB-donor-DU may transmit input information for model training acquired from the connected UE, to the IAB-donor-CU. This enables the IAB-donor-CU to input information of the UE connected to the IAB node and the IAB-donor-DU, to the AI/ML model.

For transmission of the input information between the IAB-donor-DU or the IAB node and the IAB-donor-CU, F1 signaling may be used, for example. For transmission of the input information between the IAB node and the IAB-donor-CU, RRC signaling may be used, for example.

A measurement result by the IAB node may be transmitted to the IAB-donor-CU in a measurement result report. The measurement result may be a radio measurement result or an L2 measurement result. These measurement results may be transmitted in the same signaling or may be transmitted in different signalings. The measurement result by the IAB node can be used as the input information for model training.

In Step ST1913, the IAB-donor-CU uses the input information for AI/ML model for BH RLF processing held by the node itself and the input information for AI/ML model for BH RLF processing acquired from the IAB node and the IAB-donor-DU, to perform training of the AI/ML model for BH RLF processing. By the training, the AI/ML model for BH RLF processing is updated. These processing steps may be performed as appropriate. This may be performed periodically, may be performed even time BH RLF processing is performed, or may be performed every time IAB processing is performed. By IAB processing being performed periodically or being performed every time IAB processing is performed, similar effects as those disclosed in Embodiment 4 can be obtained. By being performed every time BH RLF processing is performed, input information in a state where a new path is configured or a state where a configuration of the IAB node of a path is updated can be input as appropriate, for example. More optimal model training of an AI/ML model for BH RLF processing can be performed.

In Step ST1921, the IAB-donor-CU transmits a request for input information for inference, to each IAB node and each IAB-donor-DU. The IAB nodes and the IAB-donor-DUs need not be limited to the initial path and the recovery path illustrated in the example in Fig. 19 and Fig. 20. The IAB donor-DUs and the IAB nodes may be limited to those under the IAB-donor-CU. The request may be performed in response to BH RLF processing. The request may be performed in response to IAB processing. By acquiring input information for inference by the request for input information for inference, the input information can be input to the AI/ML model for BH RLF processing, which can derive output information for BH RLF processing.

The request may include information indicating necessary information. The request may include information indicating usage of the input information for AI/ML model for BH RLF processing. For example, the request may include information indicating that the input information is for inference. For example, this is effective when information for inference is provided to the input information for AI/ML model for BH RLF processing.

In Step ST1922, each IAB node and each IAB-donor-DU each transmit input information for inference to the IAB-donor-CU. The IAB node and the IAB-donor-DU may transmit input information for inference acquired from the connected UE, to the IAB-donor-CU. This enables the IAB-donor-CU to input information of the UE connected to the IAB node and the IAB-donor-DU, to the AI/ML model.

Transmission of a request for input information for inference and transmission of input information for inference may be performed regularly. Output information can be updated regularly. Transmission of a request for input information for inference and transmission of input information for inference may be performed when a physical problem has been detected. Due to shift to BH RLF when the physical problem is not solved, communication is still possible at the stage of detection of the physical problem in some cases. As another method, transmission of a request for input information for inference and transmission of input information for inference may be performed when out-of-sync is detected a certain number of times. The certain number of times may be configured at a value smaller than a certain number of times required for detection of a physical problem. The certain numbers of times may be configured in advance. For example, the certain numbers of times may be configured statically in technical specifications or the like or may be transmitted by the IAB-donor-CU. By obtaining input information for inference at these stages, input information reflecting the state of BH RLF more can be obtained. More optimal output information can be obtained.

To a method of transmitting a request for input information for inference and input information for inference, a method of transmitting a request for input information for model training and input information for model training as disclosed in the above may be applied as appropriate.

In Step ST1923, the IAB-donor-CU uses the input information for AI/ML model for BH RLF processing held by the node itself and the input information for AI/ML model for BH RLF processing acquired from the IAB node and the IAB-donor-DU, to perform inference using the AI/ML model for BH RLF processing. The IAB-donor-CU derives output information for AI/ML model for BH RLF processing through the inference.

In Step ST1931, the IAB-donor-CU transmits output information for AI/ML model for BH RLF processing to each IAB-donor-DU and each IAB node. For example, the IAB-donor-CU transmits configuration information for cell selection processing or cell re-selection processing to each IAB-donor-DU and each IAB node. For example, the IAB-donor-CU transmits BAP configuration information and IAB node resource configuration information to each IAB node. The output information to be transmitted may be configuration information at the time of recovery due to BH RLF. In this way, the IAB node and the IAB-donor-DU used for BH RLF processing can acquire output information for AI/ML model for BH RLF processing. When the IAB node detects BH RLF, BH RLF processing can be performed between the IAB-donor-CU, each IAB-donor-DU, and each IAB node by using the output information.

To method of transmitting output information, a method of transmitting configuration information for BH RLF processing and a method of transmitting a request for input information for AI/ML model for BH RLF processing disclosed in the above may be applied as appropriate.

In Step ST1941, a recovery IAB node detects BH RLF.

In Step ST1951, the recovery IAB node performs cell selection processing to select a parent IAB node of a recovery path. The recovery IAB node performs RRC re-establishment processing with the IAB-donor-CU via the parent IAB node, the intermediate IAB node, and the IAB-donor-DU of the selected recovery path. Output information for AI/ML model for BH RLF processing may be used for these steps of processing. Through these steps, more effective selection of a parent node to be a recovery path is performed.

In Step ST1952, IAB processing is performed between the IAB-donor-CU and the parent IAB node, the intermediate IAB node, the IAB-donor-DU, and the recovery IAB node of the recovery path. For example, this corresponds to BAP configuration of each IAB node, resource configuration of each IAB node, and the like. A BH route from the recovery IAB node to the IAB-donor-CU is configured. Output information for AI/ML model for BH RLF processing may be used for these steps of processing. Through these steps, more effective configuration of a recovery path and an IAB node is performed.

In Step ST1953, BAP configuration release processing is performed between the IAB-donor-CU and the parent IAB node, the intermediate IAB node, and the IAB-donor-DU of the initial path. Release processing for resource configuration of an IAB node may be performed. Path configuration from the recovery IAB node may be released. By the release processing, configuration of the IAB node and the IAB-donor-DU of the initial path is released, which can attempt reduction of load.

The release processing in Step ST1953 may be limited to the path used by the recovery IAB node. Release processing need not be performed on the other IAB node. Alternatively, update processing may be performed on the other IAB node. For example, control of such a case that BH RLF is detected with one IAB node when an initial path is configured for a plurality of IAB nodes can be prevented from being complex.

In this way, the recovery IAB node can be connected to the IAB-donor-CU via the recovery path. In Step ST1961, data communication between the UE and the IAB-donor-CU is performed via the recovery IAB node, the parent IAB node, the intermediate IAB node, and the IAB-donor-DU of the recovery path.

In Step ST1971 to Step ST1975, the recovery IAB node, the parent IAB node, intermediate IAB node and IAB-donor-DU of the recovery path, and the UE each transmit feedback information for BH RLF processing using an AI/ML model for BH RLF processing to the IAB-donor-CU. The feedback information may include information identifying the IAB node itself, the IAB-donor-DU, and the UE. The IAB-donor-CU that has received the information can recognize the node that has transmitted the feedback information.

In this way, the IAB-donor-CU can acquire information on performance of BH RLF processing using an AI/ML model for BH RLF processing. The IAB-donor-CU may use the feedback information for BH RLF processing using an AI/ML model for BH RLF processing held by the node itself and the feedback information for BH RLF processing using an AI/ML model for BH RLF processing acquired from each of the recovery IAB node, the parent IAB node, the intermediate IAB node, and the IAB-donor-DU of the recovery path, and the UE to evaluate effects of BH RLF processing of a case of using an AI/ML model for BH RLF processing.

To a method of transmitting feedback information, a method of transmitting input information for AI/ML model for IAB processing disclosed in the above may be applied as appropriate. A method of transmitting feedback information from the UE to the IAB-donor-CU, RRC signaling may be used, for example.

A request for input information for AI/ML model for BH RLF processing and a request for feedback information need not be used. Each node may transmit input information for AI/ML model for BH RLF processing and feedback information to a node having an AI/ML model for BH RLF processing. For example, the node may transmit such information regularly. For example, when the node has obtained new input information or feedback information, the node may transmit input information and feedback information. Reduction of a signaling amount can be attempted. When the node having an AI/ML model for BH RLF processing has received the information from another node or the node itself, the node may transmit a request for input information to a node other than the node. Redundant signaling such as transmission of the same input information can be reduced.

In this way, by introducing AI/ML to BH RLF processing, more effective BH RLF processing is enabled.

Another IAB-donor-CU may have an AI/ML model for BH RLF processing. For example, the IAB-donor-CU of a PLMN supporting IAB may have an AI/ML model for BH RLF processing. One or some or all of input information, a request for the input information, output information, and feedback information may be transmitted to and received from the other IAB-donor-CU. For the transmission and reception, Xn signaling may be used.

In this way, for example, even when BH RLF processing based on a change of a connected IAB-donor-CU due to move of an IAB node is performed, input information and feedback information of another IAB-donor-CU, an IAB node under the IAB-donor-CU, an IAB-donor-DU, and the like can be input to an AI/ML model for BH RLF processing. By further acquiring pieces of information on a larger number of nodes and inputting the pieces of information to the AI/ML model for BH RLF processing, output information suitable for various states of the IAB node and the UE performing communication by using these can be derived. By performing BH RLF processing by using the output information, more effective BH RLF processing can be performed.

By using a method as those disclosed in the present alteration, training and inference in BH RLF processing can be performed by using an AI/ML model. By deriving output information of an AI/ML model by using various kinds of input information, BH RLF processing can be optimized. In BH RLF processing, more suitable selection of a parent IAB node, configuration of a BH route, and BAP configuration and resource configuration of an IAB node are enabled. Even if move of an IAB node and variations in radio wave propagation environment in the BH route occur, it is possible to reduce failure of RRC re-establishment processing due to BH RLF and occurrence of BF RLF again. This can reduce interruption of communication between a UE and an NW and hence improve performance of communication between the UE and the NW.

In Fig. 19 and Fig. 20, an example where an AI/ML model for BH RLF processing is provided to an IAB-donor-CU has been disclosed. As another method, an AI/ML model for BH RLF processing may be provided to an IAB node. A learning apparatus and an inference apparatus may be provided to an IAB node. This enables the IAB node to derive configuration information necessary for BH RLF processing by using the AI/ML model.

The IAB node having an AI/ML model for BH RLF processing may transmit a request for input information for AI/ML model for BH RLF processing and feedback information, to another IAB node, an IAB-donor-DU, and an IAB-donor-CU. The other IAB node, the IAB-donor-DU, and the IAB-donor-CU may transmit the input information for AI/ML model for BH RLF processing and the feedback information to an IAB node having an AI/ML model for BH RLF processing.

The IAB node that has performed inference by using the AI/ML model for BH RLF processing and derived configuration information necessary for BH RLF processing may transmit output information including the configuration information to the IAB-donor-CU. In this way, the IAB-donor-CU can perform configuration for the BH RLF processing, on the IAB node and the IAB-donor-DU by using the configuration information included in received output information.

As another method, an IAB node may transmit output information for AI/ML model for BH RLF processing to another IAB node, an IAB-donor-DU, and an IAB-donor-CU. In this way, each node can use the output information to perform IAB processing. For example, transmission of configuration information for IAB processing from the IAB-donor-CU to each node can be reduced.

An IAB node having an AI/ML model for BH RLF processing may perform, when having determined BH RLF processing, inference using the model, for example. For example, an IAB node may perform, when having detected BH RLF, inference using the model. As input information for the inference, input information for AI/ML model for BH RLF processing at the IAB node itself may be used. As input information for the inference, the IAB node may use the most recent input information for model training acquired from each of the other IAB node, the IAB-donor-DU, and the IAB-donor-CU. A larger variety of kinds of input information can be used for the inference.

The IAB node can derive configuration information for BH RLF processing when having detected BH RLF. In this way, input information closer to BH RLF processing timing can be used. More effective BH RLF processing can be performed.

For a node to which an AI/ML mode for BH RLF processing is provided, a method of providing the model to an IAB-donor-CU and a method of providing the model to an IAB node may be combined. More effective BH RLF processing can be performed.

Each AI/ML model, a learning apparatus for each AI/ML model, an inference apparatus using each AI/ML model disclosed in this specification may each be applied to a base station, may be applied to a UE, may be applied to a CN node, for example, an AMF, may be applied to an SMF, may be applied to a UPF, may be applied to an LMF, or may be applied to a network data analytics function (NWDAF). As another example, the above may be applied to a management service (MnS) or may be applied to an OAM. As the MnS, the above may be applied to a management system (MaS), for example. These may be applied to the same node or may be applied to different nodes. For example, a learning apparatus for AI/ML model is applied to an MnS node, a CN node, or an OAM to perform training needed in advance and requiring time, and an inference apparatus using an AI/ML model is applied to a RAN node, to thereby obtain output information necessary for performing dynamic communication processing. In this way, a communication system capable of performing communication processing with less delay can be provided.

Input information and feedback information for each AI ML model disclosed in this specification may be transmitted to each node provided with each AI/ML model, a learning apparatus for each AI/ML model, or an inference apparatus for each AI/ML model. In this way, generation and update of an AI/ML model is enabled in various nodes. Various kinds of communication processing more suitable for a state of a communication system can be performed, for example, by causing a node with less load to perform AI/ML.

Input information, output information, and feedback information for each AI/ML model disclosed in this specification may be applied to other uses as appropriate without being limited to the types of processing disclosed in the above. Input information, output information, and feedback information for each AI/ML model disclosed in this specification may be transmitted to a base station, may be transmitted to a UE, may be transmitted to a CN node, for example, an AMF, may be transmitted to an SMF, may be transmitted to a UPF, may be transmitted to an LMF, or may be transmitted to an NWDAF. As another example, the above may be transmitted to an MnS or may be transmitted to an OAM. As the MnS, the above may be transmitted to an MaS, for example. For example, these pieces of information may be transmitted to an application function (AF) via a network exposure function (NEF). By using these pieces of information, various kinds of processing can be performed.

Transmission and reception between a base station and a CN node (excluding an AMF) may be performed via an AMF. As another method, transmission and reception between a base station and a CN node (excluding an AMF) may be performed without involving an AMF. Not involving an AMF can reduce a signaling amount and can reduce load of the AMF.

In this specification, a node may be a function.
In the communication system according to the present disclosure, one or a plurality of cells may be configured in one gNB. In the present disclosure, although there is a description of the gNB or the cell, it may be the gNB or may be the cell, unless otherwise specifically noted.

In the present disclosure, the gNB may be the MCG or the SCG.

The embodiments and their alterations described above are merely illustrative, and the embodiments and their alterations can be freely combined. Any component in the embodiments and their alterations can be modified or omitted as appropriate.

For example, in the embodiments and their alterations described above, a slot is an example of a time unit of communication in the fifth generation communication system. The slot may be a scheduling unit. In the embodiments and their alterations described above, processing described to be performed in a slot unit may be performed in a TTI unit, a subframe unit, a sub-slot unit, or a mini-slot unit.

For example, the methods disclosed in the embodiments and their alterations described above may be applied to the IAB. They may be applied to communication between the IAB donor and the IAB node. They may be applied to processing using Uu in the IAB.

Reference Signs List

| | |
|---|---|
| 202 | Communication terminal apparatus (mobile terminal), |
| 210 | Communication system, |
| 213, 240-1, 240-2, 750 | Base station apparatus (NR base station, base station), |
| 214 | 5G core unit, |
| 215 | Central unit, |
| 216 | Distributed unit, |
| 217 | Control-plane central unit, |
| 218 | User-plane central unit, |
| 219 | TRP, |
| 301, 403 | Protocol processing unit, |
| 302 | Application unit, |
| 304, 405 | Encoder unit, |
| 305, 406 | Modulating unit, |
| 306, 407 | Frequency converting unit, |
| 307-1 to 307-4, 408-1 to 408-4 | Antenna, |
| 308, 409 | Demodulating unit, |
| 309, 410 | Decoder unit, |
| 310, 411, 526 | Control unit, |
| 401 | EPC communication unit, |

| | |
|---|---|
| 402 | Other base station communication unit, |
| 412 | 5GC communication unit, |
| 521 | Data network communication unit, |
| 522 | Base station communication unit, |
| 523 | User plane communication unit, |
| 523-1 | PDU processing unit, |
| 523-2 | Mobility anchoring unit, |
| 525 | Control plane control unit, |
| 525-1 | NAS security unit, |
| 525-2 | Idle state mobility management unit, |
| 527 | Session management unit, |
| 527-1 | PDU session control unit, |
| 527-2 | UE IP address assigning unit, |
| 751-1 to 751-8 | Beam, |
| 752 | Cell, |
| 1100 | Learning apparatus, |
| 1110, 1210 | Data acquisition unit, |
| 1120 | Model generation unit, |
| 1121 | Reward calculation unit, |
| 1122 | Function update unit, |
| 1130 | Learned model storage unit, |
| 1200 | Inference apparatus, |
| 1220 | Inference unit. |

**Claims**

1. A communication system comprising:

   a base station supporting a fifth generation radio access system; and
   a communication terminal configured to connect to the base station, wherein
   the base station is configured to, using a model on which training using pieces of information acquired from the communication terminal already connected to the base station and another neighboring base station has been performed, determine a configuration to be used in communication processing performed by the communication terminal, and notify the communication terminal connected to the base station of the determined configuration, and
   the communication terminal notified of the configuration by a first base station, which is the base station having determined the configuration, is configured to terminate connection to the first base station and thereafter use the configuration to perform communication processing for the first base station or communication processing for a second base station, which is a base station different from the first station.

2. The communication system according to claim 1, wherein

   the first base station is configured to, using the model, determine a configuration to be used in random access processing performed when the communication terminal establishes connection to the first base station or the second base station, and notify the communication terminal connected to the first base station of the determined configuration, and
   the communication terminal notified of the configuration by the first base station is configured to use the configuration to perform random access processing for reestablishing connection to the first base station after termination of connection to the first base station or random access processing for establishing connection to the second base station, which is the base station different from the first base station.

3. The communication system according to claim 1, wherein

   the first base station is configured to, using the model, determine a configuration to be used in data transmission processing performed when the communication terminal is in a situation of being not connected to a base station, and notify the communication terminal connected to the first base station of the determined configuration, and
   the communication terminal notified of the configuration by the first base station is configured to terminate connection to the first base station and thereafter use the configuration to perform data transmission processing to the first base station or the second base station in a state where the communication terminal is connected to neither the first base station nor the second base station.

4. A base station that operates as a donor of integrated access and backhaul in a communication system supporting a fifth generation radio access system, wherein
the base station is configured to, using a model on which training using pieces of information acquired from respective nodes of the integrated access and backhaul has been performed, determine a configuration of processing performed when the integrated access and backhaul is configured, and notify the nodes of the integrated access and backhaul of the determined configuration.

5. The base station according to claim 4, wherein

the base station includes a central unit and one or more distributed units, and
the central unit is configured to, using a model on which training using one or more pieces of information acquired from the one or more distributed units and pieces of information acquired from the respective nodes of the integrated access and backhaul has been performed, determine the configuration of the processing performed when the integrated access and backhaul is configured, and notify the one or more distributed units and the nodes of the integrated access and backhaul of the determined configuration.

6. A base station that operates as a donor of integrated access and backhaul in a communication system supporting a fifth generation radio access system, wherein
the base station is configured to, using a model on which training using pieces of information acquired from respective nodes of the integrated access and backhaul has been performed, determine a configuration to be used in processing of reestablishing connection between the nodes of the integrated access and backhaul, and notify the respective nodes of the integrated access and backhaul of the determined configuration.

7. The base station according to claim 6, wherein

the base station includes a central unit and one or more distributed units, and
the central unit is configured to, using a model on which training using one or more pieces of information acquired from the one or more distributed units and pieces of information acquired from the respective nodes of the integrated access and backhaul has been performed, determine a configuration to be used in processing of reestablishing connection between the one or more distributed units and the nodes of the integrated access and backhaul and the processing of reestablishing connection between the nodes of the integrated access and backhaul, and notify the one or more distributed units and the nodes of the integrated access and backhaul of the determined configuration.

8. A communication terminal configured to connect to a base station supporting a fifth generation radio access system, wherein
the communication terminal is configured to

using a model on which training using pieces of information acquired from a first base station, which is the base station already connected to the communication terminal, and a second base station different from the first base station has been performed, determine a configuration to be used in random access processing performed by the communication terminal to establish connection to a base station, and
using the determined configuration, perform random access processing for reestablishing connection to the first base station after terminating connection to the first base station or random access processing for establishing connection to a second base station, which is different from the first base station.

EP 4 723 718 A1

RADIO FRAME

SUBFRAME

| #0 | #1 | ... | #9 |

SCS=15kHz

SYMBOL

SLOT

SCS=30kHz

SYMBOL

SLOT

Fig. 1

Fig. 2

Fig. 3

202

FREQUENCY CONVERTING UNIT 306

307-1
307-2
307-3
307-4

MODULATING UNIT 305

DEMODULATING UNIT 308

ENCODER UNIT 304

DECODER UNIT 309

APPLICATION UNIT 302

PROTOCOL PROCESSING UNIT 301

CONTROL UNIT 310

Fig. 4

Fig. 5

214

```
526          522                523                    521
CONTROL     BASE STATION    USER PLANE              DATA
UNIT        COMMUNICATION   COMMUNICATION UNIT      NETWORK
            UNIT                                    COMMUNICATION
                            523-1                   UNIT
                            PDU PROCESSING
                            UNIT

                            523-2
                            MOBILITY
                            ANCHORING UNIT


                            527
                            SESSION
                            MANAGEMENT UNIT

                            527-1
                            PDU SESSION
                            CONTROL UNIT

                            527-2
                            UE IP ADDRESS
                            ASSIGNING UNIT


                            525
                            CONTROL PLANE
                            CONTROL UNIT

                            525-1
                            NAS
                            SECURITY UNIT

                            525-2
                            IDLE STATE
                            MOBILITY
                            MANAGEMENT UNIT
```

Fig. 6

START CELL SEARCH

ST601

SYNCHRONIZE USING P-SS
AND S-SS, AND DETECT PCI

ST602

RECEIVE PBCH,
RECEIVE MIB, AND
ACQUIRE SS BLOCK IDENTIFIER

ST603

MEASURE RECEIVED POWER

ST604

SELECT BEST CELL
AND SELECT BEST BEAM

ST605

RECEIVE DL-SCH
AND RECEIVE SIB1

ST606

IS TAC OF SIB1
SAME AS TAC STORED IN UE?

Yes

No

TO IDLE OPERATION

TO IDLE OPERATION
AFTER TAU

Fig. 7

Fig. 8

Fig. 9

EP 4 723 718 A1

Fig. 10

Fig. 11

Fig. 12

Fig. 13

Fig. 14

Fig. 15

Fig. 16

Fig. 17

Fig. 18

Fig. 19

Fig. 20

## INTERNATIONAL SEARCH REPORT

| International application No. |
| --- |
| **PCT/JP2024/018428** |

### A. CLASSIFICATION OF SUBJECT MATTER

*H04W 24/02*(2009.01)i; *H04W 40/24*(2009.01)i; *H04W 74/08*(2024.01)i; *H04W 92/20*(2009.01)i
FI:   H04W24/02; H04W40/24; H04W74/08; H04W92/20 110

According to International Patent Classification (IPC) or to both national classification and IPC

### B. FIELDS SEARCHED

Minimum documentation searched (classification system followed by classification symbols)

H04B7/24-7/26; H04W4/00-99/00; G06N20/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| Y | 3GPP TR37.817 V17.0.0. 06 April 2022, pp. 1-23<br>in particular, chapters [4 General Framework] to [5 Use Cases and Solutions for Artificial Intelligence in RAN] | 1-2, 8 |
| A | | 3-7 |
| Y | JP 2020-530221 A (TELEFONAKTIEBOLAGET LM ERICSSON (PUBL)) 15 October 2020 (2020-10-15)<br>paragraphs [0033], [0069]-[0071] | 1-2, 8 |
| Y | SAMSUNG. General aspects of AI ML framework and evaluation methodology. 3GPP TSG RAN WG1 #109-e R1-2203896. 29 Aptil 2022, pp. 1-11<br>in particular, section [2.1 Definition and characterization of AI/ML], chapter [3. UE-gNB collaboration levels] | 8 |

☑ Further documents are listed in the continuation of Box C.    ☑ See patent family annex.

| | |
| --- | --- |
| *   Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
| --- | --- |
| **02 July 2024** | **16 July 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT

| International application No. |
| --- |
| **PCT/JP2024/018428** |

### C. DOCUMENTS CONSIDERED TO BE RELEVANT

| Category* | Citation of document, with indication, where appropriate, of the relevant passages | Relevant to claim No. |
| --- | --- | --- |
| A | LENOVO. (TP for TS38.300 TS38.401) Discussion on general framework. 3GPP TSG RAN WG3 #117-e R3-224421. 09 August 2022, pp. 1-17<br>in particular, sections [x Support for network optimization using AI/ML], 8.x Overall procedures for network optimization using AI/ML] | 4-7 |

Form PCT/ISA/210 (second sheet) (July 2022)

**INTERNATIONAL SEARCH REPORT**
Information on patent family members

| | International application No. |
|---|---|
| | **PCT/JP2024/018428** |

| Patent document cited in search report | Publication date (day/month/year) | Patent family member(s) | Publication date (day/month/year) |
|---|---|---|---|
| JP 2020-530221 A | 15 October 2020 | US 2020/0221442 A1 paragraphs [0061], [0107]-[0113] WO 2019/032005 A1 CN 110999475 A | |